# EUROPEAN PATENT APPLICATION

(11) **EP 4 563 832 A1**
(43) Date of publication of application: **04.06.2025**
(21) Application number: 23870097.5
(22) Date of filing: 28.08.2023
(51) Int. Cl.: F16C 11/04

(54) **ROTATING MECHANISM AND FOLDABLE ELECTRONIC DEVICE**

(30) Priority: 29.09.2022 CN 202211202161
(71) Applicant: Honor Device Co., Ltd., Shenzhen, Guangdong 518040 (CN)
(72) Inventor: HUANG, Shengxian, Shenzhen, Guangdong 518040 (CN); DONG, Shaohong, Shenzhen, Guangdong 518040 (CN); CHEN, Ruihao, Shenzhen, Guangdong 518040 (CN); PENG, Gaofeng, Shenzhen, Guangdong 518040 (CN)
(74) Representative: Goddar, Heinz J.
(86) International application number: PCT/CN2023/115243
(87) International publication number: WO 2024/066854

(57) **Abstract**

This application provides a rotating mechanism and a foldable electronic device. The rotating mechanism includes a first fastening plate, a second fastening plate, a bearing base, a first synchronization swing arm, and a second synchronization swing arm. The first synchronization swing arm includes a first swing arm and a second swing arm, and the first swing arm is detachably connected to the second swing arm; the first swing arm includes a first swing body, a first connecting body, and a first screw that are sequentially connected in a width direction of the rotating mechanism; the first swing body is slidably and rotatably connected to the first fastening plate; the first screw is rotatably connected to the bearing base; the second swing arm includes a second swing body, a second connecting body, and a second screw that are sequentially connected in the width direction of the rotating mechanism; the second swing body is slidably and rotatably connected to the second fastening plate; and the second screw is rotatably connected to the bearing base. The first swing arm and the second swing arm are separated, so that machining difficulty is reduced, machining efficiency is improved, and costs are reduced.

## Description

This application claims priority to Chinese Patent Application No. 202211202161.X, filed with the China National Intellectual Property Administration on September 29, 2022 and entitled "ROTATING MECHANISM AND FOLDABLE ELECTRONIC DEVICE", which is incorporated herein by reference in its entirety.

### TECHNICAL FIELD

This application relates to the field of electronic product technologies, and in particular, to a rotating mechanism and a foldable electronic device.

### BACKGROUND

With the development of science and technology, various electronic devices have become indispensable products in daily life and production. Foldable electronic devices have gradually become a development trend due to advantages such as a large display area and portability. A current foldable electronic device mainly relies on a rotating mechanism to implement folding and unfolding functions. The rotating mechanism in the conventional technology implements synchronous movement during folding by using a structure with a plurality of gears.

However, the current rotating mechanism has a large quantity of components such as synchromesh gears, and is difficult to machine, resulting in low machining efficiency and high costs.

### SUMMARY

This application provides a rotating mechanism and a foldable electronic device, so that machining is simple, and costs are low.

A first aspect of this application provides a rotating mechanism, including: a first fastening plate, a second fastening plate, a bearing base, a first synchronization swing arm, and a second synchronization swing arm.

The first fastening plate and the second fastening plate are located on two opposite sides of the bearing base; the first synchronization swing arm and the second synchronization swing arm are respectively mounted on two opposite sides of the bearing base in a width direction and are rotatably connected to the bearing base; and the first synchronization swing arm is slidably and rotatably connected to the first fastening plate, and the second synchronization swing arm is slidably and rotatably connected to the second fastening plate.

The first synchronization swing arm includes a first swing arm and a second swing arm, and the first swing arm is detachably connected to the second swing arm; the first swing arm includes a first swing body, a first connecting body, and a first screw that are sequentially connected in a width direction of the rotating mechanism; the first swing body is slidably and rotatably connected to the first fastening plate; the first screw is rotatably connected to the bearing base; the second swing arm includes a second swing body, a second connecting body, and a second screw that are sequentially connected in the width direction of the rotating mechanism; the second swing body is slidably and rotatably connected to the second fastening plate; and the second screw is rotatably connected to the bearing base.

In this embodiment, the first swing arm and the second swing arm are detachably connected in an assembled state, and the first swing arm and the second swing arm are in a separated state when not being assembled. Therefore, the first swing arm and the second swing arm are independently machined. Dimensions of the first swing arm and the second swing arm in the length direction of the rotating mechanism are reduced in comparison with an integrated swing arm. Therefore, machining difficulty of the first swing arm and the second swing arm is reduced, machining efficiency is improved, and costs are reduced. In particular, after the first swing arm and the second swing arm are separated, machining can be performed by using a mold. Machining efficiency and machining precision are significantly improved in comparison with the conventional computer numerical control (computer numerical control, CNC) machining manner.

In some embodiments, the rotating mechanism further includes a first mounting shaft, and the first mounting shaft is fixedly connected to the bearing base. The first screw is provided with a first through hole and a first screw surface, and an axial direction of the first through hole is parallel to a length direction of the rotating mechanism; the first screw surface extends helically around the axial direction of the first through hole; the first mounting shaft passes through the first through hole; and the first screw is rotatable around the first mounting shaft.

In some embodiments, the rotating mechanism further includes a synchronization slider; the synchronization slider is slidably mounted on the bearing base; the synchronization slider is provided with a first fitting surface, and the first fitting surface is a screw surface; and the first screw surface abuts against the first fitting surface.

When the rotating mechanism is switched from the unfolded state to the folded state, the first fastening plate rotates counterclockwise, the first swing arm and the second swing arm slide and rotate counterclockwise relative to the first fastening plate, the first swing arm and the second swing arm rotate counterclockwise relative to the bearing base, and the first screw surface pushes the first fitting surface, so that the synchronization slider slides in the length direction (Y-axis negative direction) of the rotating mechanism. The second fastening plate rotates clockwise, the second synchronization swing arm slides and rotates relative to the second fastening plate, and the second synchronization swing arm synchronously moves with the first swing arm and the second swing arm under the action of the synchronization slider.

When the rotating mechanism is switched from the folded state to the unfolded state, the first fastening plate rotates clockwise, the first swing arm and the second swing arm slide and rotate clockwise relative to the first fastening plate, and the first swing arm and the second swing arm rotate clockwise relative to the bearing base, so that the synchronization slider slides in the length direction (Y-axis positive direction) of the rotating mechanism. The second fastening plate rotates counterclockwise, the second synchronization swing arm slides and rotates relative to the second fastening plate and rotates relative to the bearing base, and the second synchronization swing arm, the first swing arm, and the second swing arm synchronously move under the action of the synchronization slider.

In this application, the first synchronization swing arm includes two parts: the first swing arm and the second swing arm. The first synchronization swing arm performs a same synchronous function as an integrated swing arm through detachable connection between the first swing arm and the second swing arm. In addition, the first through hole provided on the first swing arm penetrates the first swing arm in the Y-axis direction, making it possible to machine the first swing arm by using a mold.

Specifically, when the first swing arm is machined, a raw material is placed in a lower die of the mold, and then the lower die is driven to snap onto an upper die, so that the upper die and the lower die cooperate to machine the first through hole and the first screw surface. Because the first through hole penetrates the first swing arm in the Y-axis direction, demolding can be performed in the Y-axis direction. Therefore, compared with a structure in which CNC needs to be used to machine an integrated synchronization swing arm, machining is easy, mold machining efficiency is high, precision is high, and costs are low.

In some embodiments, the first through hole is a circular hole, and an aperture of the first through hole in the length direction of the rotating mechanism remains unchanged. That is, a radian of a hole wall surface of the first through hole in the Y-axis direction is always uniform, and no local protrusion or local recess or the like occurs. Therefore, after machining of the first through hole is finished, demolding can be performed smoothly, thereby implementing the solution of machining the first swing arm by using a mold.

In some embodiments, the first swing body is in a shape of a thin plate, and the first screw is in a shape of a cylinder with an inclined notch (first screw opening). The first connecting body is approximately S-shaped, and the first connecting body is connected between the first swing body and the first screw, facilitating the first swing body to be connected to the first fastening plate, and facilitating the first screw to be connected to the bearing base. The first swing arm in this structure has a simple structure, and can be molded by using a mold. This reduces costs and improves machining efficiency.

In some embodiments, the first screw includes a first inner circumferential surface, a first outer circumferential surface, and a first end wall surface; the first inner circumferential surface is a hole wall surface of the first through hole, and the first outer circumferential surface is away from the first inner circumferential surface; the first end wall surface is connected between the first inner circumferential surface and the first outer circumferential surface, and the first through hole penetrates the first end wall surface; and two opposite sides of the first screw surface are respectively connected to the first inner circumferential surface and the first outer circumferential surface, and an end of the first screw surface is connected to the first end wall surface. The first inner circumferential surface, the first outer circumferential surface, the first end wall surface, the first through hole, and the first screw surface can be machined by using a mold. This reduces costs and improves machining efficiency.

In some embodiments, the synchronization slider includes a synchronization body and a first screw block that are fixedly connected, and the synchronization body is slidably mounted on the bearing base; the first screw block is provided with a first via hole and the first fitting surface; the first via hole penetrates the first screw block in the length direction of the rotating mechanism, the first via hole is coaxial with the first through hole, and the first mounting shaft further passes through the first via hole; the first fitting surface extends helically around an axial direction of the first via hole; and the first screw block is slidable along the first mounting shaft.

Specifically, the synchronization body includes a first synchronization surface and a second synchronization surface that are opposite in the Z-axis direction, and a first synchronization side surface and a second synchronization side surface that are opposite in the X-axis direction. The first synchronization side surface is connected between one side of the first synchronization surface and one side of the second synchronization surface, and the second synchronization side surface is connected between another side of the first synchronization surface and another side of the second synchronization surface. Both the first synchronization side surface and the second synchronization side surface are inclined arc surfaces. Both the first synchronization side surface and the second synchronization side surface are inclined relative to a central axis of the synchronization slider in the Z-axis direction, and incline directions of both the first synchronization side surface and the second synchronization side surface are away from the central axis of the synchronization slider 43 in the axial direction.

The first screw block is formed along the first synchronization side surface through protrusion, and the first screw block is cylindrical. The first via hole penetrates the first screw block in the Y-axis direction, so that the first screw block can be machined by using a mold. Specifically, a raw material is placed in a lower die of the mold, and then an upper die is driven to cooperate with the lower die to produce a desired structure on the raw material, so that the raw material becomes the first screw block. After the machining is completed, demolding can be performed in the Y-axis direction.

In the conventional structure, because a synchronization swing arm is integrally formed, a screw structure at a position at which the synchronization slider fits the synchronization swing arm is long, and the long screw structure is internally helical, and cannot be machined by using a mold, but can be machined through only CNC. The first via hole and the first fitting surface in this application can be machined by using a mold. Compared with CNC machining, costs are lower, and efficiency is higher.

In some embodiments, the first screw block is further provided with a second fitting surface, and the second fitting surface is a screw surface. The second fitting surface and the first fitting surface are located on two opposite sides of the first via hole, and the second fitting surface extends helically around the axial direction of the first via hole; the second swing arm is provided with a second through hole and a second screw surface, an axial direction of the second through hole is parallel to the length direction of the rotating mechanism, the second through hole is coaxial with the first through hole, the first mounting shaft further passes through the second through hole, and the second swing arm is rotatable around the first mounting shaft; the second screw surface extends helically around the axial direction of the second through hole; and the second screw surface abuts against the second fitting surface.

When the rotating mechanism is switched from the folded state to the unfolded state, the first fastening plate rotates clockwise, the first swing arm and the second swing arm rotate clockwise, and the second screw surface pushes the second fitting surface, so that the synchronization slider slides in the length direction (Y-axis positive direction) of the rotating mechanism. The second fastening plate rotates counterclockwise, the second synchronization swing arm slides and rotates relative to the second fastening plate and rotates relative to the bearing base, and the second synchronization swing arm, the first swing arm, and the second swing arm synchronously move under the action of the synchronization slider.

The second through hole provided on the second swing arm penetrates the second swing arm in the Y-axis direction, making it possible to machine the second swing arm by using a mold. Specifically, when the second swing arm is machined, a raw material is placed in a lower die of the mold, and then the lower die is driven to snap onto an upper die, so that the upper die and the lower die cooperate to machine the second through hole and the second screw surface. Because the second through hole penetrates the second swing arm in the Y-axis direction, demolding can be performed in the Y-axis direction. Therefore, compared with a structure in which CNC needs to be used to machine an integrated synchronization swing arm, machining is easy, mold machining efficiency is high, precision is high, and costs are low.

In some embodiments, the first screw block is further provided with a first connecting surface, a second connecting surface, a first inner wall surface, and a first outer wall surface; the first inner wall surface and the first outer wall surface are opposite in the length direction of the rotating mechanism, and the first via hole penetrates the first connecting surface and the second connecting surface; a part of the first inner wall surface is a hole wall surface of the first via hole, and the first outer wall surface is away from the first inner wall surface; and an end of the first fitting surface is connected to the first connecting surface, and another end of the first fitting surface extends in a direction away from the first connecting surface and is connected to the synchronization body; and an end of the second fitting surface is connected to the second connecting surface, and another end of the second fitting surface extends in a direction away from the second connecting surface and is connected to the synchronization body. Therefore, the first connecting surface, the second connecting surface, the first inner wall surface, the first outer wall surface, the first fitting surface, the second fitting surface, and the first via hole can be machined by using a mold. This reduces costs and improves machining efficiency.

In some embodiments, a radian of the first inner wall surface in the length direction of the rotating mechanism is equal, that is, remains unchanged. This ensures that the first inner wall surface, in particular, the part of the first inner wall surface that forms the first via hole, can be machined by using a mold.

In some embodiments, the synchronization body is provided with a first demolding slot, and the first demolding slot penetrates the synchronization body in a thickness direction of the rotating mechanism; and a part of the second fitting surface is flush with a slot wall surface of the first demolding slot in the thickness direction of the rotating mechanism. Therefore, when the second fitting surface is machined, demolding can be performed in the Z-axis direction by using a position of the first demolding slot, thereby resolving a problem that demolding is difficult to achieve for the second fitting surface, so that the second fitting surface can be machined by using a mold.

In some embodiments, the bearing base is provided with a first mounting groove, a part of the first swing arm, a part of the second swing arm, the synchronization slider, and the first mounting shaft are all located in the first mounting groove, and two ends of the first mounting shaft are respectively fixedly connected to two opposite groove wall surfaces of the first mounting groove. Therefore, the structure of the rotating mechanism is relatively compact and a volume is relatively small, so that the rotating mechanism is thinner and lighter.

In some embodiments, the synchronization slider further includes a first connecting block, and the first connecting block is fixedly connected to the synchronization body and is located on a same side of the synchronization body as the first screw block; the first connecting block is provided with a first penetrating hole, the first penetrating hole is coaxial with the first through hole, and the first mounting shaft further passes through the first penetrating hole; the rotating mechanism further includes a first pre-compression member and a second pre-compression member; both the first pre-compression member and the second pre-compression member are sleeved on the first mounting shaft; the first pre-compression member is located between the first screw and a groove wall surface of the first mounting groove to provide a pre-tightening force for fitting of the first screw surface and the first fitting surface; and the second pre-compression member is located between the first screw and the first connecting block to provide a pre-tightening force for fitting of the second screw surface and the second fitting surface.

The first pre-compression member and the second pre-compression member are disc springs or waved springs. When the rotating mechanism is assembled, the first pre-compression member is slightly compressed, so that the first pre-compression member provides the pre-tightening force between the first screw surface and the first fitting surface. The second pre-compression member is slightly compressed, so that the second pre-compression member provides the pre-tightening force between the second screw surface and the second fitting surface.

Therefore, an abutment force is ensured between the first screw surface and the first fitting surface, to avoid a synchronization failure, and improve reliability of the synchronization assembly. An abutment force is ensured between the second screw surface and the second fitting surface, to avoid a synchronization failure, and improve reliability of the synchronization assembly.

In some embodiments, the rotating mechanism further includes a first adjustment member and a second adjustment member, both the first adjustment member and the second adjustment member are sleeved on the first mounting shaft, the first adjustment member is located between the groove wall surface of the first mounting groove and the first pre-compression member, and the second adjustment member is located between the first connecting block and the second pre-compression member.

A position of the first adjustment member in an axial direction of the first mounting shaft is adjustable to move the first adjustment member in a direction toward or away from the first pre-compression member; and when the first adjustment member moves toward the first pre-compression member, a force applied by the first adjustment member to the first pre-compression member increases, so that the pre-tightening force provided by the first pre-compression member increases; or when the first adjustment member moves away from the first pre-compression member, a force applied by the first adjustment member to the first pre-compression member decreases, so that the pre-tightening force provided by the first pre-compression member decreases.

A position of the second adjustment member in an axial direction of the first mounting shaft is adjustable to move the second adjustment member in a direction toward or away from the second pre-compression member; and when the second adjustment member moves toward the second pre-compression member, a force applied by the second adjustment member to the second pre-compression member increases, so that the pre-tightening force provided by the second pre-compression member increases; or when the second adjustment member moves away from the second pre-compression member, a force applied by the second adjustment member to the second pre-compression member decreases, so that the pre-tightening force provided by the second pre-compression member decreases.

The first adjustment member is a locknut, and the first adjustment member and the first mounting shaft fit in a threaded manner. The first adjustment member abuts against the first pre-compression member. When the first adjustment member is rotated in a first direction, the first adjustment member moves toward the first pre-compression member, so that a compression magnitude of the first pre-compression member increases, and the force applied by the first pre-compression member to the first screw of the first swing arm increases. Therefore, the pre-tightening force between the first screw surface and the first fitting surface increases.

The first adjustment member is rotated in a second direction, and the second direction is opposite to the first direction. For example, the first direction is counterclockwise and the second direction is clockwise; or the first direction is clockwise and the second direction is counterclockwise. In this case, the first adjustment member moves away from the first pre-compression member, so that a compression magnitude of the first pre-compression member decreases, and the force applied by the first pre-compression member to the first screw of the first swing arm increases. Therefore, the pre-tightening force between the first screw surface and the first fitting surface decreases.

The second adjustment member is a circlip. When a position of the second adjustment member on the first mounting shaft needs to be adjusted, the operator removes the second adjustment member from the first mounting shaft manually or with a tool. The second adjustment member is then mounted on the first mounting shaft manually or with a tool. In this case, the position of the second adjustment member in the axial direction of the first mounting shaft is changed. If the second adjustment member is closer to the second pre-compression member than before, that is, the second adjustment member is moved closer to the second pre-compression member than before, the second adjustment member increases the compression magnitude of the second pre-compression member. In this case, the force applied by the second pre-compression member to the second screw of the second swing arm increases. Therefore, the pre-tightening force between the second screw surface and the second fitting surface increases.

If the second adjustment member is farther away from the second pre-compression member than before, that is, the second adjustment member is moved away from the second pre-compression member than before, the second adjustment member decreases the compression magnitude of the second pre-compression member. In this case, the force applied by the second pre-compression member to the second screw of the second swing arm decreases. Therefore, the pre-tightening force between the second screw surface and the second fitting surface decreases.

The adjustment of the pre-tightening force is achieved by using the first adjustment member and the second adjustment member, so that the synchronization assembly performs the synchronization function better.

In some embodiments, the second through hole is a circular hole, and an aperture of the second through hole in the length direction of the rotating mechanism remains unchanged. That is, a radian of a hole wall surface of the second through hole in the Y-axis direction is always uniform, and no local protrusion or local recess or the like occurs. Therefore, after machining of the second through hole is finished, demolding can be performed smoothly, thereby implementing the solution of machining the second swing arm by using a mold.

In some embodiments, the second swing body is in a shape of a thin plate, and the second screw is in a shape of a cylinder with an inclined notch (second screw opening). The second connecting body is approximately S-shaped, and the second connecting body is connected between the second swing body and the second screw, facilitating the second swing body to be connected to the first fastening plate, and facilitating the second screw to be connected to the bearing base. The second swing arm in this structure has a simple structure, and can be molded by using a mold. This reduces costs and improves machining efficiency.

In some embodiments, the second screw includes a second inner circumferential surface, a second outer circumferential surface, and a second end wall surface; the second inner circumferential surface is a hole wall surface of the second through hole, and the second outer circumferential surface is away from the second inner circumferential surface; the second end wall surface is connected between the second inner circumferential surface and the second outer circumferential surface, and the second through hole penetrates the second end wall surface; and two opposite sides of the second screw surface are respectively connected to the second inner circumferential surface and the second outer circumferential surface, and an end of the second screw surface is connected to the second end wall surface. The second inner circumferential surface, the second outer circumferential surface, the second end wall surface, the second through hole, and the second screw surface can be machined by using a mold. This reduces costs and improves machining efficiency.

In some embodiments, one of the first swing arm and the second swing arm is provided with a clamping slot, the other of the first swing arm and the second swing arm is provided with a clamping block, and the clamping block is clamped in the clamping slot. The first swing arm and the second swing arm are detachably connected by using the clamping slot and the clamping block. A structure is simple, machining is convenient, and costs are low.

In some embodiments, one side of first swing arm is provided with an elastic buckle. The elastic buckle is the foregoing clamping block. One side of the second swing arm is provided with a slot. The slot is the foregoing clamping slot. The elastic buckle is clamped in the slot, to achieve a detachable connection between the first swing arm and the second swing arm.

In some embodiments, a side of the first swing arm is provided with a first clamping slot and a first clamping block that are alternately arranged; a side of the second swing arm is provided with a second clamping slot and a second clamping block that are alternately arranged; and the first clamping block is clamped in the second clamping slot, and the second clamping block is clamped in the first clamping slot. Therefore, the structure of the first synchronization swing arm is compact, and reliability of the connection between the first swing arm and the second swing arm is high.

In some embodiments, both the first clamping block and the first clamping slot are trapezoidal, a long bottom edge of the first clamping block is aligned with an opening of the first clamping slot, and a short bottom edge of the first clamping block is aligned with a slot bottom surface of the first clamping slot; and both the second clamping block and the second clamping slot are trapezoidal, a long bottom edge of the second clamping block is aligned with an opening of the second clamping slot, and a short bottom edge of the second clamping block is aligned with a slot bottom surface of the second clamping slot. The first swing arm and the second swing arm are connected, so that the first clamping block is clamped in the second clamping slot and the second clamping block is clamped in the first clamping slot in the Z-axis direction. The first clamping slot, the second clamping slot, the first clamping block, and the second clamping block are all trapezoidal. When the first swing arm and the second swing arm move, there is no relative movement in the Z-axis direction, and during movement in the X-axis direction and the Y-axis direction, the first clamping block is securely connected to the second clamping slot and is not separated from the second clamping slot. Similarly, the second clamping block is securely connected to the first clamping slot without being separated from the first clamping slot. Therefore, a reliable connection between the first swing arm and the second swing arm can be ensured, costs can be reduced, and machining can be facilitated.

In some embodiments, the second synchronization swing arm includes a third swing arm and a fourth swing arm, and the third swing arm is detachably connected to the fourth swing arm. The third swing arm includes a third swing body, a third connecting body, and a third screw that are sequentially connected in the width direction of the rotating mechanism; the third swing body is slidably and rotatably connected to the second fastening plate; the third screw is rotatably connected to the bearing base; the fourth swing arm includes a fourth swing body, a fourth connecting body, and a fourth screw that are sequentially connected in the width direction of the rotating mechanism; the fourth swing body is slidably and rotatably connected to the second fastening plate; and the fourth screw is rotatably connected to the bearing base.

In the assembled state, the third swing arm and the fourth swing arm are detachably connected. When not assembled, the third swing arm and the fourth swing arm can be disassembled into a separated state, so that the third swing arm and the fourth swing arm can be separately machined. Dimensions of the third swing arm and the fourth swing arm in the length direction of the rotating mechanism are reduced in comparison with an integrated swing arm. Therefore, machining difficulty of the third swing arm and the fourth swing arm is reduced, machining efficiency is improved, and costs are reduced. In particular, after the third swing arm and the fourth swing arm are separated, machining can be performed by using a mold. Machining efficiency and machining precision are significantly improved in comparison with the conventional CNC machining manner.

In some embodiments, the rotating mechanism further includes a second mounting shaft, and the second mounting shaft is fixedly connected to the bearing base; the third screw is provided with a third through hole and a third screw surface, and an axial direction of the third through hole is parallel to the length direction of the rotating mechanism; the third screw surface extends helically around the axial direction of the third through hole; the second mounting shaft passes through the third through hole; and the third screw is rotatable around the second mounting shaft.

In some embodiments, the rotating mechanism further includes a synchronization slider; the synchronization slider is slidably mounted on the bearing base; the synchronization slider is provided with a third fitting surface, and the third fitting surface is a screw surface; and the third screw surface abuts against the third fitting surface.

When the rotating mechanism is switched from the unfolded state to the folded state, the second fastening plate rotates clockwise, the third swing arm and the fourth swing arm rotate clockwise, and the third screw surface pushes the third fitting surface, so that the synchronization slider slides in the length direction (Y-axis negative direction) of the rotating mechanism. When the rotating mechanism is switched from the folded state to the unfolded state, the second fastening plate rotates counterclockwise, and the third swing arm and the fourth swing arm rotate counterclockwise, so that the synchronization slider slides in the length direction (Y-axis positive direction) of the rotating mechanism.

In this application, the second synchronization swing arm includes two parts: the third swing arm and the fourth swing arm. The second synchronization swing arm performs a same synchronous function as an integrated swing arm through detachable connection between the third swing arm and the fourth swing arm. In addition, the third through hole provided on the third swing arm penetrates the first swing arm in the Y-axis direction, making it possible to machine the third swing arm by using a mold.

Specifically, when the third swing arm is machined, a raw material is placed in a lower die of the mold, and then the lower die is driven to snap onto an upper die, so that the upper die and the lower die cooperate to machine the third through hole and the third screw surface. Because the third through hole penetrates the third swing arm in the Y-axis direction, demolding can be performed in the Y-axis direction. Therefore, compared with a structure in which CNC needs to be used to machine an integrated synchronization swing arm, machining is easy, mold machining efficiency is high, precision is high, and costs are low.

In some embodiments, the third through hole is a circular hole, and an aperture of the third through hole in the length direction of the rotating mechanism remains unchanged. That is, a radian of a hole wall surface of the third through hole in the Y-axis direction is always uniform, and no local protrusion or local recess or the like occurs. Therefore, after machining of the third through hole is finished, demolding can be performed smoothly, thereby implementing the solution of machining the third swing arm by using a mold.

In some embodiments, the third swing body is in a shape of a thin plate, and the third screw is in a shape of a cylinder with an inclined notch (third screw opening). The third connecting body is approximately S-shaped, and the third connecting body is connected between the third swing body and the third screw, facilitating the third swing body to be connected to the second fastening plate, and facilitating the third screw to be connected to the bearing base. The third swing arm in this structure has a simple structure, and can be molded by using a mold. This reduces costs and improves machining efficiency.

In some embodiments, the third screw includes a third inner circumferential surface, a third outer circumferential surface, and a third end wall surface; the third inner circumferential surface is a hole wall surface of the third through hole, and the third outer circumferential surface is away from the third inner circumferential surface; the third end wall surface is connected between the third inner circumferential surface and the third outer circumferential surface, and the third through hole penetrates the third end wall surface; and two opposite sides of the third screw surface are respectively connected to the third inner circumferential surface and the third outer circumferential surface, and an end of the third screw surface is connected to the third end wall surface. The third inner circumferential surface, the third outer circumferential surface, the third end wall surface, the third through hole, and the third screw surface can be machined by using a mold. This reduces costs and improves machining efficiency.

In some embodiments, the synchronization slider includes a synchronization body and a second screw block that are fixedly connected, and the synchronization body is slidably mounted on the bearing base; and the second screw block is provided with a second via hole and the third fitting surface; the second via hole penetrates the second screw block in the length direction of the rotating mechanism, the second via hole is coaxial with the second through hole, and the second mounting shaft further passes through the second via hole; the third fitting surface extends helically around an axial direction of the second via hole; and the second screw block is slidable along the second mounting shaft.

Specifically, the second screw block is formed along the second synchronization side surface through protrusion, and the second screw block is cylindrical. The second via hole penetrates the second screw block in the Y-axis direction, so that the second screw block can be machined by using a mold. Specifically, a raw material is placed in a lower die of the mold, and then an upper die is driven to cooperate with the lower die to produce a desired structure on the raw material, so that the raw material becomes the second screw block. After the machining is completed, demolding can be performed in the Y-axis direction.

In the conventional structure, because a synchronization swing arm is integrally formed, a screw structure at a position at which the synchronization slider fits the synchronization swing arm is long, and the long screw structure is internally helical, and cannot be machined by using a mold, but can be machined through only CNC. The second via hole and the third fitting surface in this application can be machined by using a mold. Compared with CNC machining, costs are lower, and efficiency is higher.

In some embodiments, the second screw block is further provided with a fourth fitting surface, and the fourth fitting surface is a screw surface. The fourth fitting surface and the third fitting surface are located on two opposite sides of the second via hole, the fourth fitting surface extends helically around an axial direction of the second via hole, the fourth swing arm is provided with a fourth through hole and a fourth screw surface, an axial direction of the fourth through hole is parallel to the length direction of the rotating mechanism, the fourth through hole is coaxial with the third through hole, the second mounting shaft further passes through the fourth through hole, and the fourth screw is rotatable around the second mounting shaft; the fourth screw surface extends helically around the axial direction of the fourth through hole; and the third screw surface abuts against the third fitting surface.

When the rotating mechanism is switched from the folded state to the unfolded state, the second fastening plate rotates counterclockwise, the third swing arm and the fourth swing arm rotate counterclockwise, and the fourth screw surface pushes the fourth fitting surface, so that the synchronization slider slides in the length direction (Y-axis positive direction) of the rotating mechanism.

The fourth through hole provided on the fourth swing arm penetrates the fourth swing arm in the Y-axis direction, making it possible to machine the fourth swing arm by using a mold. Specifically, when the fourth swing arm is machined, a raw material is placed in a lower die of the mold, and then the lower die is driven to snap onto an upper die, so that the upper die and the lower die cooperate to machine the fourth through hole and the fourth screw surface. Because the fourth through hole penetrates the fourth swing arm in the Y-axis direction, demolding can be performed in the Y-axis direction. Therefore, compared with a structure in which CNC needs to be used to machine an integrated synchronization swing arm, machining is easy, mold machining efficiency is high, precision is high, and costs are low.

In some embodiments, the second screw block is further provided with a third connecting surface, a fourth connecting surface, a second inner wall surface, and a second outer wall surface; the second inner wall surface and the second outer wall surface are opposite in the length direction of the rotating mechanism, and the second via hole penetrates the third connecting surface and the fourth connecting surface; a part of the second inner wall surface is a hole wall surface of the second via hole, and the second outer wall surface is away from the second inner wall surface; an end of the third fitting surface is connected to the third connecting surface, and another end of the third fitting surface extends in a direction away from the third connecting surface and is connected to the synchronization body; and an end of the fourth fitting surface is connected to the fourth connecting surface, and another end of the fourth fitting surface extends in a direction away from the fourth connecting surface and is connected to the synchronization body.

Therefore, the third connecting surface, the fourth connecting surface, the second inner wall surface, the second outer wall surface, the third fitting surface, the fourth fitting surface, and the second via hole can be machined by using a mold. This reduces costs and improves machining efficiency.

In some embodiments, a radian of the second inner wall surface in the length direction of the rotating mechanism remains unchanged. This ensures that the second inner wall surface, in particular, the part of the second inner wall surface that forms the second via hole, can be machined by using a mold.

In some embodiments, the synchronization body is provided with a second demolding slot, and the second demolding slot penetrates the synchronization body in a thickness direction of the rotating mechanism; and a part of the fourth fitting surface is flush with a slot wall surface of the second demolding slot in the thickness direction of the rotating mechanism. Therefore, when the fourth fitting surface is machined, demolding can be performed in the Z-axis direction by using a position of the second demolding slot, thereby resolving a problem that demolding is difficult to achieve for the fourth fitting surface, so that the fourth fitting surface can be machined by using a mold.

In some embodiments, the fourth through hole is a circular hole, and an aperture of the fourth through hole in the length direction of the rotating mechanism remains unchanged. That is, a radian of a hole wall surface of the fourth through hole in the Y-axis direction is always uniform, and no local protrusion or local recess or the like occurs. Therefore, after machining of the fourth through hole is finished, demolding can be performed smoothly, thereby implementing the solution of machining the fourth swing arm by using a mold.

In some embodiments, the fourth screw includes a fourth inner circumferential surface, a fourth outer circumferential surface, and a fourth end wall surface; the fourth inner circumferential surface is a hole wall surface of the fourth through hole, and the fourth outer circumferential surface is away from the fourth inner circumferential surface; the fourth end wall surface is connected between the fourth inner circumferential surface and the fourth outer circumferential surface, and the fourth through hole penetrates the fourth end wall surface; and two opposite sides of the fourth screw surface are respectively connected to the fourth inner circumferential surface and the fourth outer circumferential surface, and an end of the fourth screw surface is connected to the fourth end wall surface. The fourth inner circumferential surface, the fourth outer circumferential surface, the fourth end wall surface, the fourth through hole, and the fourth screw surface can be machined by using a mold. This reduces costs and improves machining efficiency.

In some embodiments, the bearing base is provided with a first mounting groove, a part of the third swing arm, a part of the fourth swing arm, the synchronization slider, and the second mounting shaft are all mounted in the first mounting groove, and two ends of the second mounting shaft are respectively fixedly connected to two groove wall surfaces of the first mounting groove. Therefore, the structure of the rotating mechanism is relatively compact and a volume is relatively small, so that the rotating mechanism is thinner and lighter.

In some embodiments, the synchronization slider further includes a second connecting block, and the second connecting block is fixedly connected to the synchronization body and is located on a same side of the synchronization body as the second screw block; the second connecting block is provided with a second penetrating hole, the second penetrating hole is coaxial with the third through hole, and the second mounting shaft further passes through the second penetrating hole; the rotating mechanism further includes a third pre-compression member and a fourth pre-compression member; both the third pre-compression member and the fourth pre-compression member are sleeved on the second mounting shaft; the third pre-compression member is located between the third screw and a groove wall surface of the first mounting groove to provide a pre-tightening force for fitting of the third screw surface and the third fitting surface; and the fourth pre-compression member is located between the third screw and the second connecting block to provide a pre-tightening force for fitting of the fourth screw surface and the fourth fitting surface.

The third pre-compression member and the fourth pre-compression member are disc springs or waved springs. When the rotating mechanism is assembled, the third pre-compression member is slightly compressed, so that the third pre-compression member provides the pre-tightening force between the third screw surface and the third fitting surface. The fourth pre-compression member is slightly compressed, so that the fourth pre-compression member provides the pre-tightening force between the fourth screw surface and the fourth fitting surface.

Therefore, an abutment force is ensured between the third screw surface and the third fitting surface, to avoid a synchronization failure, and improve reliability of the synchronization assembly. An abutment force is ensured between the fourth screw surface and the fourth fitting surface, to avoid a synchronization failure, and improve reliability of the synchronization assembly.

In some embodiments, the rotating mechanism further includes a third adjustment member and a fourth adjustment member, both the third adjustment member and the fourth adjustment member are sleeved on the second mounting shaft, the third adjustment member is located between the groove wall surface of the first mounting groove and the third pre-compression member, and the fourth adjustment member is located between the second connecting block and the fourth pre-compression member.

A position of the third adjustment member in an axial direction of the second mounting shaft is adjustable to move the third adjustment member in a direction toward or away from the third pre-compression member; and when the third adjustment member moves toward the third pre-compression member, a force applied by the third adjustment member to the third pre-compression member increases, so that the pre-tightening force provided by the third pre-compression member increases; or when the third adjustment member moves away from the third pre-compression member, a force applied by the third adjustment member to the third pre-compression member decreases, so that the pre-tightening force provided by the third pre-compression member decreases.

A position of the fourth adjustment member in an axial direction of the second mounting shaft is adjustable to move the fourth adjustment member in a direction toward or away from the fourth pre-compression member; and when the fourth adjustment member moves toward the fourth pre-compression member, a force applied by the fourth adjustment member to the fourth pre-compression member increases, so that the pre-tightening force provided by the fourth pre-compression member increases; or when the fourth adjustment member moves away from the fourth pre-compression member, a force applied by the fourth adjustment member to the fourth pre-compression member decreases, so that the pre-tightening force provided by the fourth pre-compression member decreases.

The third adjustment member is a locknut, and the third adjustment member and the second mounting shaft fit in a threaded manner. The third adjustment member abuts against the third pre-compression member. When the third adjustment member is rotated in a first direction, the third adjustment member moves toward the third pre-compression member, so that a compression magnitude of the third pre-compression member increases, and the force applied by the third pre-compression member to the third screw of the third swing arm increases. Therefore, the pre-tightening force between the third screw surface and the third fitting surface increases.

The third adjustment member is rotated in a second direction, and the second direction is opposite to the first direction. For example, the first direction is counterclockwise and the second direction is clockwise; or the first direction is clockwise and the second direction is counterclockwise. In this case, the third adjustment member moves away from the third pre-compression member, so that a compression magnitude of the third pre-compression member decreases, and the force applied by the third pre-compression member to the third screw of the third swing arm increases. Therefore, the pre-tightening force between the third screw surface and the third fitting surface decreases.

The fourth adjustment member is a circlip. When a position of the fourth adjustment member on the second mounting shaft needs to be adjusted, the operator removes the fourth adjustment member from the second mounting shaft manually or with a tool. The fourth adjustment member is then mounted on the second mounting shaft manually or with a tool. In this case, the position of the fourth adjustment member in the axial direction of the second mounting shaft is changed. If the fourth adjustment member is closer to the fourth pre-compression member than before, that is, the fourth adjustment member is moved closer to the fourth pre-compression member than before, the fourth adjustment member increases the compression magnitude of the fourth pre-compression member. In this case, the force applied by the fourth pre-compression member to the fourth screw of the fourth swing arm increases. Therefore, the pre-tightening force between the fourth screw surface and the fourth fitting surface increases.

If the fourth adjustment member is farther away from the fourth pre-compression member than before, that is, the fourth adjustment member is moved away from the fourth pre-compression member than before, the fourth adjustment member decreases the compression magnitude of the fourth pre-compression member. In this case, the force applied by the fourth pre-compression member to the fourth screw of the fourth swing arm decreases. Therefore, the pre-tightening force between the fourth screw surface and the fourth fitting surface decreases.

The adjustment of the pre-tightening force is achieved by using the third adjustment member and the fourth adjustment member, so that the synchronization assembly performs the synchronization function better.

In some embodiments, the fourth through hole is a circular hole, and an aperture of the fourth through hole in the length direction of the rotating mechanism remains unchanged. That is, a radian of a hole wall surface of the fourth through hole in the Y-axis direction is always uniform, and no local protrusion or local recess or the like occurs. Therefore, after machining of the fourth through hole is finished, demolding can be performed smoothly, thereby implementing the solution of machining the fourth swing arm by using a mold.

In some embodiments, the fourth swing body is in a shape of a thin plate, and the fourth screw is in a shape of a cylinder with an inclined notch (fourth screw opening). The fourth connecting body is approximately S-shaped, and the fourth connecting body is connected between the fourth swing body and the fourth screw, facilitating the fourth swing body to be connected to the first fastening plate, and facilitating the fourth screw to be connected to the bearing base. The fourth swing arm in this structure has a simple structure, and can be molded by using a mold. This reduces costs and improves machining efficiency.

In some embodiments, the fourth screw includes a fourth inner circumferential surface, a fourth outer circumferential surface, and a fourth end wall surface; the fourth inner circumferential surface is a hole wall surface of the fourth through hole, and the fourth outer circumferential surface is away from the fourth inner circumferential surface; the fourth end wall surface is connected between the fourth inner circumferential surface and the fourth outer circumferential surface, and the fourth through hole penetrates the fourth end wall surface; and two opposite sides of the fourth screw surface are respectively connected to the fourth inner circumferential surface and the fourth outer circumferential surface, and two opposite ends of the fourth screw surface are respectively connected to the synchronization body and the fourth end wall surface. The fourth inner circumferential surface, the fourth outer circumferential surface, the fourth end wall surface, the fourth through hole, and the fourth screw surface can be machined by using a mold. This reduces costs and improves machining efficiency.

In some embodiments, one of the third swing arm and the fourth swing arm is provided with a clamping slot, the other of the third swing arm and the fourth swing arm is provided with a clamping block, and the clamping block is clamped in the clamping slot. The third swing arm and the fourth swing arm are detachably connected by using the clamping slot and the clamping block. A structure is simple, machining is convenient, and costs are low.

In some embodiments, one side of third swing arm is provided with an elastic buckle. The elastic buckle is the foregoing clamping block. One side of the fourth swing arm is provided with a slot. The slot is the foregoing clamping slot. The elastic buckle is clamped in the slot, to achieve a detachable connection between the third swing arm and the fourth swing arm.

In some embodiments, a side of the third swing arm is provided with a third clamping slot and a third clamping block that are alternately arranged; a side of the fourth swing arm is provided with a fourth clamping slot and a fourth clamping block that are alternately arranged; and the third clamping block is clamped in the fourth clamping slot, and the fourth clamping block is clamped in the third clamping slot. Therefore, the structure of the second synchronization swing arm is compact, and reliability of the connection between the third swing arm and the fourth swing arm is high.

In some embodiments, both the third clamping block and the third clamping slot are trapezoidal, a long bottom edge of the third clamping block is aligned with an opening of the third clamping slot, and a short bottom edge of the third clamping block is aligned with a slot bottom surface of the third clamping slot; and both the fourth clamping block and the fourth clamping slot are trapezoidal, a long bottom edge of the fourth clamping block is aligned with an opening of the fourth clamping slot, and a short bottom edge of the fourth clamping block is aligned with a slot bottom surface of the fourth clamping slot. The third swing arm and the fourth swing arm are connected, so that the third clamping block is clamped in the fourth clamping slot and the fourth clamping block is clamped in the third clamping slot in the Z-axis direction. The third clamping slot, the fourth clamping slot, the third clamping block, and the fourth clamping block are all trapezoidal. When the third swing arm and the fourth swing arm move, there is no relative movement in the Z-axis direction, and during movement in the X-axis direction and the Y-axis direction, the third clamping block is securely connected to the fourth clamping slot and is not separated from the fourth clamping slot. Similarly, the fourth clamping block is securely connected to the third clamping slot without being separated from the third clamping slot. Therefore, a reliable connection between the third swing arm and the fourth swing arm can be ensured, costs can be reduced, and machining can be facilitated.

In some embodiments, the rotating mechanism further includes a first connecting rod, a first damping swing arm, a first sliding member, a second sliding member, and a first elastic member; the first connecting rod is fixedly connected to the bearing base; a side of the first damping swing arm is slidably and rotatably connected to the first fastening plate, and another side of the first damping swing arm is rotatably connected to the first connecting rod; the first sliding member is slidably connected to the first connecting rod, and the second sliding member is slidably connected to the first connecting rod; the first elastic member is sleeved on the first connecting rod and is located between the first sliding member and the second sliding member; and when the first fastening plate rotates relative to the bearing base, the first damping swing arm slides and rotates relative to the first fastening plate and rotates around the first connecting rod; and the first damping swing arm pushes the first sliding member and the second sliding member to move close to or away from each other, so that the first sliding member and the second sliding member synchronously compress or release two ends of the first elastic member.

When the first sliding member and the second sliding member are close to each other, two ends of the first elastic member are simultaneously compressed, and the first elastic member can provide a double damping force for the first fastening plate compared to that in compression of a single end, so that the user can obtain a better damping hand feeling. When the first sliding member and the second sliding member move away from each other, two ends of the first elastic member are simultaneously released. Compared with releasing after only one end is compressed, a double damping force can be provided for the first fastening plate, so that the user can obtain a better damping hand feeling.

In some embodiments, the first damping swing arm includes a first rotating cylinder, a second rotating cylinder, a first concave-convex wheel, and a second concave-convex wheel; the first rotating cylinder and the second rotating cylinder are spaced apart along a length of the rotating mechanism; the first concave-convex wheel is fixedly connected to an end of the first rotating cylinder; the second concave-convex wheel is fixedly connected to an end of the second rotating cylinder; the first concave-convex wheel and the second concave-convex wheel are spaced and opposite; and both the first rotating cylinder and the second rotating cylinder are rotatably connected to the first connecting rod; the first sliding member includes a first slider and a first fitting wheel that are fixedly connected, and the second sliding member includes a second slider and a second fitting wheel that are fixedly connected; both the first slider and the second slider are slidably connected to the first connecting rod; the first concave-convex wheel is engaged with the first fitting wheel, and the second concave-convex wheel is engaged with the second fitting wheel; and the first elastic member abuts between the first slider and the second slider.

The first concave-convex wheel includes a plurality of first recesses and a plurality of first protrusions, and the plurality of first recesses and the plurality of first protrusions are alternately distributed. The second concave-convex wheel includes a plurality of second recesses and a plurality of second protrusions, and the plurality of second recesses and the plurality of second protrusions are alternately distributed. The first fitting wheel includes a plurality of first fitting recesses and a plurality of first fitting protrusions, and the plurality of first fitting recesses and the plurality of first fitting protrusions are alternately distributed. The second fitting wheel includes a plurality of second fitting recesses and a plurality of second fitting protrusions, and the plurality of second fitting recesses and the plurality of second fitting protrusions are alternately distributed.

With the rotating mechanism in the unfolded state, that is, the first protrusion is located in the first fitting recess and the first fitting protrusion is located in the first recess; and the second protrusion is located in the second fitting recess and the second fitting protrusion is located in the second recess. When the rotating mechanism is switched from the unfolded state to the folded state, the first protrusion is gradually moved out of the first fitting recess, the first fitting protrusion is gradually moved out of the first recess; and the second protrusion is gradually moved out of the second fitting recess, and the second fitting protrusion is gradually moved out of the second recess. When the rotating mechanism is in the folded state, the ends of the first protrusion of the first concave-convex wheel and the first fitting protrusion of the first fitting wheel abut. The second protrusion of the second concave-convex wheel abuts against an end of the second fitting protrusion of the second fitting wheel. As the protrusions are moved out of the recesses, the first sliding member and the second sliding member move close to each other. In this case, two ends of the first elastic member are synchronously compressed.

In some embodiments, the rotating mechanism further includes a first connecting shaft; the first damping swing arm further includes a first sliding cylinder and a second sliding cylinder, and the first sliding cylinder and the second sliding cylinder are spaced apart in the length direction of the rotating mechanism; the first fastening plate is provided with a first damping sliding groove and a second damping sliding groove, the first damping sliding groove and the second damping sliding groove are spaced apart in the length direction of the rotating mechanism, there is a first guide slider between the first damping sliding groove and the second damping sliding groove, the first guide slider is provided with a first guide sliding groove, and the first guide sliding groove communicates with the first damping sliding groove and the second damping sliding groove; the first guide slider is located in a spacing between the first sliding cylinder and the second sliding cylinder, the first sliding cylinder is located in the first damping sliding groove, and the second sliding cylinder is located in the damping sliding groove; and the first connecting shaft passes through the first sliding cylinder, the first guide sliding groove, and the second sliding cylinder, and the first connecting shaft is slidable and rotatable in the first guide sliding groove.

When the first fastening plate rotates relative to the bearing base, the first connecting shaft slides and rotates in the first guide sliding groove, thereby achieving sliding and rotation of the first damping swing arm. In addition, such a structure makes the structure of the rotating mechanism relatively compact.

In some embodiments, the rotating mechanism further includes a second connecting rod, a second damping swing arm, and a second elastic member; the second connecting rod is fixedly connected to the bearing base; a side of the second damping swing arm is slidably and rotatably connected to the second fastening plate, and another side of the second damping swing arm is rotatably connected to the second connecting rod; the first sliding member is slidably connected to the second connecting rod, and the second sliding member is slidably connected to the second connecting rod; and the second elastic member is sleeved on the second connecting rod and is located between the first sliding member and the second sliding member; when the second fastening plate rotates relative to the bearing base, the second damping swing arm slides and rotates relative to the second fastening plate and rotates around the second connecting rod; and the second damping swing arm pushes the first sliding member and the second sliding member to move close to or away from each other, so that the first sliding member and the second sliding member synchronously compress or release two ends of the second elastic member.

When the first sliding member and the second sliding member are close to each other, two ends of the second elastic member are simultaneously compressed, and the second elastic member can provide a double damping force for the second fastening plate compared to that in compression of a single end, so that the user can obtain a better damping hand feeling. When the first sliding member and the second sliding member move away from each other, two ends of the second elastic member are simultaneously released. Compared with releasing after only one end is compressed, a double damping force can be provided for the second fastening plate, so that the user can obtain a better damping hand feeling.

In some embodiments, the second damping swing arm includes a third rotating cylinder, a fourth rotating cylinder, a third concave-convex wheel, and a fourth concave-convex wheel; the third rotating cylinder and the fourth rotating cylinder are spaced apart along a length of the rotating mechanism; the third concave-convex wheel is fixedly connected to an end of the third rotating cylinder; the fourth concave-convex wheel is fixedly connected to an end of the fourth rotating cylinder; the third concave-convex wheel and the fourth concave-convex wheel are spaced and opposite; and both the third rotating cylinder and the fourth rotating cylinder are rotatably connected to the second connecting rod; the first sliding member further includes a third fitting wheel, and the third fitting wheel is fixedly connected to the first slider; the second sliding member further includes a fourth fitting wheel, and the fourth fitting wheel is fixedly connected to the second slider; both the first slider and the second slider are slidably connected to the second connecting rod; the third concave-convex wheel is engaged with the third fitting wheel, and the fourth concave-convex wheel is engaged with the fourth fitting wheel; and the second elastic member abuts between the first slider and the second slider.

The third concave-convex wheel includes a plurality of third recesses and a plurality of third protrusions, and the plurality of third recesses and the plurality of third protrusions are alternately distributed. The fourth concave-convex wheel includes a plurality of fourth recesses and a plurality of fourth protrusions, and the plurality of fourth recesses and the plurality of fourth protrusions are alternately distributed. The third fitting wheel includes a plurality of third fitting recesses and a plurality of third fitting protrusions, and the plurality of third fitting recesses and the plurality of third fitting protrusions are alternately distributed. The fourth fitting wheel includes a plurality of fourth fitting recesses and a plurality of fourth fitting protrusions, and the plurality of fourth fitting recesses and the plurality of fourth fitting protrusions are alternately distributed.

With the rotating mechanism in the unfolded state, that is, the third protrusion is located in the third fitting recess and the third fitting protrusion is located in the third recess; and the fourth protrusion is located in the fourth fitting recess and the fourth fitting protrusion is located in the fourth recess. When the rotating mechanism is switched from the unfolded state to the folded state, the third protrusion is gradually moved out of the third fitting recess, the third fitting protrusion is gradually moved out of the third recess; and the fourth protrusion is gradually moved out of the fourth fitting recess, and the fourth fitting protrusion is gradually moved out of the fourth recess. When the rotating mechanism is in the folded state, the ends of the third protrusion of the third concave-convex wheel and the third fitting protrusion of the third fitting wheel abut. The fourth protrusion of the fourth concave-convex wheel abuts against an end of the fourth fitting protrusion of the fourth fitting wheel. As the protrusions are moved out of the recesses, the first sliding member and the second sliding member move close to each other. In this case, two ends of the first elastic member are synchronously compressed.

In some embodiments, the rotating mechanism further includes a second connecting shaft; the second damping swing arm further includes a third sliding cylinder and a fourth sliding cylinder, and the third sliding cylinder and the fourth sliding cylinder are spaced apart in the length direction of the rotating mechanism; the second fastening plate is provided with a third damping sliding groove and a fourth damping sliding groove, the third damping sliding groove and the fourth damping sliding groove are spaced apart in the length direction of the rotating mechanism, there is a second guide slider between the third damping sliding groove and the fourth damping sliding groove, the second guide slider is provided with a second guide sliding groove, and the second guide sliding groove communicates with the third damping sliding groove and the fourth damping sliding groove; the second guide slider is located in a spacing between the third sliding cylinder and the fourth sliding cylinder, the third sliding cylinder is located in the third damping sliding groove, and the fourth sliding cylinder is located in the damping sliding groove; and the second connecting shaft passes through the third sliding cylinder, the second guide sliding groove, and the fourth sliding cylinder, and the second connecting shaft is slidable and rotatable in the second guide sliding groove.

When the second fastening plate rotates relative to the bearing base, the second connecting shaft slides and rotates in the second guide sliding groove, thereby achieving sliding and rotation of the second damping swing arm. In addition, such a structure makes the structure of the rotating mechanism relatively compact.

In some embodiments, the rotating mechanism further includes a third connecting rod and a third elastic member, the third connecting rod is located between the first connecting rod and the second connecting rod, and both the first sliding member and the second sliding member are slidably connected to the third connecting rod; and the third elastic member is sleeved on the third connecting rod, and two ends of the third elastic member respectively abut against the first sliding member and the second sliding member; and the two ends of the third elastic member are further synchronously compressed or released when the first sliding member and the second sliding member move close to or away from each other. The third elastic member can also provide a damping force for the first fastening plate and the second fastening plate, so that the user obtains a better damping hand feeling.

In some embodiments, the rotating mechanism further includes a fourth connecting rod and a fourth elastic member, the fourth connecting rod is located between the first connecting rod and the second connecting rod, and both the first sliding member and the second sliding member are slidably connected to the fourth connecting rod; and the fourth elastic member is sleeved on the fourth connecting rod, and two ends of the fourth elastic member respectively abut against the first sliding member and the second sliding member; and the two ends of the fourth elastic member are further synchronously compressed or released when the first sliding member and the second sliding member move close to or away from each other.

In some embodiments, the rotating mechanism further includes a first main swing arm and a second main swing arm; an end of the first main swing arm is slidably and rotatably connected to the bearing base, and another end of the first main swing arm is rotatably connected to the first fastening plate; and an end of the second main swing arm is slidably and rotatably connected to the bearing base, and another end of the second main swing arm is rotatably connected to the second fastening plate.

A second aspect of this application provides a foldable electronic device, including: a first housing, a second housing, a display, and the rotating mechanism according to any implementation of the first aspect of this application. The rotating mechanism is connected between the first housing and the second housing, the display is mounted on the first housing, the second housing, and the rotating mechanism, and when the rotating mechanism rotates, the first housing and the second housing rotate relative to each other, to drive the display to bend or unfold.

In conclusion, in this application, the first synchronization swing arm includes two parts: the first swing arm and the second swing arm. The first synchronization swing arm performs a same synchronous function as an integrated swing arm through detachable connection between the first swing arm and the second swing arm. The first swing arm and the second swing arm are detachably connected in an assembled state, and the first swing arm and the second swing arm are in a separated state when not being assembled. Therefore, the first swing arm and the second swing arm can be independently machined. Dimensions of the first swing arm and the second swing arm in the length direction of the rotating mechanism are reduced in comparison with an integrated swing arm. Therefore, machining difficulty of the first swing arm and the second swing arm is reduced, machining efficiency is improved, and costs are reduced. In particular, after the first swing arm and the second swing arm are separated, machining can be performed by using a mold. Machining efficiency and machining precision are significantly improved in comparison with the conventional CNC machining manner.

In addition, the first through hole provided on the first swing arm penetrates the first swing arm in the Y-axis direction, making it possible to machine the first swing arm by using a mold. Specifically, when the first swing arm is machined, a raw material is placed in a lower die of the mold, and then the lower die is driven to snap onto an upper die, so that the upper die and the lower die cooperate to machine the first through hole and the first screw surface. Because the first through hole penetrates the first swing arm in the Y-axis direction, demolding can be performed in the Y-axis direction. Therefore, compared with a structure in which CNC needs to be used to machine an integrated synchronization swing arm, machining is easy, mold machining efficiency is high, precision is high, and costs are low.

### BRIEF DESCRIPTION OF DRAWINGS

To describe technical solutions in embodiments of this application or the background more clearly, the following describes accompanying drawings used in embodiments of this application or the background.
FIG. 1 is a diagram of a structure of a foldable electronic device in a first state according to an embodiment of this application;
FIG. 2 is a diagram of a structure of a foldable electronic device in a second state according to an embodiment of this application;
FIG. 3 is an exploded view of a structure of the foldable electronic device shown in FIG. 2;
FIG. 4 is a diagram of a structure of a rotating mechanism of the foldable electronic device shown in FIG. 3;
FIG. 5 is an exploded view of a structure of the rotating mechanism shown in FIG. 4;
FIG. 6 is a diagram of a structure of a fastening assembly of the rotating mechanism shown in FIG. 4;
FIG. 7 is a diagram of a structure of a bearing base of the rotating mechanism shown in FIG. 4;
FIG. 8 is a diagram of a structure of a swing arm assembly of the rotating mechanism shown in FIG. 4;
FIG. 9 is a diagram of a structure of a first main swing arm of the swing arm assembly shown in FIG. 8;
FIG. 10 is a diagram of a structure of a second main swing arm of the swing arm assembly shown in FIG. 8;
FIG. 11 is a diagram of a structure of a synchronization assembly of the rotating mechanism shown in FIG. 4;
FIG. 12 is a diagram of a separated structure of the synchronization assembly shown in FIG. 11;
FIG. 13 is a diagram of a structure of a first synchronization swing arm of the synchronization assembly shown in FIG. 12;
FIG. 14 is a diagram of a structure of a second synchronization swing arm of the synchronization assembly shown in FIG. 12;
FIG. 15 is a diagram of a structure of a synchronization slider of the synchronization assembly shown in FIG. 12;
FIG. 16 is a diagram of a structure of a damping assembly of the rotating mechanism shown in FIG. 4;
FIG. 17 is a diagram of a separated structure of the damping assembly shown in FIG. 16;
FIG. 18 is a diagram of a structure of a first damping swing arm of the damping assembly shown in FIG. 17;
FIG. 19 is a diagram of a structure of a second damping swing arm of the damping assembly shown in FIG. 17;
FIG. 20 is a diagram of a structure of a first sliding member of the damping assembly shown in FIG. 17;
FIG. 21 is a diagram of a structure of a second sliding member of the damping assembly shown in FIG. 17;
FIG. 22 is a structural diagram in which the rotating mechanism shown in FIG. 4 is switched from an unfolded state to a folded state;
FIG. 23 is a partial cross-sectional view of the rotating mechanism shown in FIG. 22;
FIG. 24 is a diagram of a structure of the rotating mechanism shown in FIG. 4 in a folded state; and
FIG. 25 is a partial cross-sectional view of the rotating mechanism shown in FIG. 23.

### DESCRIPTION OF EMBODIMENTS

The following describes embodiments of this application with reference to the accompanying drawings in embodiments of this application.

A rotating mechanism used in an existing foldable electronic device includes a large quantity of components such as synchromesh gears, has a complex structure, high assembly difficulty, and a large weight and volume, and greatly affects a lightening and thinning design of the electronic device. In a rotating mechanism and a foldable electronic device provided in embodiments of this application, a quantity of synchromesh gears is small, and a structure is simple, so that assembly difficulty is reduced, and a weight and a volume of the rotating mechanism are reduced. This facilitates a lightening and thinning design of the electronic device.

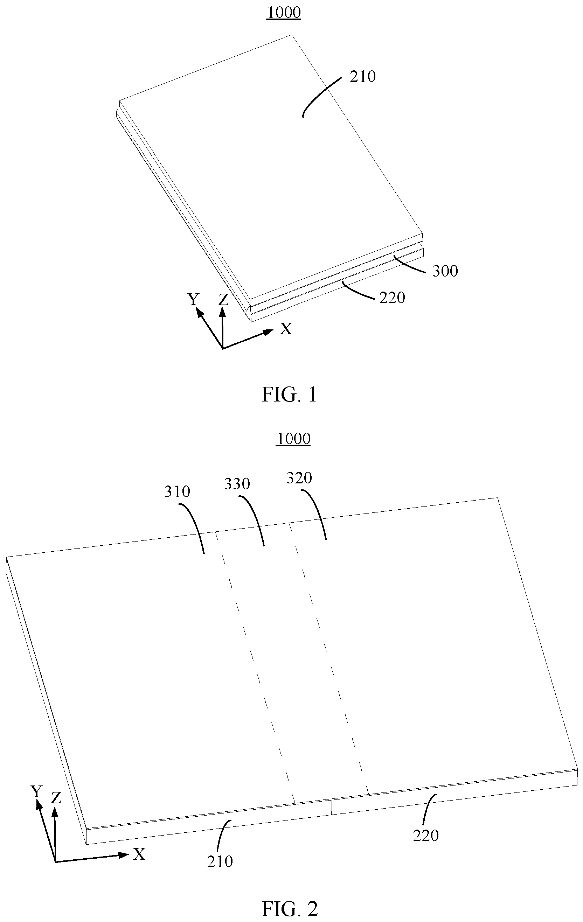

Refer to FIG. 1 and FIG. 2. FIG. 1 is a diagram of a structure of a foldable electronic device 1000 in a first state according to an embodiment of this application. FIG. 2 is a diagram of a structure of a foldable electronic device 1000 in a second state according to an embodiment of this application.

The foldable electronic device 1000 shown in FIG. 1 is in a folded state, and the foldable electronic device 1000 shown in FIG. 2 is in an unfolded state. An unfolding angle of the foldable electronic device 1000 shown in FIG. 2 is 180 degrees. The foldable electronic device 1000 includes but is not limited to a mobile phone (cellphone), a notebook computer (notebook computer), a tablet computer (tablet personal computer), a personal digital assistant (personal digital assistant), a wearable device (wearable device), a vehicle-mounted device (mobile device), or the like. In this embodiment of this application, an example in which the foldable electronic device 1000 is a mobile phone is used for description.

It should be noted that the angle illustrated in this embodiment of this application is allowed to have a slight deviation. For example, that the unfolding angle of the foldable electronic device 1000 shown in FIG. 2 is 180 degrees means that the unfolding angle may be 180 degrees, or may be approximately 180 degrees, for example, 170 degrees, 175 degrees, 185 degrees, or 190 degrees. Angles used as examples for description below can be understood identically.

For ease of description, a width direction of the foldable electronic device 1000 is defined as an X-axis direction, a length direction of the foldable electronic device 1000 is defined as a Y-axis direction, and a thickness direction of the foldable electronic device 1000 is defined as a Z-axis direction. Every two of the X-axis direction, the Y-axis direction, and the Z-axis direction are perpendicular to each other.

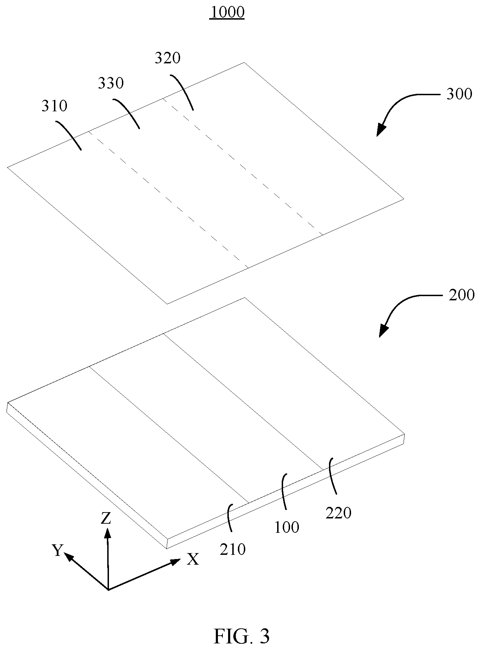

Refer to FIG. 3. FIG. 3 is an exploded view of a structure of the foldable electronic device shown in FIG. 2.

The foldable electronic device 1000 includes a main body 200 and a display 300, and the display 300 is mounted on the main body 200. The display 300 includes a display surface and a mounting surface, and the display surface and the mounting surface are disposed opposite to each other. The display surface is used to display a text, an image, a video, and the like. The display 300 includes a first display part 310, a second display part 320, and a third display part 330. The third display part 330 is located between the first display part 310 and the second display part 320, and the third display part 330 is flexible and can be bent in the X-axis direction. In this embodiment, the display 300 is a flexible display. The first display part 310 and the second display part 320 can also be bent actually when not being fastened.

In this embodiment, the display 300 is a flexible display, for example, an organic light-emitting diode (organic light-emitting diode, OLED) display, an active-matrix organic light-emitting diode (active-matrix organic light-emitting diode, AMOLED) display, a mini light-emitting diode (mini organic light-emitting diode) display, a micro light-emitting diode (micro organic light-emitting diode) display, a micro organic light-emitting diode (micro organic light-emitting diode) display, or a quantum dot light-emitting diode (quantum dot light-emitting diodes, QLED) display.

The main body 200 includes a first housing 210, a second housing 220, and a rotating mechanism 100. The first housing 210 is provided with a first accommodating groove (not shown in the figure), the second housing 220 is provided with a second accommodating groove (not shown in the figure), and the first accommodating groove and the second accommodating groove communicate to form an accommodating groove. The rotating mechanism 100 is mounted in the accommodating groove, and is fixedly connected to the first housing 210 and the second housing 220, to achieve a rotatable connection between the first housing 210 and the second housing 220. In addition, the first housing 210 and the second housing 220 can be rotated relative to each other by using the rotating mechanism 100, so that the main body 200 is switched between a folded state and an unfolded state.

A side that is of the first housing 210 and the second housing 220 and that faces away from the display 300 is an outer surface of the electronic device, and a side bearing the display 300 is an inner side. In practice, the inner side of the first housing 210 and the second housing 220 is provided with a bearing portion, the display is mounted on the bearing portion, and the bearing portion supports the flexible display 300.

The display 300 is mounted to the main body 200, and the mounting surface is fixedly connected to the main body 200. Specifically, the first housing 210 bears the first display part 310, and the second housing 220 bears the second display part 320. In other words, the first display part 310 is mounted on the first housing 210, and the second display part 320 is mounted on the second housing 220. The rotating mechanism 100 is disposed opposite to the third display part 330, to achieve bending of the display 300.

That the relative rotation of the first housing 210 and the second housing 220 enables the main body 200 to be in the folded state means that the first housing 210 and the second housing 220 are rotated by using the rotating mechanism 100 and approach each other, and surfaces that are of the first housing 210 and the second housing 220 and that bear the display 300 are opposite to each other. During application, when the main body 200 is in a completely folded state, after the display 300 mounted on the first housing 210 and the second housing 220 is folded, a display surface that is of the display 300 and that is located on the first display part 310 and a display surface that is of the display 300 and that is located on the second display part 320 are partially or completely in contact. The relative rotation of the first housing 210 and the second housing 220 enables the main body 200 to be unfolded (the first housing 210 and the second housing 220 may stay at any angle, for example, the first housing 210 and the second housing 220 form an included angle of 90 degrees or 120 degrees, that is, the display 300 is in a semi-unfolded state). The first housing 210 and the second housing 220 are rotated by using the rotating mechanism 100, and are kept away from each other, and the included angle between the first housing 210 and the second housing 220 is increasingly large, until the main body 200 is flattened due to the relative rotation of the first housing 210 and the second housing 220. The included angle between the first housing 210 and the second housing 220 may be approximately 180 degrees or equal to 180 degrees in the unfolded state. The first housing 210 and the second housing 220 are roughly in a flat state. In addition, the first housing 210 and the second housing 220 are kept away from each other, so that the display 300 is driven to be unfolded, until the foldable electronic device 1000 is in the unfolded state. The first housing 210 and the second housing 220 are kept away from each other, so that the display 300 is driven to be further unfolded, until the foldable electronic device 1000 is in the unfolded state.

The first housing 210, the second housing 220, and the rotating mechanism 100 are arranged in sequence in the X-axis direction, and a sum of dimensions of the first housing, the second housing, and the rotating mechanism is a dimension of the main body 200 in the X-axis direction (including assembly tolerances and assembly gaps between the first housing, the second housing, and the rotating mechanism). The dimension of the main body 200 in the X-axis direction is the same as dimensions of the display 300 and the electronic device in the X-axis direction. The "same" herein includes an allowed tolerance range. Dimensions of the first housing 210, the second housing 220, and the rotating mechanism 100 in the Y-axis direction are the same, and the same dimension may allow assembly or production tolerances. The dimensions of the first housing 210, the second housing 220, and the rotating mechanism 100 in the Y-axis direction are a dimension of the main body 200 in the Y-axis direction, and the dimension of the main body 200 in the Y-axis direction is the same as dimensions of the display 300 and the foldable electronic device 1000 in the Y-axis direction. Certainly, the "same" herein may also allow a small deviation (assembly and production tolerances).

Refer to FIG. 2 and FIG. 3. The first housing 210 and the second housing 220 are rotated relative to each other by using the rotating mechanism 100, and when the foldable electronic device 1000 is in the unfolded state, the display 300 has a large-area display region, so that a large-screen display and operation function of the foldable electronic device 1000 is implemented, and user experience is improved. Refer to FIG. 1. When the foldable electronic device 1000 is in the folded state, the display 300 is located between the first housing 210 and the second housing 220, and the first housing 210 and the second housing 220 protect the display surface of the display 300. This can greatly reduce a probability that the display 300 is damaged. In addition, an overall size is reduced, and carrying is convenient.

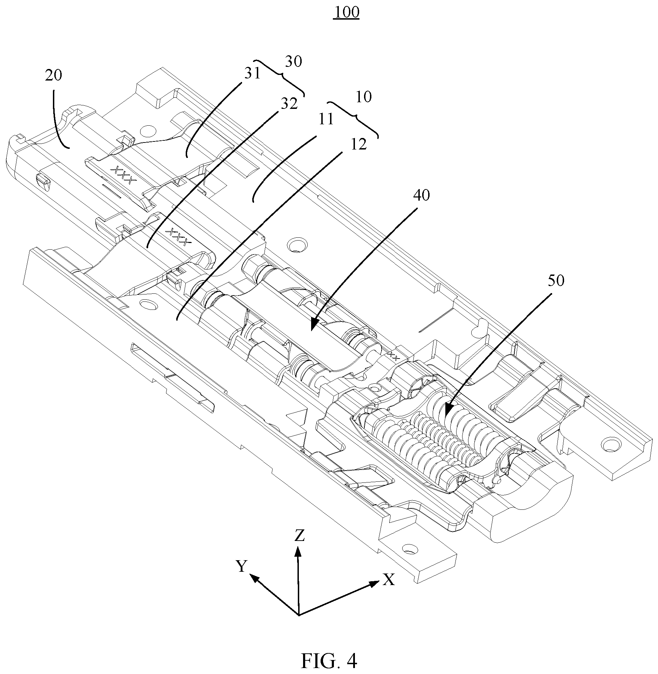

It should be noted that the orientation terms such as "top", "bottom", "left", "right", "front", and "back" used in embodiments of this application to describe the foldable electronic device 1000 are mainly explained based on display orientations of the foldable electronic device 1000 in FIG. 2 and FIG. 4, with "top" or "upper" facing a positive direction of the Z-axis, "bottom" or "lower" facing a negative direction of the Z-axis, "right" facing a positive direction of the X-axis, "left" facing a negative direction of the X-axis, "back" facing a positive direction of the Y-axis, and "front" facing a negative direction of the Y-axis. This does not limit the orientation of the foldable electronic device 1000 in an actual application scenario.

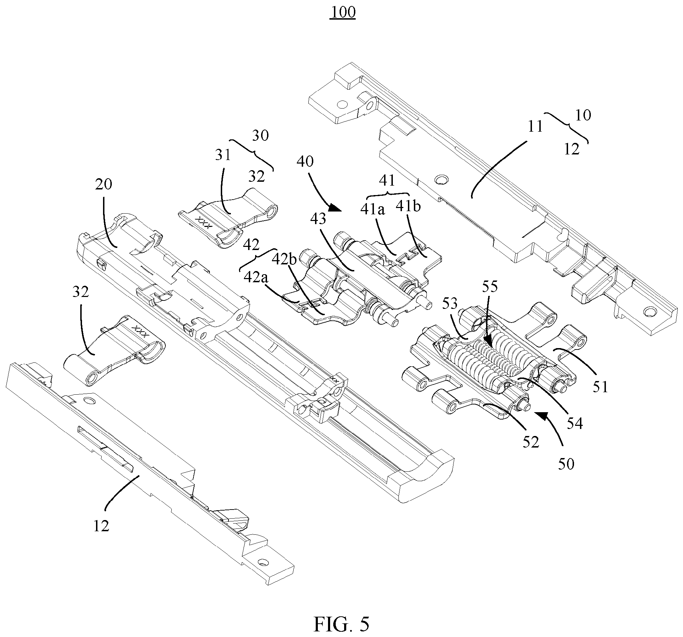

Refer to FIG. 4 and FIG. 5. FIG. 4 is a diagram of a structure of a rotating mechanism of the foldable electronic device shown in FIG. 3. FIG. 5 is an exploded view of a structure of the rotating mechanism shown in FIG. 4.

The rotating mechanism 100 includes a fastening assembly 10, a bearing base 20, a swing arm assembly 30, a synchronization assembly 40, and a damping assembly 50. The swing arm assembly 30, the synchronization assembly 40, and the damping assembly 50 are spaced in a Y-axis direction, one side of the swing arm assembly 30 is slidably and rotatably connected to the bearing base 20, and another side of the swing arm assembly 30 is rotatably connected to the fastening assembly 10. One side of the synchronization assembly 40 is rotatably connected to the bearing base 20, and another side of the synchronization assembly 40 is slidably and rotatably connected to the fastening assembly 10. One side of the damping assembly 50 is rotatably connected to the bearing base 20, and another side of the damping assembly 50 is slidably and rotatably connected to the fastening assembly 10.

The fastening assembly 10 is connected to the first housing 210 and the second housing 220. When the fastening assembly 10 rotates relative to the bearing base 20, the swing arm assembly 30 is driven to slide and rotate relative to the bearing base 20, and the synchronization assembly 40 and the damping assembly 50 are driven to rotate relative to the bearing base 20, so that rotation of the rotating mechanism 100 is achieved, to achieve bending of the display 300. The synchronization assembly 40 enables the fastening assembly 10 to rotate synchronously, so that the first housing 210 and the second housing 220 operate synchronously. The damping assembly 50 provides a damping force during rotation of the rotating mechanism 100.

It should be noted that FIG. 4 and FIG. 5 show only a partial structure of the rotating mechanism 100 in a positive direction of a Y axis. The fastening assembly 10, the swing arm assembly 30, the synchronization assembly 40, and the damping assembly 50 are a group of substructures. The entire rotating mechanism 100 has at least two groups of substructures described above. In other words, both a front side and a rear side of the bearing base 20 are provided with a group of substructures described above. In another embodiment, a group of substructures is added between two groups of substructures, and the added substructures are located in the middle of the bearing base 20, to enhance stability of the rotating mechanism 100. In another embodiment, one, four, or five groups of substructures described above may be disposed. A quantity of substructures may be adjusted based on an actual situation. In an implementation, fastening assemblies 10 in the two groups of substructures described above may be integrally formed, that is, synchronization assemblies 40, damping assemblies 50, and swing arm assemblies 30 in the two groups of substructures are all connected to a same fastening assembly 10.

In a group of substructures described above, the fastening assembly 10 is mounted in the accommodating groove formed through enclosure of the first accommodating groove of the first housing 210 and the second accommodating groove of the second housing 220. Specifically, a first fastening plate 11 is located in the first accommodating groove and is fixedly connected to a cavity wall surface of the first accommodating groove. A second fastening plate 12 is located in the second accommodating groove and is fixedly connected to a cavity wall surface of the second accommodating groove.

The fastening assembly 10 includes the first fastening plate 11 and the second fastening plate 12, and the first fastening plate 11 and the second fastening plate 12 are located on two opposite sides of the bearing base 20. The swing arm assembly 30 includes a first main swing arm 31 and a second main swing arm 32. The first fastening plate 11 is located on one side of the bearing base 20, and the second fastening plate 12 is located on another side of the bearing base 20. One side of the first main swing arm 31 is slidably and rotatably connected to the bearing base 20, and another side of the first main swing arm 31 is rotatably connected to the first fastening plate 11. One side of the second main swing arm 32 is slidably and rotatably connected to the bearing base 20, and another side of the second main swing arm 32 is rotatably connected to the second fastening plate 12.

The synchronization assembly 40 includes a first synchronization swing arm 41, a second synchronization swing arm 42, and a synchronization slider 43. The first synchronization swing arm 41 includes a first swing arm 41a and a second swing arm 41b, and the second synchronization swing arm 42 includes a third swing arm 42a and a fourth swing arm 42b.

One side of the first swing arm 41a and one side of the second swing arm 41b are slidably and rotatably connected to the bearing base 20, and another side of the first swing arm 41a and another side of the second swing arm 41b are rotatably connected to the first fastening plate 11. One side of the third swing arm 42a and one side of the fourth swing arm 42b are slidably and rotatably connected to the bearing base 20, and another side of the third swing arm 42a and another side of the fourth swing arm 42b are rotatably connected to the second fastening plate 12. The synchronization slider 43 is mounted on the bearing base 20, one side of the synchronization slider 43 is rotatably connected to the first swing arm 41a and the second swing arm 41b, and another side of the synchronization slider 43 is rotatably connected to the third swing arm 42a and the fourth swing arm 42b.

The damping assembly 50 includes a first damping swing arm 51, a second damping swing arm 52, a first sliding member 53, a second sliding member 54, and an elastic assembly 55. One side of the first damping swing arm 51 is rotatably connected to the bearing base 20, and another side of the first damping swing arm 51 is rotatably and slidably connected to the first fastening plate 11. One side of the second damping swing arm 52 is rotatably connected to the bearing base 20, and another side of the second damping swing arm 52 is rotatably and slidably connected to the second fastening plate 12. The first sliding member 53, the second sliding member 54, and the elastic assembly 55 are mounted on the bearing base 20.

During rotation of the foldable electronic device, the damping assembly 50 can provide a damping force, so that a user experiences a good damping hand feeling, and hovering of the foldable electronic device at a preset angle is achieved, thereby improving user experience. Herein, the "preset angle" is an included angle between the first housing 210 and the second housing 220, that is, an included angle between the first fastening plate 11 and the second fastening plate 12, when the foldable electronic device hovers. The preset angle ranges from 0° to 180°.

In this embodiment, when the first fastening plate 11 rotates relative to the bearing base 20, the first main swing arm 31 rotates relative to the first fastening plate 11, and the first main swing arm 31 slides and rotates relative to the bearing base 20. The first swing arm 41a and the second swing arm 41b slide and rotate relative to the first fastening plate 11, and the first swing arm 41a and the second swing arm 41b rotate relative to the bearing base 20. The first damping swing arm 51 slides and rotates relative to the first fastening plate 11, and the first damping swing arm 51 rotates relative to the bearing base 20. The second damping swing arm 52 slides and rotates relative to the second fastening plate 12, and the second damping swing arm 52 rotates relative to the bearing base 20. The first damping swing arm 51 and the second damping swing arm 52 enable the first sliding member 53 and the second sliding member 54 to move in the Y-axis direction to approach each other or move away from each other. When the first sliding member 53 and the second sliding member 54 approach each other, two ends of the elastic assembly 55 are synchronously compressed by the first sliding member 53 and the second sliding member 54; or when the first sliding member 53 and the second sliding member 54 move away from each other, two ends of the elastic assembly 55 are synchronously released by the first sliding member 53 and the second sliding member 54, so that the elastic assembly 55 provides a damping force for the first fastening plate 11. When the second fastening plate 12 rotates relative to the bearing base 20, the second main swing arm 32 rotates relative to the second fastening plate 12, and the second main swing arm 32 slides and rotates relative to the bearing base 20. The third swing arm 42a and the fourth swing arm 42b slide and rotate relative to the second fastening plate 12, and the third swing arm 42a and the fourth swing arm 42b rotate relative to the bearing base 20. The first sliding member 53 and the second sliding member 54 move in the Y-axis direction to approach each other or move away from each other. When the first sliding member 53 and the second sliding member 54 approach each other, two ends of the elastic assembly 55 are synchronously compressed by the first sliding member 53 and the second sliding member 54; or when the first sliding member 53 and the second sliding member 54 move away from each other, two ends of the elastic assembly 55 are synchronously released by the first sliding member 53 and the second sliding member 54, so that the elastic assembly 55 provides a damping force for the second fastening plate 12. The damping force enables the user to experience a good hand feeling, thereby improving user experience. The synchronization slider 43 ensures synchronicity of the first synchronization swing arm 41 and the second synchronization swing arm 42, to achieve synchronicity of rotation of the first fastening plate 11 and the second fastening plate 12, and then achieve synchronicity of rotation of the first housing and the second housing.

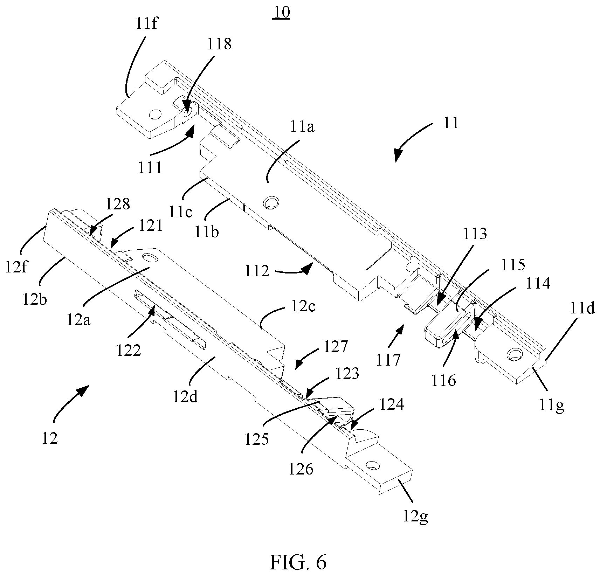

Refer to FIG. 6. FIG. 6 is a diagram of a structure of the fastening assembly 10 of the rotating mechanism 100 shown in FIG. 4.

The first fastening plate 11 has an elongated shape, and a length direction of the first fastening plate 11 is parallel to the Y-axis direction. The first fastening plate 11 includes a first top surface 11a, a first bottom surface 11b, a first side surface 11c, a second side surface 11d, a first end surface 11f, and a second end surface 11g, the first top surface 11a and the first bottom surface 11b are disposed opposite to each other in the Z-axis direction, the first side surface 11c and the second side surface 11d are disposed opposite to each other in the X-axis direction, and the first end surface 11f and the second end surface 11g are disposed opposite to each other in the Y-axis direction. The first side surface 11c, the second side surface 11d, the first end surface 11f, and the second end surface 11g are end-to-end connected in sequence, and the first side surface 11c, the second side surface 11d, the first end surface 11f, and the second end surface 11g each are connected between the first top surface 11a and the first bottom surface 11b.

The first fastening plate 11 is provided with a first rotating groove 111, a first synchronization sliding groove 112, a first damping sliding groove 113, a second damping sliding groove 114, and a first avoidance groove 117. The first rotating groove 111, the first synchronization sliding groove 112, the first damping sliding groove 113, and the second damping sliding groove 114 are distributed at intervals in the Y-axis direction. The first avoidance groove 117 is located on one side of the first damping sliding groove 113 and the second damping sliding groove 114 in the X-axis direction.

The first rotating groove 111 penetrates the first top surface 11a, the first bottom surface 11b, and the first side surface 11c, that is, the first rotating groove 111 penetrates the first fastening plate 11 in the Z-axis direction. Two groove side surfaces of the first rotating groove 111 are respectively provided with a first fastening hole 118 and a second fastening hole, axial directions of the first fastening hole 118 and the second fastening hole are both parallel to the Y-axis direction, and the first fastening hole 118 and the second fastening hole are coaxial. The first fastening hole 118 penetrates the first end surface 11f, to facilitate mounting of a shaft connected to the first main swing arm 31. The first rotating groove 111 is used to mount the first main swing arm 31, and the first fastening hole 118 and the second fastening hole are used to connect to the first main swing arm 31.

The first synchronization sliding groove 112 penetrates the first side surface 11c and the second side surface 11d, that is, the first synchronization sliding groove 112 penetrates the first fastening plate 11 in the X-axis direction. The first synchronization sliding groove 112 is used to mount the first swing arm 41a and the second swing arm 41b.

The first damping sliding groove 113 is formed by the first top surface 11a being recessed toward the first bottom surface 11b, and the first damping sliding groove 113 at least partially penetrates the first bottom surface 11b. The second damping sliding groove 114 is formed by the first top surface 11a being recessed toward the first bottom surface 11b, and the second damping sliding groove 114 at least partially penetrates the first bottom surface 11b. A first guide slider 115 is formed in a spacing between the first damping sliding groove 113 and the second damping sliding groove 114, the first guide slider 115 is provided with a first guide sliding groove 116 penetrating in the Y-axis direction, an extension direction of the first guide sliding groove 116 is parallel to the X-axis direction. The first guide sliding groove 116 communicates with the first damping sliding groove 113 and the second damping sliding groove 114. The first avoidance groove 117 penetrates the first top surface 11a, the first bottom surface 11b, and the first side surface 11c, the first avoidance groove 117 communicates with the first damping sliding groove 113, the second damping sliding groove 114, and the first guide sliding groove 116, a length of the first avoidance groove 117 in the Y-axis direction is greater than a sum of dimensions of the first damping sliding groove 113, the second damping sliding groove 114, and the first guide sliding groove 116. The first guide slider 115 at least partially extends into the first avoidance groove 117, so that the first guide sliding groove 116 and the first avoidance groove 117 communicate in the Y-axis direction. The first damping sliding groove 113 and the first avoidance groove 117 are sequentially distributed and communicate along the X-axis, and the second damping sliding groove 114 and the first avoidance groove 117 are sequentially distributed and communicate in the X-axis direction. The first damping sliding groove 113 and the second damping sliding groove 114 are used to mount the first damping swing arm 51, and the first guide sliding groove 116 is used to connect to the first damping swing arm 51. The first avoidance groove 117 facilitates connection to the first damping swing arm 51.

A structure of the second fastening plate 12 is similar to the structure of the first fastening plate 11. The second fastening plate 12 has an elongated shape, and a length direction of the second fastening plate 12 is parallel to the Y-axis direction. The second fastening plate 12 includes a second top surface 12a, a second bottom surface 12b, a third side surface 12c, a fourth side surface 12d, a third end surface 12f, and a fourth end surface 12g, the second top surface 12a and the second bottom surface 12b are disposed opposite to each other in the Z-axis direction, the third side surface 12c and the fourth side surface 12d are disposed opposite to each other in the X-axis direction, and the third end surface 12f and the fourth end surface 12g are disposed opposite to each other in the Y-axis direction. The third side surface 12c, the fourth side surface 12d, the third end surface 12f, and the fourth end surface 12g are end-to-end connected in sequence, and the third side surface 12c, the fourth side surface 12d, the third end surface 12f, and the fourth end surface 12g each are connected between the second top surface 12a and the second bottom surface 12b.

The second fastening plate 12 is provided with a second rotating groove 121, a second synchronization sliding groove 122, a third damping sliding groove 123, a fourth damping sliding groove 124, and a second avoidance groove 127.

The second rotating groove 121, the second synchronization sliding groove 122, the third damping sliding groove 123, and the fourth damping sliding groove 124 are distributed at intervals in the Y-axis direction. The second rotating groove 121 penetrates the second top surface 12a, the second bottom surface 12b, and the third side surface 12c, that is, the second rotating groove 121 penetrates the second fastening plate 12 in the Z-axis direction. Two groove side surfaces of the second rotating groove 121 are respectively provided with a third fastening hole 128 and a fourth fastening hole. Axial directions of the third fastening hole 128 and the fourth fastening hole are both parallel to the Y-axis direction, and the third fastening hole 128 and the fourth fastening hole are coaxial. The third fastening hole 128 penetrates the third end surface 12f, to facilitate mounting of a shaft connected to the second main swing arm 32. The second rotating groove 121 is used to mount the second main swing arm 32, and the third fastening hole 128 and the fourth fastening hole are used to connect to the second main swing arm 32.

The second synchronization sliding groove 122 penetrates the third side surface 12c and the fourth side surface 12d, that is, the second synchronization sliding groove 122 penetrates the second fastening plate 12 in the X-axis direction. The second synchronization sliding groove 122 is used to mount the third swing arm 42a and the fourth swing arm 42b.

The third damping sliding groove 123 is formed by the second top surface 12a being recessed toward the second bottom surface 12b, and the third damping sliding groove 123 at least partially penetrates the second bottom surface 12b. The fourth damping sliding groove 124 is formed by the second top surface 12a being recessed toward the second bottom surface 12b, and the fourth damping sliding groove 124 at least partially penetrates the second bottom surface 12b. A second guide slider 125 is formed in a spacing between the third damping sliding groove 123 and the fourth damping sliding groove 124, the second guide slider 125 is provided with a second guide sliding groove 126 penetrating in the Y-axis direction, an extension direction of the second guide sliding groove 126 is parallel to the X-axis direction. The second guide sliding groove 126 communicates with the third damping sliding groove 123 and the fourth damping sliding groove 124. The second avoidance groove 127 penetrates the second top surface 12a, the second bottom surface 12b, and the second side surface 11d, the second avoidance groove 127 communicates with the third damping sliding groove 123, the fourth damping sliding groove 124, and the second guide sliding groove 126, a length of the second avoidance groove 127 in the Y-axis direction is greater than a sum of dimensions of the third damping sliding groove 123, the fourth damping sliding groove 124, and the second guide sliding groove 126. The second guide slider 125 at least partially extends into the second avoidance groove 127, so that the second guide sliding groove 126 and the second avoidance groove 127 communicate in the Y-axis direction. The third damping sliding groove 123 and the second avoidance groove 127 are sequentially distributed and communicate along the X-axis, and the fourth damping sliding groove 124 and the second avoidance groove 127 are sequentially distributed and communicate in the X-axis direction. The third damping sliding groove 123 and the fourth damping sliding groove 124 are used to mount the third damping swing arm, and the second guide sliding groove 126 is used to connect to the third damping swing arm. The second avoidance groove 127 facilitates connection to the second damping swing arm 52.

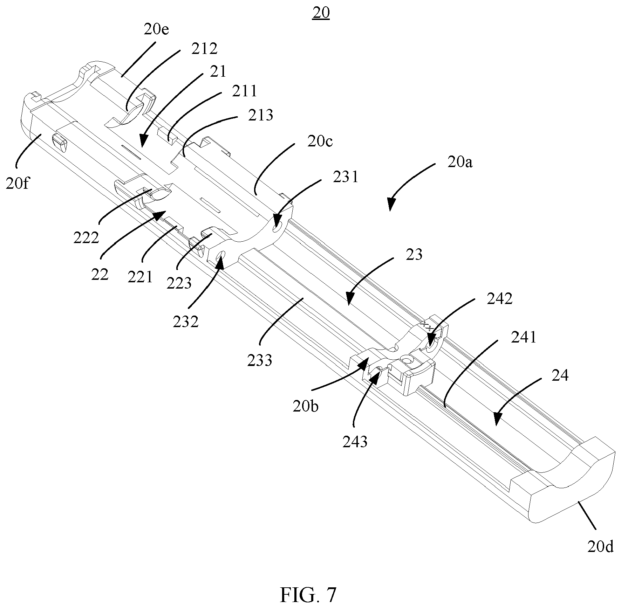

Refer to FIG. 7. FIG. 7 is a diagram of a structure of the bearing base 20 of the rotating mechanism 100 shown in FIG. 4.

The bearing base 20 has an elongated shape, and a length direction of the bearing base 20 is parallel to the Y-axis direction. The bearing base 20 may be of an integrally formed structure. A bearing body 20a and a plurality of mounting blocks 20b may also be included. The bearing body 20a is provided with a recessed groove, and an extension direction of the recessed groove is parallel to the Y-axis direction. The plurality of mounting blocks 20b are fastened within the recessed groove to form the bearing base 20.

The bearing base 20 includes a first-part base and a second-part base, and the first-part base and the second-part base are sequentially arranged in the Y-axis direction. The first-part base is located on a front side of the bearing base 20, and the second-part base is located on a rear side of the bearing base 20.

It should be noted that the first-part base and the second-part base may be mirror-symmetrical, to improve symmetry of the bearing base 20, simplify an overall structure of the bearing base 20, improve structural stability of the bearing base 20, and further reduce machining costs of the bearing base 20. For basic structures of various components in the second-part base, a connection relationship between the components, and a connection relationship between the components and components outside the assembly, refer to the related descriptions of the first-part base.

The first-part base and the second-part base each are connected to one group of substructures described above. In another embodiment, the first-part base and the second-part base each may alternatively be connected to two groups of substructures described above. Alternatively, the first-part base and the second-part base are jointly connected to three groups of substructures described above. This may be set by a person skilled in the art based on an actual requirement.

FIG. 7 is a diagram of a structure of the first-part base of the bearing base 20.

The first-part base of the bearing base 20 includes a bearing top surface 20c, a bearing bottom surface 20d, a first bearing side surface 20e, and a second bearing side surface 20f. The bearing top surface 20c and the bearing bottom surface 20d are opposite in the Z-axis direction, and the first bearing side surface 20e and the second bearing side surface 20f are opposite in the X-axis direction. The first bearing side surface 20e is connected between the bearing top surface 20c and one side of the bearing bottom surface 20d, and the second bearing side surface 20f is connected between the bearing top surface 20c and another side of the bearing bottom surface 20d.

The bearing base 20 is provided with a first main sliding groove 21, a second main sliding groove 22, a first mounting groove 23, and a second mounting groove 24 that are sequentially spaced in the Y-axis direction. The first main sliding groove 21 and the second main sliding groove 22 are opposite to each other in the X-axis direction and are arranged in a staggered manner in the Y-axis direction.

The first main sliding groove 21 is formed by the bearing top surface being recessed toward the bearing bottom surface 20d and penetrating the second bearing side surface 20f. At least a part of a groove bottom surface of the first main sliding groove 21 is arc-shaped, an extension direction of the arc-shaped part of the groove bottom surface of the first main sliding groove 21 is parallel to the X-axis direction, and an arc-shaped part of a groove bottom surface of the second main sliding groove 22 facilitates sliding of the first main swing arm 31 relative to the bearing base 20. The groove bottom surface of the first main sliding groove 21 is provided with a first stop block 211, and the first stop block 211 protrudes relative to the groove bottom surface of the first main sliding groove 21. Two opposite groove side surfaces of the first main sliding groove 21 in the X-axis direction are respectively provided with a first limiting block 212 and a second limiting block 213, and the first limiting block 212 protrudes relative to one groove side surface of the first main sliding groove 21. The first limiting block 212 is located in the first main sliding groove 21, and has an interval with the groove bottom surface of the first main sliding groove 21. The second limiting block 213 protrudes relative to the other groove side surface of the first main sliding groove 21. The second limiting block 213 is located in the first main sliding groove 21, and has an interval with the groove bottom surface of the first main sliding groove 21. The first main sliding groove 21 is used to mount the first main swing arm 31, and the first stop block 211, the first limiting block 212, and the second limiting block 213 are used to limit the first main swing arm 31, to prevent the first main swing arm 31 from being separated from the bearing base 20 when the first main swing arm 31 slides and rotates relative to the bearing base 20.

The second main sliding groove 22 is formed by the bearing top surface 20c being recessed toward the bearing bottom surface 20d and penetrating the first bearing side surface 20e. At least a part of the groove bottom surface of the second main sliding groove 22 is arc-shaped, and an extension direction of the arc-shaped part of the groove bottom surface of the second main sliding groove 22 is parallel to the X-axis direction. The arc-shaped part of the groove bottom surface of the second main sliding groove 22 facilitates sliding of the second main swing arm 32 relative to the bearing base 20. The groove bottom surface of the second main sliding groove 22 is provided with a second stop block 221, and the second stop block 221 protrudes relative to the groove bottom surface of the second main sliding groove 22. Two opposite groove side surfaces of the second main sliding groove 22 in the X-axis direction are respectively provided with a third limiting block 222 and a fourth limiting block 223, and the third limiting block 222 protrudes relative to one groove side surface of the second main sliding groove 22. The third limiting block 222 is located in the second main sliding groove 22, and has an interval with the groove bottom surface of the second main sliding groove 22. The fourth limiting block 223 protrudes relative to the other groove side surface of the second main sliding groove 22. The fourth limiting block 223 is located in the second main sliding groove 22, and has an interval with the groove bottom surface of the second main sliding groove 22. The second main sliding groove 22 is used to mount the second main swing arm 32, and the second stop block 221, the third limiting block 222, and the fourth limiting block 223 are used to limit the second main swing arm 32, to prevent the second main swing arm 32 from being separated from the bearing base 20 when the second main swing arm 32 slides and rotates relative to the bearing base 20.

The first mounting groove 23 is formed by the bearing top surface 20c being recessed toward the bearing bottom surface 20d and penetrating the first bearing side surface 20e and the second bearing side surface 20f. One groove side surface of the first mounting groove 23 is provided with a first mounting hole 231 and a third mounting hole 232, the other groove side surface of the first mounting groove 23 is provided with a second mounting hole and a fourth mounting hole, axial directions of the first mounting hole 231, the second mounting hole, the third mounting hole 232, and the fourth mounting hole are all parallel to the Y-axis direction. The first mounting hole 231 is coaxial with the second mounting hole, and the third mounting hole 232 is coaxial with the fourth mounting hole. A part of the groove side surface of the first mounting groove 23 is located on the bearing body 20a, and another part of the groove side surface of the first mounting groove 23 is located on a mounting block 20b fitting the bearing body 20a. The mounting block 20b is detachably connected to the bearing body 20a. The second mounting hole and the fourth mounting hole are jointly formed by the mounting block 20b and the bearing body 20a. The first mounting hole 231, the second mounting hole, the third mounting hole 232, and the fourth mounting hole are used to connect to the synchronization assembly 40.

A groove bottom surface of the first mounting groove 23 is provided with a guide bar 233. The guide bar 233 protrudes relative to the groove bottom surface of the first mounting groove 23, and a length direction of the guide bar 233 is parallel to the Y-axis direction. Two opposite ends of the guide bar 233 are respectively connected to two groove side surfaces of the first mounting groove 23 that are opposite in the X-axis direction. The first mounting groove 23 is used to mount the first synchronization swing arm 41, the second synchronization swing arm 42, and the synchronization slider 43, the first mounting hole 231 and the second mounting hole are used to connect the first synchronization swing arm 41 and the synchronization slider 43, and the third mounting hole 232 and the fourth mounting hole are used to connect the second synchronization swing arm 42 and the synchronization slider 43. The guide bar 233 is used to guide movement of the synchronization slider 43 in the Y-axis direction, to prevent the synchronization slider 43 for shaking when the synchronization slider 43 moves in the Y-axis direction, so that the movement of the synchronization slider 43 is more stable.

The second mounting groove 24 is formed by the bearing top surface 20c being recessed toward the bearing bottom surface 20d and penetrating the first bearing side surface 20e and the second bearing side surface 20f. One groove side surface of the second mounting groove 24 is provided with a first fastener hole 242 and a third fastener hole 243, the other groove side surface of the second mounting groove 24 is provided with a second fastener hole and a fourth fastener hole, axial directions of the first fastener hole 242, the second fastener hole, the third fastener hole 243, and the fourth fastener hole are all parallel to the Y-axis direction. The first fastener hole 242 is coaxial with the second fastener hole, and the third fastener hole 243 is coaxial with the fourth fastener hole. The first fastener hole 242 communicates with the first mounting hole 231, that is, the first fastener hole 242 and the first mounting hole 231 may be one via hole formed by the mounting block 20b and the bearing body 20a. The third fastener hole 243 communicates with the third mounting hole 232, that is, the third fastener hole 243 and the third mounting hole 232 may be one via hole formed by the mounting block 20b and the bearing body 20a. The first fastener hole 242, the second fastener hole, the third fastener hole 243, and the fourth fastener hole are used to connect to the damping assembly 50.

A groove bottom surface of the second mounting groove 24 is provided with a guide bar 241, the guide bar 241 protrudes relative to the groove bottom surface of the second mounting groove 24, and a length direction of the guide bar 241 is parallel to the Y-axis direction. Two opposite ends of the guide bar 241 are respectively connected to two groove side surfaces of the second mounting groove 24 that are opposite in the X-axis direction. The second mounting groove 24 is used to mount the damping assembly 50, that is, used to mount the first damping swing arm 51, the second damping swing arm 52, the first sliding member 53, the second sliding member 54, and the elastic assembly 55. The guide bar 241 is used to guide movement of the first sliding member 53 and the second sliding member 54 in the Y-axis direction, to prevent the first sliding member 53 and the second sliding member 54 from shaking when the first sliding member 53 and the second sliding member 54 move in the Y-axis direction, so that the movement of the first sliding member 53 and the second sliding member 54 is more stable.

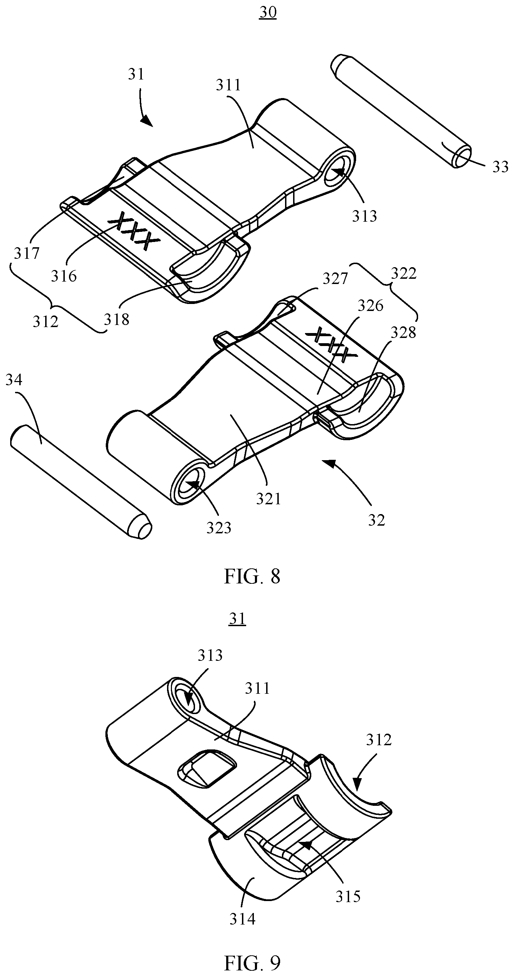

Refer to FIG. 8. FIG. 8 is a diagram of a structure of the swing arm assembly 30 of the rotating mechanism 100 shown in FIG. 4.

As already mentioned above, the swing arm assembly 30 includes the first main swing arm 31 and the second main swing arm 32. In this embodiment, the swing arm assembly 30 further includes a first fastening shaft 33 and a second fastening shaft 34.

With reference to FIG. 9 and FIG. 8, FIG. 9 is a diagram of a structure of the first main swing arm 31 of the swing arm assembly 30 shown in FIG. 8.

The first main swing arm 31 includes a first main rotating body 311 and a first main sliding body 312 arranged in the X-axis direction. In this embodiment, the first main sliding body 312 is fixedly connected to the first main rotating body 311.

The first main rotating body 311 is roughly of a rectangular thin-plate-like structure, the first main rotating body 311 is provided with a first perforation 313, an axial direction of the first perforation 313 is parallel to the Y-axis direction, and the first perforation 313 penetrates the first main rotating body 311 in the Y-axis direction. The first main rotating body 311 is used to fit the first fastening plate 11, and the first perforation 313 is used to connect to the first fastening plate 11.

The first main sliding body 312 has a first sliding surface 314, and the first sliding surface 314 is arc-shaped. The first sliding surface 314 is provided with a first stop groove 315, and the first stop groove 315 is formed by the first sliding surface 314 being recessed. One groove side surface of the first stop groove 315 is a first stop surface, an extension direction of the first stop surface is parallel to the Y-axis direction, and the first stop surface is used to fit the first stop block 211 in the first main sliding groove 21 of the bearing base 20, to prevent the first main swing arm 31 from being separated from the first main sliding groove 21. The first main sliding body 312 includes a first body 316, a first fitting block 317, and a second fitting block 318, and the first fitting block 317 and the second fitting block 318 are respectively fixedly connected to two sides of the first body 316 that are opposite in the Y-axis direction. The first fitting block 317 and the second fitting block 318 each have an arc-shaped block shape, and side surfaces that are of the first fitting block 317 and the second fitting block 318 and that face away from the first sliding surface 314 are recessed relative to the first body 316.

The first main sliding body 312 is used to fit the bearing base 20, and the arc-shaped first sliding surface 314 is used to fit the arc-shaped part of the groove bottom surface of the first main sliding groove 21, so that the first main swing arm 31 slides and rotates smoothly. The first stop groove 315 is used to fit the first stop block 211, the first fitting block 317 is used to fit the first limiting block 212, and the second fitting block 318 is used to fit the second limiting block 213, to prevent the first main sliding body 312 from being separated from the bearing base 20 when the first main swing arm 31 slides and rotates.

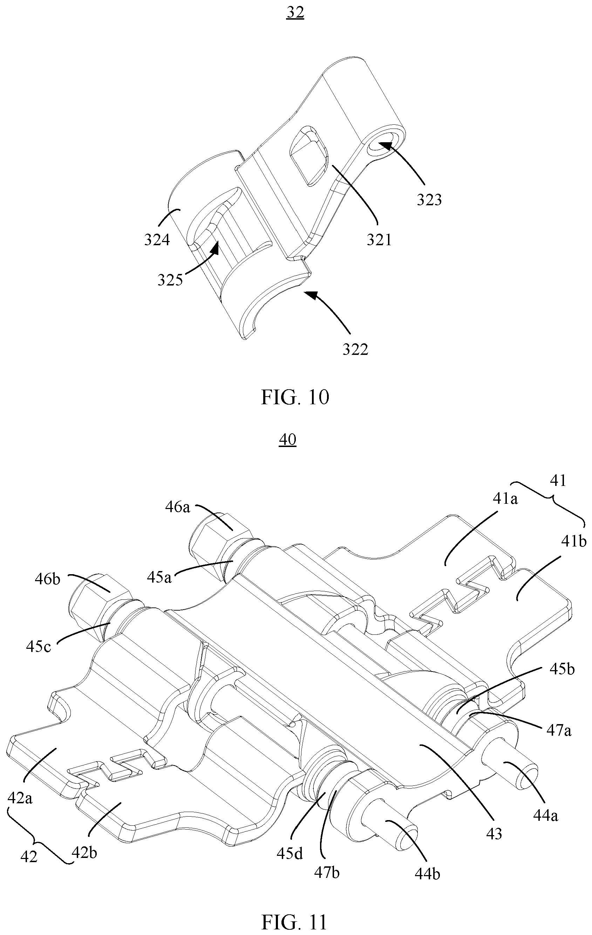

With reference to FIG. 10 and FIG. 8, FIG. 10 is a diagram of a structure of the second main swing arm 32 of the swing arm assembly 30 shown in FIG. 8.

The second main swing arm 32 has the same structure as the first main swing arm 31, and the second main swing arm 32 includes a second main rotating body 321 and a second main sliding body 322 arranged in the X-axis direction. In this embodiment, the second main sliding body 322 is fixedly connected to the second main rotating body 321.

The second main rotating body 321 is roughly of a rectangular thin-plate-like structure, the second main rotating body 321 is provided with a second perforation 323, an axial direction of the second perforation 323 is parallel to the Y-axis direction, and the second perforation 323 penetrates the second main rotating body 321 in the Y-axis direction. The second main rotating body 321 is used to fit the second fastening plate 12, and the second perforation 323 is used to connect to the second fastening plate 12.

The second main sliding body 322 has a second sliding surface 324, and the second sliding surface 324 is arc-shaped. The second sliding surface 324 is provided with a second stop groove 325, and the second stop groove 325 is formed by the second sliding surface 324 being recessed. One groove side surface of the second stop groove 325 is a second stop surface, an extension direction of the second stop surface is parallel to the Y-axis direction, and the second stop surface is used to fit the second stop block 221 in the second main sliding groove 22 of the bearing base 20, to prevent the second main swing arm 32 from being separated from the second main sliding groove 22. The second main sliding body 322 includes a second body 326, a third fitting block 327, and a fourth fitting block 328, and the third fitting block 327 and the fourth fitting block 328 are respectively fixedly connected to two sides of the second body 326 that are opposite in the Y-axis direction. The third fitting block 327 and the fourth fitting block 328 each have an arc-shaped block shape, and side surfaces that are of the third fitting block 327 and the fourth fitting block 328 and that face away from the second sliding surface 324 are recessed relative to the second body 326.

The second main sliding body 322 is used to fit the bearing base 20, and the arc-shaped second sliding surface 324 is used to fit the arc-shaped part of the groove bottom surface of the second main sliding groove 22, so that the second main swing arm 32 slides and rotates smoothly. The second stop groove 325 is used to fit the second stop block 221, the third fitting block 327 is used to fit the third limiting block 222, and the fourth fitting block 328 is used to fit the fourth limiting block 223, to prevent the second main sliding body 322 from being separated from the bearing base 20 when the second main swing arm 32 slides and rotates.

At least a part of the first fastening shaft 33 is located in the first perforation 313 of the first main rotating body 311, and two ends of the first fastening shaft 33 are respectively used to connect to the first fastening hole 118 and the second fastening hole, so that the first main swing arm 31 is rotatably connected to the first fastening plate 11. At least a part of the second fastening shaft 34 is located in the second perforation 323 of the second main rotating body 321, and two ends of the second fastening shaft 34 are respectively used to connect to the third fastening hole 128 and the fourth fastening hole, so that the second main swing arm 32 is rotatably connected to the second fastening plate 12.

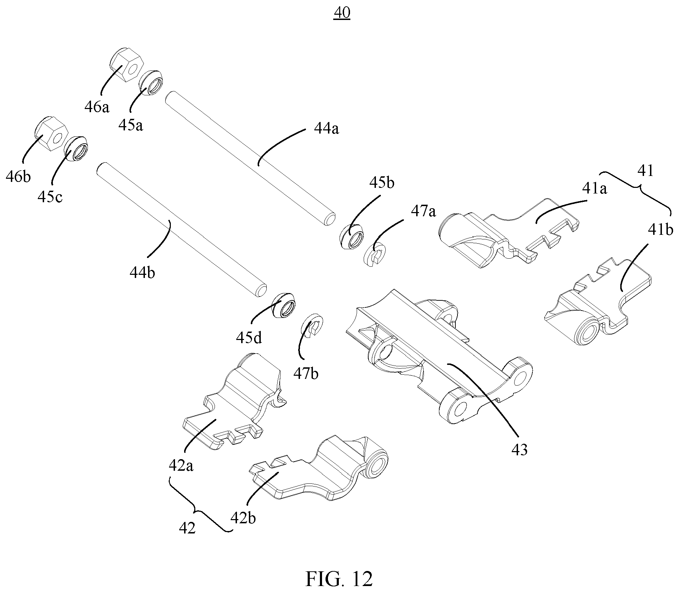

Refer to FIG. 11 and FIG. 12. FIG. 11 is a diagram of a structure of the synchronization assembly 40 of the rotating mechanism 100 shown in FIG. 4, and FIG. 12 is a diagram of a separated structure of the synchronization assembly 40 shown in FIG. 11.

As already mentioned above, the synchronization assembly 40 includes the first synchronization swing arm 41, the second synchronization swing arm 42, and the synchronization slider 43. The first synchronization swing arm 41 includes a first swing arm 41a and a second swing arm 41b, and the second synchronization swing arm 42 includes a third swing arm 42a and a fourth swing arm 42b.

In this embodiment, the synchronization assembly 40 further includes a first mounting shaft 44a, a second mounting shaft 44b, a first pre-compression member 45a, a second pre-compression member 45b, a third pre-compression member 45c, a fourth pre-compression member 45d, a first adjustment member 46a, a third adjustment member 46b, a second adjustment member 47a, and a fourth adjustment member 47b. The first pre-compression member 45a, the second pre-compression member 45b, the third pre-compression member 45c, and the fourth pre-compression member 45d each may be a disc spring or a waved spring.

The first adjustment member 46a, the third adjustment member 46b, the second adjustment member 47a, and the fourth adjustment member 47b each may be a nut or a circlip, or some of the first adjustment member 46a, the third adjustment member 46b, the second adjustment member 47a, and the fourth adjustment member 47b are nuts, and the others are circlips. For example, the first adjustment member 46a and the fourth adjustment member 47b are nuts, and the second adjustment member 47a and the third adjustment member 46b are circlips. In this embodiment, the first adjustment member 46a and the third adjustment member 46b are nuts, and the second adjustment member 47a and the fourth adjustment member 47b are circlips. The first pre-compression member 45a provides a pre-tightening force between the first swing arm 41a and the synchronization slider 43, and the first adjustment member 46a is used to adjust a magnitude of the pre-tightening force provided by the first pre-compression member 45a. The second pre-compression member 45b provides a pre-tightening force between the second swing arm 41b and the synchronization slider 43, and the second adjustment member 47a is used to adjust a magnitude of the pre-tightening force provided by the second pre-compression member 45b. The third pre-compression member 45c provides a pre-tightening force between the third swing arm 42a and the synchronization slider 43, and the third adjustment member 46b is used to adjust a magnitude of the pre-tightening force provided by the third pre-compression member 45c. The fourth pre-compression member 45d provides a pre-tightening force between the fourth swing arm 42b and the synchronization slider 43, and the fourth adjustment member 47b is used to adjust the pre-tightening force provided by the fourth pre-compression member 45d.

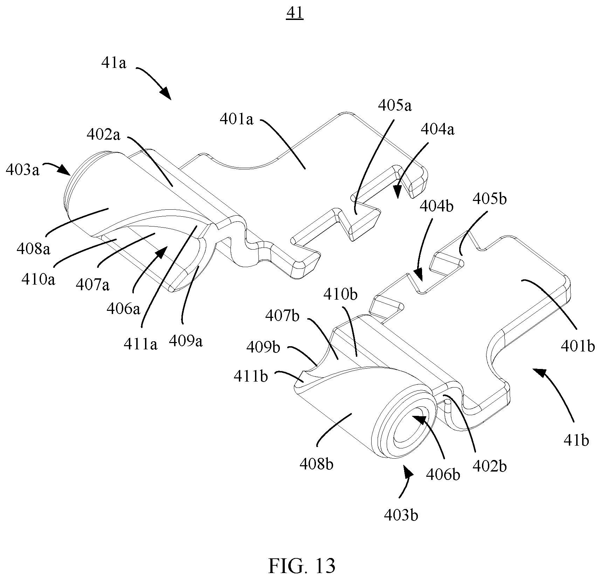

Refer to FIG. 13. FIG. 13 is a diagram of a structure of the first synchronization swing arm 41 of the synchronization assembly 40 shown in FIG. 12.

The first swing arm 41a includes a first swing body 401a, a first connecting body 402a, and a first screw 403a sequentially connected in the X-axis direction. The first swing body 401a has a thin plate shape, first clamping slots 404a arranged at intervals are provided on a side that is of the first swing body 401a and that is in the Y-axis direction, and the plurality of first clamping slots 404a are arranged at intervals in the X-axis direction. A spacing between any two adjacent first clamping slots 404a is a first clamping block 405a. Both the first clamping slot 404a and the first clamping block 405a are trapezoidal. In this embodiment, the first clamping slot 404a and the first clamping block 405a each are in a shape of an isosceles trapezoid. In another embodiment, the first clamping slot 404a and the first clamping block 405a each are in a shape of a right trapezoid. A long bottom edge of the first clamping block 405a is aligned with an opening of the first clamping slot 404a, and a short bottom edge of the first clamping block 405a is aligned with a slot bottom surface of the first clamping slot 404a. The first swing body 401a is used to fit the first fastening plate 11, and the first clamping slot 404a and the first clamping block 405a are used to fit the second swing arm 41b.

The first screw 403a is cylindrical, the first screw 403a is provided with a first through hole 406a and a first screw opening, and the first through hole 406a penetrates the first screw 403a in the Y-axis direction. The first screw 403a includes a first inner circumferential surface 407a, a first outer circumferential surface 408a, and a first end wall surface 409a, the first inner circumferential surface 407a is a hole wall surface of the first through hole 406a, the first outer circumferential surface 408a is away from the first inner circumferential surface 407a, and the first outer circumferential surface 408a is an outer surface of the first screw 403a. The first end wall surface 409a is connected between the first inner circumferential surface 407a and the first outer circumferential surface 408a. The first through hole 406a is a circular hole. In the Y-axis direction, an aperture of the first through hole 406a is always uniform. In other words, in the Y-axis direction, a radian of the first inner circumferential surface 407a is always uniform, and no local protrusion or local recess or the like occurs. Therefore, the first through hole 406a can be machined by using a mold, to implement a solution of machining the first screw 403a by using a mold. When the mold is used for machining, demolding may be performed in the Y-axis direction.

The first screw opening is formed by penetrating a part of the first inner circumferential surface 407a, a part of the first outer circumferential surface 408a, and a part of the first end wall surface 409a. The first screw opening has a first plane 410a and a first screw surface 411a, two sides of the first plane 410a are respectively connected to the first inner circumferential surface 407a and the first outer circumferential surface 408a, and two ends of the first plane 410a that are opposite in the Y-axis direction are respectively connected to the first end wall surface 409a and the first screw surface 411a. The first screw surface 411a is a helically extending curved surface. Two sides of the first screw surface 411a are respectively connected to the first inner circumferential surface 407a and the first outer circumferential surface 408a, and two ends of the first screw surface 411a in the Y-axis direction are respectively connected to the first end wall surface 409a and the first plane 410a. The first screw 403a is used to fit the bearing base 20 and the synchronization slider 43. The first through hole 406a is used to fit the first mounting shaft 44a, and the first screw opening and the first screw surface 411a are used to fit the synchronization slider 43.

The first connecting body 402a is roughly S-shaped. One side of the first connecting body 402a is fixedly connected to the first swing body 401a, and another side of the first connecting body 402a is fixedly connected to the first screw 403a, and specifically, to the first outer circumferential surface 408a of the first screw 403a. The first screw opening is located on a side that is of the first screw 403a and that is away from the first connecting body 402a. The first connecting body 402a avoids the bearing base 20, so that the first screw 403a extends out of the bearing base 20 and then is connected to the first fastening plate 11.

The second swing arm 41b includes a second swing body 401b, a second connecting body 402b, and a second screw 403b sequentially connected in the X-axis direction. The second swing body 401b has a thin plate shape, second clamping slots 404b arranged at intervals are provided on a side that is of the second swing body 401b and that is in the Y-axis direction, and the plurality of second clamping slots 404b are arranged at intervals in the X-axis direction. A spacing between any two adjacent second clamping slots 404b is a second clamping block 405b. Both the second clamping slot 404b and the second clamping block 405b are trapezoidal. In this embodiment, the second clamping slot 404b and the second clamping block 405b each are in a shape of an isosceles trapezoid. In another embodiment, the second clamping slot 404b and the second clamping block 405b each are in a shape of a right trapezoid. A long bottom edge of the second clamping block 405b is aligned with an opening of the second clamping slot 404b, and a short bottom edge of the second clamping block 405b is aligned with a slot bottom surface of the second clamping slot 404b. The second swing body 401b is used to fit the first fastening plate 11, and the second clamping slot 404b and the second clamping block 405b are used to fit the first swing arm 41a.

The second screw 403b is cylindrical, the second screw 403b is provided with a second through hole 406b and a second screw opening, and the second through hole 406b penetrates the second screw 403b in the Y-axis direction. The second screw 403b includes a second inner circumferential surface 407b, a second outer circumferential surface 408b, and a second end wall surface 409b, the second inner circumferential surface 407b is a hole wall surface of the second through hole 406b, the second outer circumferential surface 408b is away from the second inner circumferential surface 407b, and the second outer circumferential surface 408b is an outer surface of the second screw 403b. The second end wall surface 409b is connected between the second inner circumferential surface 407b and the second outer circumferential surface 408b. The second through hole 406b is a circular hole. In the Y-axis direction, an aperture of the second through hole 406b is always uniform. In other words, in the Y-axis direction, a radian of the second inner circumferential surface 407b is always uniform, and no bending or the like occurs. Therefore, the second through hole 406b can be machined by using a mold, to implement a solution of machining the second screw 403b by using a mold. When the mold is used for machining, demolding may be performed in the Y-axis direction.

The second screw opening is formed by penetrating a part of the second inner circumferential surface 407b, a part of the second outer circumferential surface 408b, and a part of the second end wall surface 409b. The second screw opening has a second plane 410b and a second screw surface 411b, and the second screw surface 411b and the first screw surface 411a have a same helical direction. Two sides of the second plane 410b are respectively connected to the second inner circumferential surface 407b and the second outer circumferential surface 408b, and two ends of the second plane 410b that are opposite in the Y-axis direction are respectively connected to the second end wall surface 409b and the second screw surface 411b. The second screw surface 411b is a helically extending curved surface. Two sides of the second screw surface 411b are respectively connected to the second inner circumferential surface 407b and the second outer circumferential surface 408b, and two ends of the second screw surface 411b in the Y-axis direction are respectively connected to the second end wall surface 409b and the second plane 410b. The second screw 403b is used to fit the bearing base 20 and the synchronization slider 43. The second through hole 406b is used to fit the first mounting shaft 44a, and the second screw opening and the second screw surface 411b are used to fit the synchronization slider 43.

The second connecting body 402b is roughly S-shaped. One side of the second connecting body 402b is fixedly connected to the second swing body 401b, and another side of the second connecting body 402b is fixedly connected to the second screw 403b, and specifically, to the second plane 410b of the second screw 403b. The second screw opening is located on a side that is of the second screw 403b and that faces the second connecting body 402b.

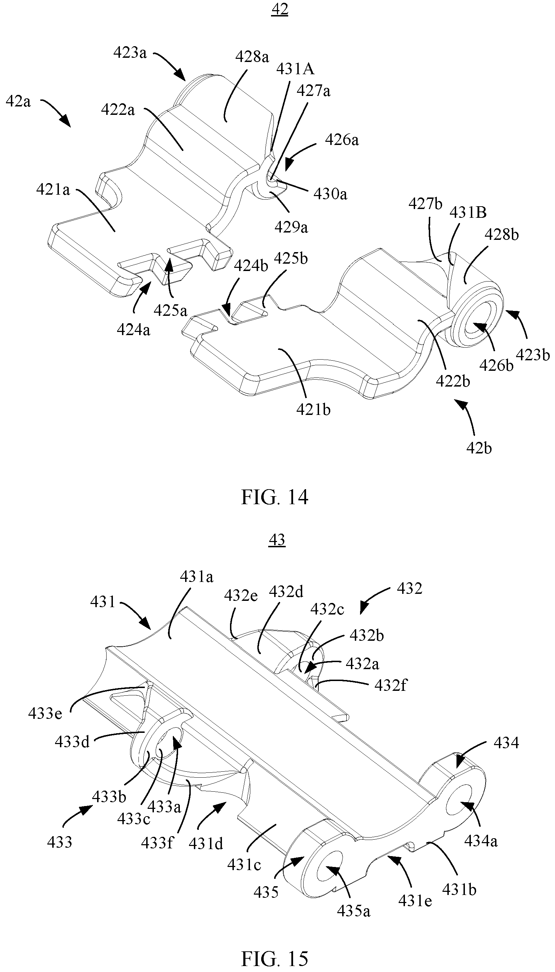

Refer to FIG. 14. FIG. 14 is a diagram of a structure of the second synchronization swing arm 42 of the synchronization assembly 40 shown in FIG. 12. The second synchronization swing arm 42 and the first synchronization swing arm 41 have a same structure. The third swing arm 42a is detachably connected to the fourth swing arm 42b. In another embodiment, the second synchronization swing arm 42 and the first synchronization swing arm 41 may alternatively have different structures. Specifically, the third swing arm 42a and the fourth swing arm 42b may be integrally formed.

The third swing arm 42a includes a third swing body 421a, a third connecting body 422a, and a third screw 423a sequentially connected in the X-axis direction. The third swing body 421a has a thin plate shape, third clamping slots 424a arranged at intervals are provided on a side that is of the third swing body 421a and that is in the Y-axis direction, and the plurality of third clamping slots 424a are arranged at intervals in the X-axis direction. A spacing between any two adjacent third clamping slots 424a is a third clamping block 425a. Both the third clamping slot 424a and the third clamping block 425a are trapezoidal. In this embodiment, the third clamping slot 424a and the third clamping block 425a each are in a shape of an isosceles trapezoid. In another embodiment, the third clamping slot 424a and the third clamping block 425a each are in a shape of a right trapezoid. A long bottom edge of the third clamping block 425a is aligned with an opening of the third clamping slot 424a, and a short bottom edge of the third clamping block 425a is aligned with a slot bottom surface of the third clamping slot 424a. The third swing body 421a is used to fit the second fastening plate 12, and the third clamping slot 424a and the third clamping block 425a are used to fit the fourth swing arm 42b.

The third screw 423a is cylindrical, the third screw 423a is provided with a third through hole 426a and a third screw opening, and the third through hole 426a penetrates the third screw 423a in the Y-axis direction. The third screw 423a includes a third inner circumferential surface 427a, a third outer circumferential surface 428a, and a third end wall surface 429a, the third inner circumferential surface 427a is a hole wall surface of the third through hole 426a, the third outer circumferential surface 428a is away from the third inner circumferential surface 427a, and the third outer circumferential surface 428a is an outer surface of the third screw 423a. The third end wall surface 429a is connected between the third inner circumferential surface 427a and the third outer circumferential surface 428a. The third through hole 426a is a circular hole. In the Y-axis direction, an aperture of the third through hole 426a is always uniform. In other words, in the Y-axis direction, a radian of the third inner circumferential surface 427a is always uniform, and no bending or the like occurs. Therefore, the third through hole 426a can be machined by using a mold, to implement a solution of machining the third screw 423a by using a mold. When the mold is used for machining, demolding may be performed in the Y-axis direction.

The third screw opening is formed by penetrating a part of the third inner circumferential surface 427a, a part of the third outer circumferential surface 428a, and a part of the third end wall surface 429a. The third screw opening has a third plane 430a and a third screw surface 431A, two sides of the third plane 430a are respectively connected to the third inner circumferential surface 427a and the third outer circumferential surface 428a, and two ends of the third plane 430a that are opposite in the Y-axis direction are respectively connected to the third end wall surface 429a and the third screw surface 431A. The third screw surface 431A is a helically extending curved surface. Two sides of the third screw surface 431A are respectively connected to the third inner circumferential surface 427a and the third outer circumferential surface 428a, and two ends of the third screw surface 431A that are opposite in the Y-axis direction are respectively connected to the third end wall surface 429a and the third plane 430a. The third screw 423a is used to fit the bearing base 20 and the synchronization slider 43. The third through hole 426a is used to fit the second mounting shaft 44b, and the third screw opening and the third screw surface 431A are used to fit the synchronization slider 43.

The third connecting body 422a is roughly S-shaped. One side of the third connecting body 422a is fixedly connected to the third swing body 421a, and another side of the third connecting body 422a is fixedly connected to the third screw 423a, and specifically, to the third outer circumferential surface 428a of the third screw 423a. The third screw opening is located on a side that is of the third screw 423a and that is away from the third connecting body 422a.

The fourth swing arm 42b includes a fourth swing body 421b, a fourth connecting body 422b, and a fourth screw 423b sequentially connected in the X-axis direction. The fourth swing body 421b has a thin plate shape, fourth clamping slots 424b arranged at intervals are provided on a side that is of the fourth swing body 421b and that is in the Y-axis direction, and the plurality of fourth clamping slots 424b are arranged at intervals in the X-axis direction. A spacing between any two adjacent fourth clamping slots 424b is a fourth clamping block 425b. Both the fourth clamping slot 424b and the fourth clamping block 425b are trapezoidal. In this embodiment, the fourth clamping slot 424b and the fourth clamping block 425b each are in a shape of an isosceles trapezoid. In another embodiment, the fourth clamping slot 424b and the fourth clamping block 425b each are in a shape of a right trapezoid. A long bottom edge of the fourth clamping block 425b is aligned with an opening of the fourth clamping slot 424b, and a short bottom edge of the fourth clamping block 425b is aligned with a slot bottom surface of the fourth clamping slot 424b. The fourth swing body 421b is used to fit the second fastening plate 12, and the fourth clamping slot 424b and the fourth clamping block 425b are used to fit the third swing arm 42a.

The fourth screw 423b is cylindrical, the fourth screw 423b is provided with a fourth through hole 426b and a fourth screw opening, and the fourth through hole 426b penetrates the fourth screw 423b in the Y-axis direction. The fourth screw 423b includes a fourth inner circumferential surface 427b, a fourth outer circumferential surface 428b, and a fourth end wall surface, the fourth inner circumferential surface 427b is a hole wall surface of the fourth through hole 426b, the fourth outer circumferential surface 428b is away from the fourth inner circumferential surface 427b, and the fourth outer circumferential surface 428b is an outer surface of the fourth screw 423b. The fourth end wall surface is connected between the fourth inner circumferential surface 427b and the fourth outer circumferential surface 428b. The fourth through hole 426b is a circular hole. In the Y-axis direction, an aperture of the fourth through hole 426b is always uniform. In other words, in the Y-axis direction, a radian of the fourth inner circumferential surface 427b is always uniform, and no bending or the like occurs. Therefore, the fourth through hole 426b can be machined by using a mold, to implement a solution of machining the fourth screw 423b by using a mold. When the mold is used for machining, demolding may be performed in the Y-axis direction.

The fourth screw opening is formed by penetrating a part of the fourth inner circumferential surface 427b, a part of the fourth outer circumferential surface 428b, and a part of the fourth end wall surface. The fourth screw opening has a fourth plane and a fourth screw surface 431B, a helical direction of the fourth screw surface 431B is the same as a helical direction of the third screw surface 431A, two sides of the fourth plane are respectively connected to the fourth inner circumferential surface 427b and the fourth outer circumferential surface 428b, and two ends of the fourth plane that are opposite in the Y-axis direction are respectively connected to the fourth end wall surface and the fourth screw surface 431B. The fourth screw surface 431B is a helically extending curved surface. Two sides of the fourth screw surface 431B are respectively connected to the fourth inner circumferential surface 427b and the fourth outer circumferential surface 428b, and two ends of the fourth screw surface 431B that are opposite in the Y-axis direction are respectively connected to the fourth end wall surface and the fourth plane. The fourth screw 423b is used to fit the bearing base 20 and the synchronization slider 43. The fourth through hole 426b is used to fit the second mounting shaft 44b, and the fourth screw opening and the fourth screw surface 431B are used to fit the synchronization slider 43.

The fourth connecting body 422b is roughly S-shaped. One side of the fourth connecting body 422b is fixedly connected to the fourth swing body 421b, and another side of the fourth connecting body 422b is fixedly connected to the fourth screw 423b, and specifically, to the fourth plane of the fourth screw 423b. The fourth screw opening is located on a side that is of the fourth screw 423b and that faces the fourth connecting body 422b.

Refer to FIG. 15. FIG. 15 is a diagram of a structure of the synchronization slider 43 of the synchronization assembly 40 shown in FIG. 12.

The synchronization slider 43 includes a synchronization body 431, a first screw block 432, a second screw block 433, a first connecting block 434, and a second connecting block 435. The first screw block 432 and the second screw block 433 are located on two sides of the synchronization body 431 in the X-axis direction, the first connecting block 434 and the second connecting block 435 are located on the two sides of the synchronization body 431 in the X-axis direction, the first screw block 432 and the first connecting block 434 are located on a same side of the synchronization body 431, and the second screw block 433 and the second connecting block 435 are located on a same side of the synchronization body 431.

The synchronization body 431 roughly has a rectangular block shape. The synchronization body 431 includes a first synchronization surface 431a and a second synchronization surface 431b that are opposite in the Z-axis direction, and a first synchronization side surface and a second synchronization side surface 431c that are opposite in the X-axis direction. The first synchronization side surface is connected between one side of the first synchronization surface 431a and one side of the second synchronization surface 431b, and the second synchronization side surface 431c is connected between another side of the first synchronization surface 431a and another side of the second synchronization surface 431b. Both the first synchronization side surface and the second synchronization side surface 431c are inclined arc surfaces. Both the first synchronization side surface and the second synchronization side surface 431c are inclined relative to a central axis of the synchronization slider 43 in the Z-axis direction, and incline directions of both the first synchronization side surface and the second synchronization side surface 431c are away from the central axis of the synchronization slider 43 in the axial direction.

The synchronization body 431 is provided with a first demolding slot (not shown in the figure), a second demolding slot 431d, and a guide slot 431e, the first demolding slot penetrates the first synchronization side surface and the second synchronization surface 431b, and the second demolding slot 431d penetrates the second synchronization side surface 431c and the second synchronization surface 431b. Both the first demolding slot and the second demolding slot 431d are roughly triangular. The first demolding slot and the second demolding slot 431d help machine the synchronization slider 43 by using a mold. The guide slot 431e is formed by the second synchronization surface 431b being recessed toward the first synchronization surface 431a, the guide slot 431e penetrates the synchronization body 431 in the Y-axis direction, and the guide slot 431e is used to fit the guide bar 233 to enable the synchronization slider 43 to slide in the Y-axis direction under the guidance of the guide bar 233, thereby improving stability of sliding of the synchronization slider 43.

The first screw block 432 is formed through protrusion along the first synchronization side surface, and the first screw block 432 is provided with a first via hole 432a extending in the Y-axis direction. The first screw block 432 includes a first connecting surface (not shown in the figure), a second connecting surface 432b, a first inner wall surface 432c, a first outer wall surface 432d, a first fitting surface 432e, and a second fitting surface 432f. The first connecting surface and the second connecting surface 432b are opposite in the Y-axis direction, both the first connecting surface and the second connecting surface 432b are planar, and the first via hole 432a penetrates the first connecting surface and the second connecting surface 432b. Both the first inner wall surface 432c and the first outer wall surface 432d are arc surfaces, a part of the first inner wall surface 432c is a hole wall surface of the first via hole 432a, the first outer wall surface 432d is away from the first inner wall surface 432c, and the first outer wall surface 432d is an outer surface of the first screw block 432.

Both the first fitting surface 432e and the second fitting surface 432f extend helically around an axial direction of the first via hole 432a, and the first fitting surface 432e and the second fitting surface 432f have a same helical direction. The first fitting surface 432e and the second fitting surface 432f are located on two sides of the first via hole 432a that are opposite in the Y-axis direction. Two opposite sides of the first fitting surface 432e in an extension direction are respectively connected to the first inner wall surface 432c and the first outer wall surface 432d, and two ends in the extension direction of the first fitting surface 432e are respectively connected to the first synchronization side surface and the first connecting surface. Two opposite sides of the second fitting surface 432f in an extension direction are respectively connected to the first inner wall surface 432c and the first outer wall surface 432d, and two ends of the second fitting surface 432f in the Y-axis direction are respectively connected to the first synchronization side surface and the second connecting surface 432b. The first via hole 432a is used to fit the first mounting shaft 44a, the first fitting surface 432e is used to fit the first screw surface 411a, and the second fitting surface 432f is used to fit the second screw surface 411b.

The part of the first inner wall surface 432c forming the hole wall surface of the first via hole 432a and a remaining part of the first inner wall surface 432c are connected in the Y-axis direction, and the part of the first inner wall surface 432c forming the hole wall surface of the first via hole 432a and the remaining part of the first inner wall surface 432c have consistent bending radians in the X-axis direction. That is, the first via hole 432a is a circular hole, and an aperture remains unchanged. Therefore, when the first via hole 432a is machined by using a mold, demolding can be performed in the Y-axis direction, so that the first via hole 432a is machined by using the mold, and the first fitting surface 432e and the first via hole 432a can be synchronously machined. The second fitting surface 432f is flush with a slot wall surface of the first demolding slot in the Z-axis direction. When the second fitting surface 432f is machined by using a mold, demolding can be performed in the Z-axis direction, so that the second fitting surface 432f is machined by using the mold. Therefore, the first screw block 432 can be made by using a mold.

The second screw block 433 has a same structure as the first screw block 432, and the first screw block 432 and the second screw block 433 are symmetrical relative to the synchronization body 431. The second screw block 433 is formed through protrusion along the second synchronization side surface 431c, and the second screw block 433 is provided with a second via hole 433a extending in the Y-axis direction. The second screw block 433 includes a third connecting surface (not shown in the figure), a fourth connecting surface 433b, a second inner wall surface 433c, a second outer wall surface 433d, a third fitting surface 433e, and a fourth fitting surface 433f. The third connecting surface and the fourth connecting surface 433b are opposite in the Y-axis direction, and both the third connecting surface and the fourth connecting surface 433b are planar. The second via hole 433a penetrates the third connecting surface and the fourth connecting surface 433b. Both the second inner wall surface 433c and the second outer wall surface 433d are arc surfaces, a part of the second inner wall surface 433c is a hole wall surface of the second via hole 433a, and the second outer wall surface 433d is away from the second inner wall surface 433c.

Both the third fitting surface 433e and the fourth fitting surface 433f extend helically around an axial direction of the second via hole 433a, and the third fitting surface 433e and the fourth fitting surface 433f have a same helical direction. The third fitting surface 433e and the fourth fitting surface 433f are located on two sides of the second via hole 433a that are opposite in the Y-axis direction. Two opposite sides of the third fitting surface 433e in an extension direction are respectively connected to the second inner wall surface 433c and the second outer wall surface 433d, and two ends in the extension direction of the third fitting surface 433e are respectively connected to the second synchronization side surface 431c and the third connecting surface. Two opposite sides of the fourth fitting surface 433f in an extension direction are respectively connected to the second inner wall surface 433c and the second outer wall surface 433d, and two ends of the fourth fitting surface 433f in the Y-axis direction are respectively connected to the second synchronization side surface 431c and the fourth connecting surface 433b. The second via hole 433a is used to fit the second mounting shaft 44b, the third fitting surface 433e is used to fit the third screw surface 431A, and the fourth fitting surface 433f is used to fit the fourth screw surface 431B.

The part of the second inner wall surface 433c forming the hole wall surface of the second via hole 433a and a remaining part of the second inner wall surface 433c are connected in the Y-axis direction, and the part of the second inner wall surface 433c forming the hole wall surface of the second via hole 433a and the remaining part of the second inner wall surface 433c have consistent bending radians in the X-axis direction. That is, the second via hole 433a is a circular hole, and an aperture remains unchanged. Therefore, when the second via hole 433a is machined by using a mold, demolding can be performed in the Y-axis direction, so that the second via hole 433a is machined by using the mold, and the third fitting surface 433e and the second via hole 433a are synchronously machined. The fourth fitting surface 433f is flush with a slot wall surface of the second demolding slot 431d in the Z-axis direction. When the fourth fitting surface 433f is machined by using a mold, demolding can be performed in the Z-axis direction, so that the fourth fitting surface 433f is machined by using the mold. Therefore, the second screw block 433 can be made by using a mold.

The first connecting block 434 is formed through protrusion along the first synchronization side surface, the first connecting block 434 is provided with a first penetrating hole 434a, and the first penetrating hole 434a penetrates the first connecting block 434 in the Y-axis direction. The second connecting block 435 is formed through protrusion along the second synchronization side surface 431c, the second connecting block 435 is provided with a second penetrating hole 435a, and the second penetrating hole 435a penetrates the second connecting block 435 in the Y-axis direction. The first penetrating hole 434a is coaxial with the first via hole 432a, and the second penetrating hole 435a is coaxial with the second via hole 433a. The first penetrating hole 434a and the first via hole 432a are used to fit the first mounting shaft 44a, and the second penetrating hole 435a and the second via hole 433a are used to fit the second mounting shaft 44b.

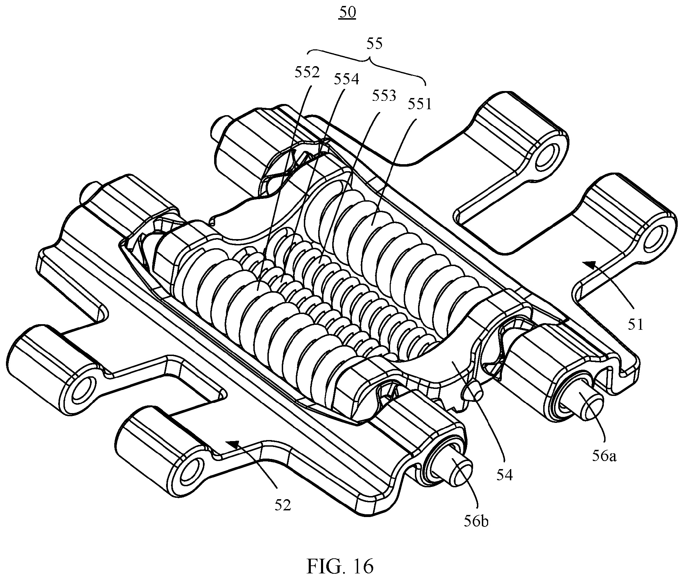

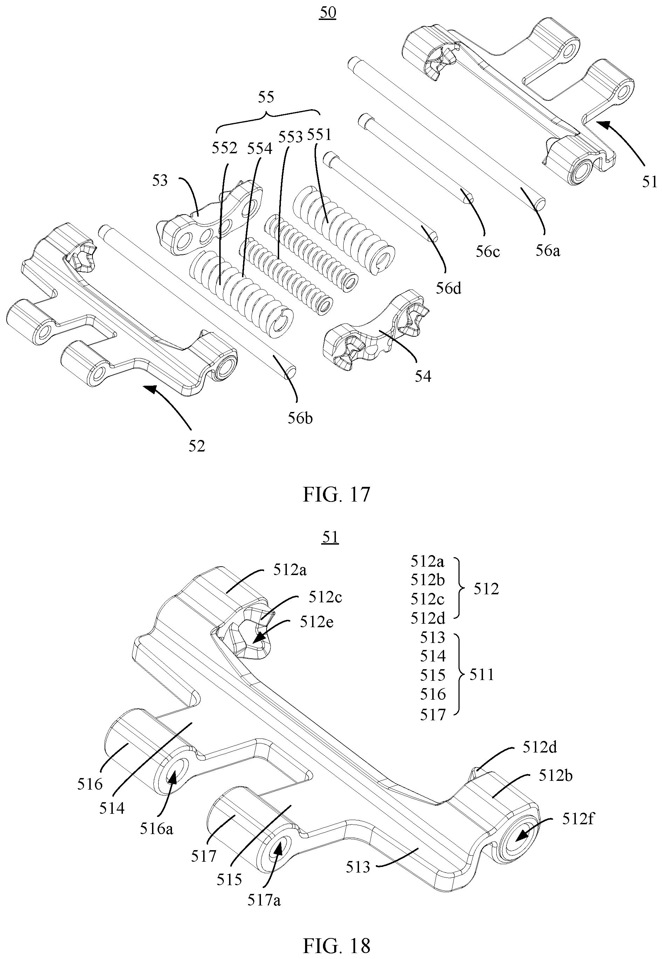

Refer to FIG. 16 and FIG. 17. FIG. 16 is a diagram of a structure of the damping assembly 50 of the rotating mechanism 100 shown in FIG. 4, and FIG. 17 is a diagram of a separated structure of the damping assembly 50 shown in FIG. 16.

As already mentioned above, the damping assembly 50 includes the first damping swing arm 51, the second damping swing arm 52, the first sliding member 53, the second sliding member 54, and the elastic assembly 55. The elastic assembly 55 includes a first elastic member 551, a second elastic member 552, a third elastic member 553, and a fourth elastic member 554. The first elastic member 551, the second elastic member 552, the third elastic member 553, and the fourth elastic member 554 are all springs. In another embodiment, the first elastic member 551, the second elastic member 552, the third elastic member 553, and the fourth elastic member 554 are all rubber members.

In this embodiment, the damping assembly 50 further includes a first connecting shaft, a second connecting shaft, a first connecting rod 56a, a second connecting rod 56b, a third connecting rod 56c, and a fourth connecting rod 56d.

Refer to FIG. 18. FIG. 18 is a diagram of a structure of the first damping swing arm 51 of the damping assembly 50 shown in FIG. 17.

The first damping swing arm 51 includes a first sliding body 511 and a first rotating body 512 fixedly connected in the X-axis direction. The first sliding body 511 is used to slidably and rotatably connect to the first fastening plate 11, and the first rotating body 512 is used to rotatably connect to the first sliding member 53, the second sliding member 54, and the bearing base 20.

The first sliding body 511 has a thin plate shape, and includes a first connecting arm 513, a first sliding arm 514, a second sliding arm 515, a first sliding cylinder 516, and a second sliding cylinder 517. The first connecting arm 513 has an elongated plate shape, and a length direction of the first connecting arm 513 is parallel to the Y-axis direction. The first sliding arm 514 and the second sliding arm 515 each have a rectangular plate shape, and length directions of both the first sliding arm 514 and the second sliding arm 515 are parallel to the X-axis direction. Width dimensions of the first sliding arm 514 and the second sliding arm 515 in the Y-axis direction are smaller than a length dimension of the first connecting arm 513 in the Y-axis direction.

Both the first sliding arm 514 and the second sliding arm 515 are fixedly connected to one side of the first connecting arm 513. The first sliding arm 514 and the second sliding arm 515 are spaced apart in the Y-axis direction. The first sliding cylinder 516 is fixedly connected to a side that is of the first sliding arm 514 and that is away from the first connecting arm 513, and the second sliding cylinder 517 is fixedly connected to a side that is of the second sliding arm 515 and that is away from the first connecting arm 513. Both the first sliding cylinder 516 and the second sliding cylinder 517 are cylindrical. The first sliding cylinder 516 is provided with a first sliding hole 516a, and the second sliding cylinder 517 is provided with a second sliding hole 517a. Axial directions of both the first sliding hole 516a and the second sliding hole 517a are parallel to the Y-axis direction, and the first sliding hole 516a and the second sliding hole 517a are coaxial. The first sliding hole 516a and the second sliding hole 517a are used to fit the first connecting shaft.

The first rotating body 512 includes a first rotating cylinder 512a, a second rotating cylinder 512b, a first concave-convex wheel 512c, and a second concave-convex wheel 512d, the first rotating cylinder 512a is provided with a first rotating hole 512e, and the second rotating cylinder 512b is provided with a second rotating hole 512f. Both the first rotating cylinder 512a and the second rotating cylinder 512b are fixedly connected to a side that is of the first connecting arm 513 and that is away from the first sliding arm 514 and the second sliding arm 515, the first rotating cylinder 512a and the second rotating cylinder 512b are spaced apart in the Y-axis direction, and the first rotating cylinder 512a, the second rotating cylinder 512b, and the first connecting arm 513 are arranged in a U-shape. Axial directions of both the first rotating hole 512e and the second rotating hole 512f are parallel to the Y-axis direction, and the first rotating hole 512e and the second rotating hole 512f are coaxial. The first concave-convex wheel 512c is fixedly connected to one side surface of the first rotating cylinder 512a, and is coaxial with the first rotating hole 512e. The second concave-convex wheel 512d has a same structure as the first concave-convex wheel 512c, and the second concave-convex wheel 512d is fixedly connected to one side surface of the second rotating cylinder 512b, and is coaxial with the second rotating hole 512f. One side surface of the first rotating cylinder 512a and one side surface of the second rotating cylinder 512b are spaced and opposite, and the first concave-convex wheel 512c and the second concave-convex wheel 512d are spaced and opposite. The first concave-convex wheel 512c includes a plurality of first recesses (not shown in the figure) and a plurality of first protrusions (not shown in the figure), and the plurality of first recesses and the plurality of first protrusions are alternately distributed. The second concave-convex wheel 512d includes a plurality of second recesses (not shown in the figure) and a plurality of second protrusions (not shown in the figure), and the plurality of second recesses and the plurality of second protrusions are alternately distributed.

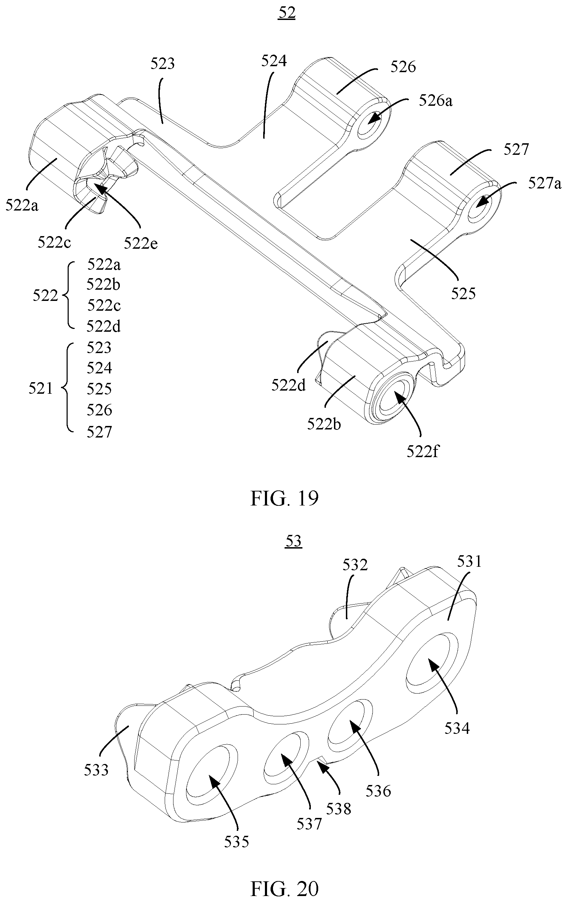

Refer to FIG. 19. FIG. 19 is a diagram of a structure of the second damping swing arm 52 of the damping assembly 50 shown in FIG. 17.

The second damping swing arm 52 and the first damping swing arm 51 have a same structure. The second damping swing arm 52 includes a second sliding body 521 and a second rotating body 522 fixedly connected in the X-axis direction. The second sliding body 521 is used to slidably and rotatably connect to the second fastening plate 12, and the second rotating body 522 is used to rotatably connect to the first sliding member 53, the second sliding member 54, and the bearing base 20.

The second sliding body 521 has a thin plate shape, and includes a second connecting arm 523, a third sliding arm 524, a fourth sliding arm 525, a third sliding cylinder 526, and a fourth sliding cylinder 527. The second connecting arm 523 has an elongated plate shape, and a length direction of the second connecting arm 523 is parallel to the Y-axis direction. The third sliding arm 524 and the fourth sliding arm 525 each have a rectangular plate shape, and length directions of both the third sliding arm 524 and the fourth sliding arm 525 are parallel to the X-axis direction. Width dimensions of the third sliding arm 524 and the fourth sliding arm 525 in the Y-axis direction are smaller than a length dimension of the second connecting arm 523 in the Y-axis direction.

Both the third sliding arm 524 and the fourth sliding arm 525 are fixedly connected to one side of the second connecting arm 523. The third sliding arm 524 and the fourth sliding arm 525 are spaced apart in the Y-axis direction. The third sliding cylinder 526 is fixedly connected to a side that is of the third sliding arm 524 and that is away from the second connecting arm 523, and the fourth sliding cylinder 527 is fixedly connected to a side that is of the fourth sliding arm 525 and that is away from the second connecting arm 523. Both the third sliding cylinder 526 and the fourth sliding cylinder 527 are cylindrical. The third sliding cylinder 526 is provided with a third sliding hole 526a, and the fourth sliding cylinder 527 is provided with a fourth sliding hole 527a. Axial directions of both the third sliding hole 526a and the fourth sliding hole 527a are parallel to the Y-axis direction, and the third sliding hole 526a and the fourth sliding hole 527a are coaxial. The third sliding hole 526a and the fourth sliding hole 527a are used to fit the second connecting shaft.

The second rotating body 522 includes a third rotating cylinder 522a, a fourth rotating cylinder 522b, a third concave-convex wheel 522c, and a fourth concave-convex wheel 522d, the third rotating cylinder 522a is provided with a third rotating hole 522e, and the fourth rotating cylinder 522b is provided with a fourth rotating hole 522f. Both the third rotating cylinder 522a and the fourth rotating cylinder 522b are fixedly connected to a side that is of the second connecting arm 523 and that is away from the third sliding arm 524 and the fourth sliding arm 525, the third rotating cylinder 522a and the fourth rotating cylinder 522b are spaced apart in the Y-axis direction, and the third rotating cylinder 522a, the fourth rotating cylinder 522b, and the second connecting arm 523 are arranged in a U-shape. Axial directions of both the third rotating hole 522e and the fourth rotating hole 522f are parallel to the Y-axis direction, and the third rotating hole 522e and the fourth rotating hole 522f are coaxial. The third concave-convex wheel 522c is fixedly connected to one side surface of the third rotating cylinder 522a, and is coaxial with the third rotating hole 522e. The fourth concave-convex wheel 522d has a same structure as the third concave-convex wheel 522c, and the fourth concave-convex wheel 522d is fixedly connected to one side surface of the fourth rotating cylinder 522b, and is coaxial with the fourth rotating hole 522f. One side surface of the third rotating cylinder 522a and one side surface of the fourth rotating cylinder 522b are spaced and opposite, and the third concave-convex wheel 522c and the fourth concave-convex wheel 522d are spaced and opposite. The third concave-convex wheel 522c includes a plurality of third recesses (not shown in the figure) and a plurality of third protrusions (not shown in the figure), and the plurality of third recesses and the plurality of third protrusions are alternately distributed. The fourth concave-convex wheel 522d includes a plurality of fourth recesses (not shown in the figure) and a plurality of fourth protrusions (not shown in the figure), and the plurality of fourth recesses and the plurality of fourth protrusions are alternately distributed.

Refer to FIG. 20. FIG. 20 is a diagram of a structure of the first sliding member 53 of the damping assembly 50 shown in FIG. 17.

The first sliding member 53 includes a first slider 531, a first fitting wheel 532, and a third fitting wheel 533. The first slider 531 is provided with a first connecting hole 534, a fifth connecting hole 536, a seventh connecting hole 537, and a third connecting hole 535 that are spaced apart in the X-axis direction. The first connecting hole 534, the fifth connecting hole 536, the seventh connecting hole 537, and the third connecting hole 535 all penetrate the first slider 531 in the Y-axis direction. The first fitting wheel 532 and the third fitting wheel 533 have a same structure and are both fixedly connected to a surface of the first slider 531, the first fitting wheel 532 is coaxial with the first connecting hole 534, and the third fitting wheel 533 is coaxial with the third connecting hole 535. The first fitting wheel 532 includes a plurality of first fitting recesses (not shown in the figure) and a plurality of first fitting protrusions (not shown in the figure), and the plurality of first fitting recesses and the plurality of first fitting protrusions are alternately distributed. The third fitting wheel 533 includes a plurality of third fitting recesses (not shown in the figure) and a plurality of third fitting protrusions (not shown in the figure), and the plurality of third fitting recesses and the plurality of third fitting protrusions are alternately distributed. One side surface of the first slider 531 is provided with a first guide groove 538, the first guide groove 538 penetrates the first slider 531 in the Y-axis direction, and an extension direction of the first guide groove 538 is parallel to the Y-axis direction. The first fitting wheel 532 is used to fit the first concave-convex wheel 512c, and the third fitting wheel 533 is used to fit the third concave-convex wheel 522c. The first connecting hole 534 is used to fit the first connecting rod 56a, the third connecting hole 535 is used to fit the second connecting rod 56b, the fifth connecting hole 536 is used to fit the third connecting rod 56c, and the seventh connecting hole 537 is used to fit the fourth connecting rod 56d. The first guide groove 538 is used to fit the guide bar 241 to guide movement of the first slider 531 in the Y-axis direction, to prevent the first slider 531 from shaking when the first slider 531 moves in the Y-axis direction, so that movement of the first sliding member 53 is more stable.

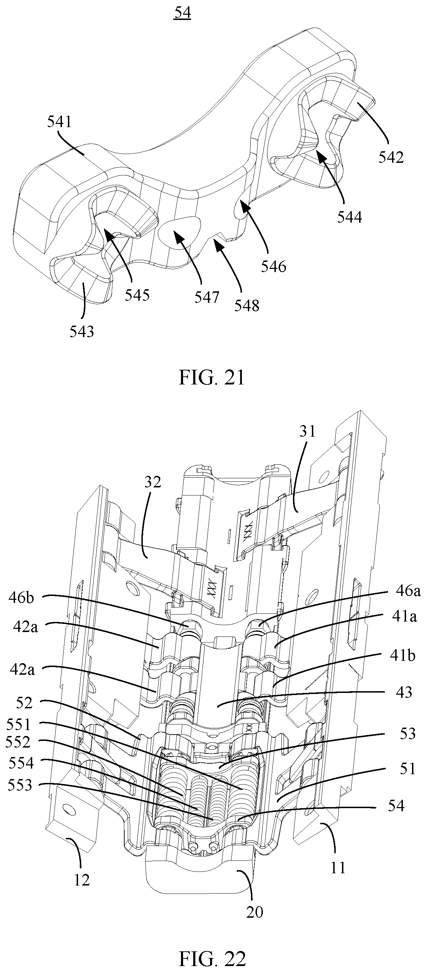

Refer to FIG. 21. FIG. 21 is a diagram of a structure of the second sliding member 54 of the damping assembly 50 shown in FIG. 17.

A structure of the second sliding member 54 is the same as that of the first sliding member 53, and the second sliding member 54 includes a second slider 541, a second fitting wheel 542, and a fourth fitting wheel 543. The second slider 541 is provided with a second connecting hole 544, a sixth connecting hole 546, an eighth connecting hole 547, and a fourth connecting hole 545 that are spaced apart in the X-axis direction. The second connecting hole 544, the sixth connecting hole 546, the eighth connecting hole 547, and the fourth connecting hole 545 all penetrate the second slider 541 in the Y-axis direction. The second fitting wheel 542 and the fourth fitting wheel 543 have a same structure and are both fixedly connected to a surface of the second slider 541. The second fitting wheel 542 is coaxial with the second connecting hole 544, and the fourth fitting wheel 543 is coaxial with the fourth connecting hole 545. The second fitting wheel 542 includes a plurality of second fitting recesses (not shown in the figure) and a plurality of second fitting protrusions (not shown in the figure), and the plurality of second fitting recesses and the plurality of second fitting protrusions are alternately distributed. The fourth fitting wheel 543 includes a plurality of fourth fitting recesses (not shown in the figure) and a plurality of fourth fitting protrusions (not shown in the figure), and the plurality of fourth fitting recesses and the plurality of fourth fitting protrusions are alternately distributed. One side surface of the second slider 541 is provided with a second guide groove 548, the second guide groove 548 penetrates the second slider 541 in the Y-axis direction, and an extension direction of the second guide groove 548 is parallel to the Y-axis direction. The second fitting wheel 542 is used to fit the second concave-convex wheel 512d, and the fourth fitting wheel 543 is used to fit the fourth concave-convex wheel 522d. The second connecting hole 544 is used to fit the first connecting rod 56a, the fourth connecting hole 545 is used to fit the second connecting rod 56b, the sixth connecting hole 546 is used to fit the third connecting rod 56c, and the eighth connecting hole 547 is used to fit the fourth connecting rod 56d. The second guide groove 548 is used to fit the guide bar 241 to guide movement of the second slider 541 in the Y-axis direction, to prevent the second slider 541 from shaking when the second slider 541 moves in the Y-axis direction, so that movement of the second sliding member 54 is more stable.

In this embodiment, referring to FIG. 5, the first fastening plate 11 and the second fastening plate 12 are respectively located on two opposite sides of the bearing base 20.

Refer to FIG. 4, FIG. 8, and FIG. 9. The first main swing arm 31 is rotatably connected to the bearing base 20. Specifically, at least a part of the first main sliding body 312 of the first main swing arm 31 is located within the first main sliding groove 21 of the bearing base 20, and the first sliding surface 314 of the first main sliding body 312 faces the arc-shaped part of the groove bottom surface of the first main sliding groove 21, so that the first main sliding body 312 slides and rotates along the groove bottom surface of the first main sliding groove 21. In this way, the first main swing arm 31 slides and rotates relative to the bearing base 20. The first fitting block 317 of the first main sliding body 312 is located in a spacing between the first limiting block 212 and the groove bottom surface of the first main sliding groove 21, and the second fitting block 318 is located in a spacing between the second limiting block 213 and the groove bottom surface of the first main sliding groove 21. When the first main sliding body 312 slides and rotates, the first fitting block 317 and the second fitting block 318 restrict movement of the first main sliding body 312 in the Z-axis direction, to prevent the first main sliding body 312 from being separated from the first main sliding groove 21 in the Z-axis direction. The first stop block 211 in the first main sliding groove 21 of the bearing base 20 is located in the first stop groove 315 of the first main sliding body 312. After the first main sliding body 312 slides and rotates relative to the bearing base 20, the first stop block 211 abuts against the first stop surface of the first stop groove 315, to prevent the first main sliding body 312 from sliding out of the first main sliding groove 21 in the X-axis direction.

At least a part of the first main rotating body 311 of the first main swing arm 31 is located in the first rotating groove 111 of the first fastening plate 11, and the first fastening hole 118, the first perforation 313, and the second fastening hole are coaxial. The first fastening shaft 33 passes through the first perforation 313, and two opposite ends of the first fastening shaft 33 are respectively fastened in the first fastening hole 118 and the second fastening hole, so that the first main rotating body 311 can rotate around the first fastening shaft 33 to achieve rotation of the first main swing arm 31 relative to the first fastening plate 11.

Refer to FIG. 4, FIG. 8, and FIG. 10. The second main swing arm 32 is rotatably connected to the bearing base 20. Specifically, at least a part of the second main sliding body 322 of the second main swing arm 32 is located within the second main sliding groove 22 of the bearing base 20. The second fitting block 318 of the second main sliding body 322 is located in a spacing between the third limiting block 222 and the groove bottom surface of the second main sliding groove 22, and the fourth fitting block 328 is located in a spacing between the fourth limiting block 223 and the groove bottom surface of the second main sliding groove 22. The second sliding surface 324 of the second main sliding body 322 faces the arc-shaped part of the groove bottom surface of the second main sliding groove 22, so that the second main sliding body 322 slides and rotates along the groove bottom surface of the second main sliding groove 22. In this way, the second main swing arm 32 slides and rotates relative to the bearing base 20. The third fitting block 327 of the second main sliding body 322 is located in a spacing between the third limiting block 222 and the groove bottom surface of the second main sliding groove 22, and the fourth fitting block 328 is located in a spacing between the fourth limiting block 223 and the groove bottom surface of the second main sliding groove 22. When the second main sliding body 322 slides and rotates, the third fitting block 327 and the fourth fitting block 328 restrict movement of the second main sliding body 322 in the Z-axis direction, to prevent the second main sliding body 322 from being separated from the second main sliding groove 22 in the Z-axis direction. The second stop block 221 in the second main sliding groove 22 of the bearing base 20 is located in the second stop groove 325 of the second main sliding body 322. After the second main sliding body 322 slides and rotates relative to the bearing base 20, the second stop block 221 abuts against the second stop surface of the second stop groove 325, to prevent the second main sliding body 322 from sliding out of the second main sliding groove 22 in the X-axis direction.

At least a part of the second main rotating body 321 of the second main swing arm 32 is located in the second rotating groove 121 of the second fastening plate 12, and the third fastening hole 128, the second perforation 323, and the fourth fastening hole are coaxial. The second fastening shaft 34 passes through the second perforation 323, and two opposite ends of the second fastening shaft 34 are respectively fastened in the third fastening hole 128 and the fourth fastening hole, so that the second main rotating body 321 can rotate around the second fastening shaft 34 to achieve rotation of the second main swing arm 32 relative to the second fastening plate 12.

In this embodiment, referring to FIG. 11 and FIG. 12, the first adjustment member 46a, the first pre-compression member 45a, the first screw 403a, the part that is of the first screw block 432 and that is provided with the first via hole 432a, the second screw 403b, the second pre-compression member 45b, the second adjustment member 47a, and the first connecting block 434 are located on a same side of the synchronization body 431 and are sequentially arranged in the Y-axis direction. The first adjustment member 46a is a nut. A threaded hole of the first adjustment member 46a, a hollow portion of the first pre-compression member 45a, the first through hole 406a of the first screw 403a, the first via hole 432a of the first screw block 432, the second through hole 406b of the second screw 403b, a hollow portion of the second pre-compression member 45b, a hollow portion of the second adjustment member 47a, and the first penetrating hole 434a of the first connecting block 434 are all coaxial. The first mounting shaft 44a sequentially passes through the threaded hole of the first adjustment member 46a, the hollow portion of the first pre-compression member 45a, the first through hole 406a of the first screw 403a, the first via hole 432a of the first screw block 432, the second through hole 406b of the second screw 403b, the hollow portion of the second pre-compression member 45b, the hollow portion of the second adjustment member 47a, and the first penetrating hole 434a of the first connecting block 434. Both the first screw 403a and the second screw 403b can rotate around the first mounting shaft 44a.

The first swing body 401a of the first swing arm 41a fits the second swing body 401b of the second swing arm 41b. One of the first swing arm 41a and the second swing arm 41b is provided with a clamping slot, the other of the first swing arm 41a and the second swing arm 41b is provided with a clamping block, and the clamping block is clamped in the clamping slot. The first swing arm 41a and the second swing arm 41b are detachably connected by using the clamping slot and the clamping block. A structure is simple, machining is convenient, and costs are low. In this embodiment, the first clamping block 405a of the first swing body 401a is located in the second clamping slot 404b of the second swing body 401b, and the second clamping block 405b of the second swing body 401b is located in the first clamping slot 404a of the first swing body 401a. The first clamping slot 404a, the first clamping block 405a, the second clamping slot 404b, and the second clamping block 405b are all of trapezoidal structures. This can avoid loosening after the first swing body 401a and the second swing body 401b fit, and ensure stability of fitting between the first swing body 401a and the second swing body 401b.

In another embodiment, the first swing arm 41a and the second swing arm 41b may be clamped by using an elastic buckle. Specifically, one side of the first swing arm 41a is provided with an elastic buckle, and one side of the second swing arm 41b is provided with a slot, and the elastic buckle is clamped in the slot, to achieve a detachable connection between the first swing arm 41a and the second swing arm 41b.

The first screw 403a fits the first screw block 432 and the synchronization body 431 of the synchronization slider 43. Specifically, the first outer circumferential surface 408a of the first screw 403a faces the first synchronization side surface, and the first screw 403a can slide along the first synchronization side surface. A part of the first screw block 432 of the synchronization slider 43 is located in the first screw opening of the first screw 403a, and the first screw surface 411a of the first screw 403a fits the first fitting surface 432e of the synchronization slider 43. The first screw surface 411a faces the first fitting surface 432e, and at least a part of the first screw surface 411a abuts against the first fitting surface 432e. The first end wall surface 409a of the first screw 403a abuts against the first connecting surface of the first screw block 432.

The second screw 403b fits the first screw block 432 and the synchronization body 431 of the synchronization slider 43. Specifically, the second outer circumferential surface 408b of the second screw 403b faces the first synchronization side surface, and the second screw 403b can slide along the first synchronization side surface. Another part of the first screw block 432 of the synchronization slider 43 is located in the second screw opening of the second screw 403b, and the second screw surface 411b of the second screw 403b fits the second fitting surface 432f of the synchronization slider 43. The second screw surface 411b faces the second fitting surface 432f, and at least a part of the second screw surface 411b abuts against the second fitting surface 432f. The second end wall surface 409b of the second screw 403b faces the second connecting surface 432b of the first screw block 432, and the second end wall surface 409b is spaced apart from the second connecting surface 432b in the Y-axis direction.

The third adjustment member 46b, the third pre-compression member 45c, the third screw 423a, a part that is of the second screw block 433 and that is provided with the second via hole 433a, the fourth screw 423b, the fourth pre-compression member 45d, the fourth adjustment member 47b, and the second connecting block 435 are located on a same side of the synchronization body 431 and are sequentially arranged in the Y-axis direction. The third adjustment member 46b is a nut. A threaded hole of the third adjustment member 46b, a hollow portion of the third pre-compression member 45c, the third through hole 426a of the third screw 423a, the second via hole 433a of the second screw block 433, the fourth through hole 426b of the fourth screw 423b, a hollow portion of the third pre-compression member 45c, a hollow portion of the fourth adjustment member 47b, and the second penetrating hole 435a of the second connecting block 435 are all coaxial. The second mounting shaft 44b sequentially passes through the threaded hole of the third adjustment member 46b, the hollow portion of the third pre-compression member 45c, the third through hole 426a of the third screw 423a, the second via hole 433a of the second screw block 433, the fourth through hole 426b of the fourth screw 423b, a hollow portion of the fourth pre-compression member 45d, the hollow portion of the fourth adjustment member 47b, and the second penetrating hole 435a of the second connecting block 435. The third screw 423a and the fourth screw 423b can rotate around the second mounting shaft 44b.

The third swing body 421a of the third swing arm 42a fits the fourth swing body 421b of the fourth swing arm 42b. One of the third swing arm 42a and the fourth swing arm 42b is provided with a clamping slot, the other of the third swing arm 42a and the fourth swing arm 42b is provided with a clamping block, and the clamping block is clamped in the clamping slot. The third swing arm 42a and the fourth swing arm 42b are detachably connected by using the clamping slot and the clamping block. A structure is simple, machining is convenient, and costs are low. In this embodiment, the third clamping block 425a of the third swing body 421a is located in the fourth clamping slot 424b of the fourth swing body 421b, and the fourth clamping block 425b of the fourth swing body 421b is located in the third clamping slot 424a of the third swing body 421a. The third clamping slot 424a, the third clamping block 425a, the fourth clamping slot 424b, and the fourth clamping block 425b are all of trapezoidal structures. This can avoid loosening after the third swing body 421a and the fourth swing body 421b fit, and ensure stability of fitting between the third swing body 421a and the fourth swing body 421b.

In another embodiment, one side of third swing arm 42a is provided with an elastic buckle. The elastic buckle is the foregoing clamping block. One side of the fourth swing arm 42b is provided with a slot. The slot is the foregoing clamping slot. The elastic buckle is clamped in the slot, to achieve a detachable connection between the third swing arm 42a and the fourth swing arm 42b.

The third screw 423a fits the second screw block 433 and the synchronization body 431 of the synchronization slider 43. Specifically, the third outer circumferential surface 428a of the third screw 423a faces the second synchronization side surface 431c, and the third screw 423a can slide along the second synchronization side surface 431c. A part of the second screw block 433 of the synchronization slider 43 is located in the third screw opening of the third screw 423a, and the third screw surface 431A of the third screw 423a fits the third fitting surface 433e of the synchronization slider 43. The third screw surface 431A faces the third fitting surface 433e, and at least a part of the third screw surface 431A abuts against the third fitting surface 433e. The third end wall surface 429a of the third screw 423a abuts against the third connecting surface of the second screw block 433.

The fourth screw 423b fits the second screw block 433 and the synchronization body 431 of the synchronization slider 43. Specifically, the fourth outer circumferential surface 428b of the fourth screw 423b faces the second synchronization side surface 431c, and the fourth screw 423b can slide along the second synchronization side surface 431c. Another part of the second screw block 433 of the synchronization slider 43 is located in the fourth screw opening of the fourth screw 423b, and the fourth screw surface 431B of the fourth screw 423b fits the fourth fitting surface 433f of the synchronization slider 43. The fourth screw surface 431B faces the fourth fitting surface 433f, and at least a part of the fourth screw surface 431B abuts against the fourth fitting surface 433f. The fourth end wall surface of the fourth screw 423b faces the fourth connecting surface 433b of the second screw block 433, and the fourth end wall surface is spaced apart from the fourth connecting surface 433b in the Y-axis direction.

In this embodiment, referring to FIG. 4, FIG. 11, and FIG. 12, the first screw 403a of the first swing arm 41a, the second screw 403b of the second swing arm 41b, the third screw 423a of the third swing arm 42a, the fourth screw 423b of the fourth swing arm 42b, the synchronization slider 43, the first mounting shaft 44a, the second mounting shaft 44b, the first pre-compression member 45a, the second pre-compression member 45b, the third pre-compression member 45c, the fourth pre-compression member 45d, the first adjustment member 46a, the third adjustment member 46b, the second adjustment member 47a, and the fourth adjustment member 47b are all located in the first mounting groove 23 of the bearing base 20. The guide bar 233 in the first mounting groove 23 is at least partially located in the guide slot 431e of the synchronization body 431. The first screw 403a, the second screw 403b, the third screw 423a, and the third screw 423a are all slidable and rotatable relative to the synchronization slider 43, and the synchronization slider 43 slides along the guide bar 233, so that the first screw 403a, the second screw 403b, the third screw 423a, and the third screw 423a move synchronously. An end of the synchronization slider 43 in the Y-axis direction is aligned with the first screw 403a of the first swing arm 41a and the third screw 423a of the third swing arm 42a, and another end of the synchronization slider 43 in the Y-axis direction is aligned with the second screw 403b of the second swing arm 41b and the fourth screw 423b of the fourth swing arm 42b.

An end that is of the first mounting shaft 44a and that extends out of the first adjustment member 46a is located in the first mounting hole 231, and an end that is of the first mounting shaft 44a and that extends out of the first penetrating hole 434a of the first connecting block 434 is fastened in the second mounting hole. An end that is of the second mounting shaft 44b and that extends out of the third adjustment member 46b is fastened to the third mounting hole 232, and an end that is of the second mounting shaft 44b and that extends out of the second penetrating hole 435a of the second connecting block 435 is fastened in the fourth mounting hole. Specifically, when the first mounting shaft 44a and the second mounting shaft 44b are mounted, the mounting block 20b and the bearing body 20a forming the second mounting hole and the fourth mounting hole are in a detached state, an end that is of the first mounting shaft 44a and that extends into the threaded hole of the first adjustment member 46a first extends into the first mounting hole 231, and an end that is of the first mounting shaft 44a and that extends out of the first connecting block 434 is located at a part, on the bearing body 20a, forming the second mounting hole. An end that is of the second mounting shaft 44b and that extends into the threaded hole of the third adjustment member 46b first extends into the third mounting hole 232, and an end that is of the second mounting shaft 44b and that extends out of the second connecting block 435 is located at a part, on the bearing body 20a, forming the fourth mounting hole. Then, the mounting block 20b forming the second mounting hole and the fourth mounting hole is assembled to the bearing body 20a, so that the end that is of the first mounting shaft 44a and that extends out of the first connecting block 434 is located in the second mounting hole, and the end that is of the second mounting shaft 44b and that extends out of the second connecting block 435 is located in the fourth mounting hole. A side of the first adjustment member 46a facing away from the first pre-compression member 45a faces one groove wall surface of the first mounting groove 23, and a side of the first connecting block 434 facing away from the second adjustment member 47a faces another groove wall surface of the first mounting groove 23. A side of the third adjustment member 46b facing away from the third pre-compression member 45c faces one groove wall surface of the first mounting groove 23, and a side of the second connecting block 435 facing away from the fourth adjustment member 47b faces another groove side surface of the second mounting groove 24.

The first adjustment member 46a is threadedly connected to the first mounting shaft 44a, and the first adjustment member 46a is rotated, so that when the first adjustment member 46a moves on the first mounting shaft 44a toward or away from the first pre-compression member 45a, a force applied by the first adjustment member 46a to the first pre-compression member 45a can be adjusted, to adjust a pre-tightening force provided by the first pre-compression member 45a for the first swing arm 41a. Specifically, when the first adjustment member 46a is rotated to enable the first adjustment member 46a to move toward the first pre-compression member 45a, the first adjustment member 46a pushes the first pre-compression member 45a, a compression magnitude of the first pre-compression member 45a increases, and a force applied to the first screw 403a of the first swing arm 41a increases, so that a pre-tightening force between the first screw 403a and the first screw block 432 increases, and the first screw surface 411a better abuts against the first fitting surface 432e. When the first adjustment member 46a is rotated to enable the first adjustment member 46a to move away from the first pre-compression member 45a, a force applied by the first adjustment member 46a to the first pre-compression member 45a decreases, a compression magnitude of the first pre-compression member 45a decreases, and a pre-tightening force between the first screw 403a and the first screw block 432 decreases.

The second adjustment member 47a is a circlip. A position at which the second adjustment member 47a is clamped on the first mounting shaft 44a can be changed by an external force, thereby adjusting a force applied by the second adjustment member 47a to the second pre-compression member 45b, to finally adjust a pre-tightening force provided by the second pre-compression member 45b for the second swing arm 41b. Specifically, after the second adjustment member 47a moves close to the second pre-compression member 45b under action of the external force, the force applied by the second adjustment member 47a to the second pre-compression member 45b increases, so that a compression magnitude of the second pre-compression member 45b increases. Further, the force applied by the second pre-compression member 45b to the second screw 403b increases, and a pre-tightening force between the second screw 403b and the first screw block 432 increases, so that the second screw surface 411b better abuts against the second fitting surface 432e. After the second adjustment member 47a moves away from the second pre-compression member 45b under action of the external force, the force applied by the second adjustment member 47a to the second pre-compression member 45b decreases. Therefore, the compression magnitude of the second pre-compression member 45b decreases. In this case, the force applied by the second pre-compression member 45b to the second screw 403b decreases, and the pre-tightening force between the second screw 403b and the first screw block 432 decreases.

It may be understood that the external force applied to the second adjustment member 47a may be applied by an assembler manually or with a tool to remove the second adjustment member 47a from the first mounting shaft 44a. The second adjustment member 47a is then remounted on the first mounting shaft 44a manually or with a tool, and the remounted second adjustment member 47a has a different position on the first mounting shaft 44a in the Y-axis direction than before. Once the second adjustment member 47a is mounted on the first mounting shaft 44a, the position of the second adjustment member 47a on the first mounting shaft 44a does not change during normal folding and unfolding of the rotating mechanism 100. That is, when there is no external force, the position of the second adjustment member 47a on the first mounting shaft 44a is fixed.

The third adjustment member 46b is threadedly connected to the second mounting shaft 44b, and the third adjustment member 46b is rotated, so that when the third adjustment member 46b moves on the second mounting shaft 44b toward or away from the third pre-compression member 45c, a force applied by the third adjustment member 46b to the third pre-compression member 45c can be adjusted, to adjust a pre-tightening force provided by the third pre-compression member 45c for the third swing arm 42a. Specifically, when the third adjustment member 46b is rotated to enable the third adjustment member 46b to move toward the third pre-compression member 45c, the third adjustment member 46b pushes the third pre-compression member 45c, a compression magnitude of the third pre-compression member 45c increases, and a force applied to the third screw 423a of the third swing arm 42a increases, so that a pre-tightening force between the third screw 423a and the second screw block 433 increases, and the third screw surface 431A better abuts against the third fitting surface 433e.

When the third adjustment member 46b is rotated to enable the third adjustment member 46b to move away from the third pre-compression member 45c, a force applied by the third adjustment member 46b to the third pre-compression member 45c decreases, a compression magnitude of the third pre-compression member 45c decreases, and a pre-tightening force between the third screw 423a and the second screw block 433 decreases. Forces applied to the third swing body 421a, the fourth swing body 421b, and the fourth screw 423b also decrease, a compression magnitude of the fourth pre-compression member 45d decreases, and a pre-tightening force between the fourth screw 423b and the second screw block 433 decreases.

The fourth adjustment member 47b is a circlip. A position at which the fourth adjustment member 47b is clamped on the second mounting shaft 44b can be changed by an external force, thereby adjusting a force applied by the fourth adjustment member 47b to the fourth pre-compression member 45d, to finally adjust a pre-tightening force provided by the fourth pre-compression member 45d for the fourth swing arm 42b. Specifically, when the fourth adjustment member 47b moves toward the fourth pre-compression member 45d under the action of the external force, the force applied by the fourth adjustment member 47b to the fourth pre-compression member 45d increases. Therefore, the compression magnitude of the fourth pre-compression member 45d increases, the force applied by the fourth pre-compression member 45d to the fourth screw 423b increases, and the pre-tightening force between the fourth screw 423b and the second screw block 433 increases, so that the fourth screw surface 431B better abuts against the fourth fitting surface 433f. When the fourth adjustment member 47b moves away from the fourth pre-compression member 45d under the action of the external force, the force applied by the fourth adjustment member 47b to the fourth pre-compression member 45d decreases. Therefore, the compression magnitude of the fourth pre-compression member 45d decreases, the force applied by the fourth pre-compression member 45d to the fourth screw 423b decreases, and the pre-tightening force between the fourth screw 423b and the second screw block 433 decreases.

It may be understood that the external force applied to the fourth adjustment member 47b may be applied by an assembler manually or with a tool to remove the fourth adjustment member 47b from the second mounting shaft 44b. The fourth adjustment member 47b is then remounted on the second mounting shaft 44b manually or with a tool, and the remounted fourth adjustment member 47b has a different position on the first mounting shaft 44a in the Y-axis direction than before. Once the fourth adjustment member 47b is mounted on the second mounting shaft 44b, the position of the fourth adjustment member 47b on the second mounting shaft 44b does not change during normal folding and unfolding of the rotating mechanism 100. That is, when there is no external force, the position of the fourth adjustment member 47b on the second mounting shaft 44b is fixed.

The first connecting body 402a of the first swing arm 41a and the second connecting body 402b of the second swing arm 41b extend out of the first mounting groove 23 from one side of the first mounting groove 23, and the first swing body 401a of the first swing arm 41a and the second swing body 401b of the second swing arm 41b are located in the first synchronization sliding groove 112 of the first fastening plate 11. The first swing body 401a and the second swing body 401b may slide inside the first synchronization sliding groove 112.

The third connecting body 422a of the third swing arm 42a and the fourth connecting body 422b of the fourth swing arm 42b extend out of the first mounting groove 23 from another side of the first mounting groove 23, and the third swing body 421a of the third swing arm 42a and the fourth swing body 421b of the fourth swing arm 42b are located in the second synchronization sliding groove 122 of the second fastening plate 12. The third swing body 421a and the fourth swing body 421b may slide inside the second synchronization sliding groove 122.

In this embodiment, referring to FIG. 4, FIG. 16, and FIG. 17, a part of the first sliding member 53 is located between the first rotating cylinder 512a and the second rotating cylinder 512b, and another part of the first sliding member 53 is located between the third rotating cylinder 522a and the fourth rotating cylinder 522b. A part of the second sliding member 54 is located between the first rotating cylinder 512a and the second rotating cylinder 512b, and another part of the second sliding member 54 is located between the third rotating cylinder 522a and the fourth rotating cylinder 522b. The first concave-convex wheel 512c is engaged with the first fitting wheel 532, the second concave-convex wheel 512d is engaged with the second fitting wheel 542, the third concave-convex wheel 522c is engaged with the third fitting wheel 533, and the fourth concave-convex wheel 522d is engaged with the fourth fitting wheel 543. That is, the first protrusion is located within the first fitting recess and the first fitting protrusion is located within the first recess; the second protrusion is located within the second fitting recess and the second fitting protrusion is located within the second recess; the third protrusion is located within the third fitting recess and the third fitting protrusion is located within the third recess; and the fourth protrusion is located within the fourth fitting recess and the fourth fitting protrusion is located within the fourth recess. A quantity, distribution, shapes, and sizes of the first protrusion to the fourth protrusion are the same as those of the first fitting protrusion to the fourth fitting protrusion. Therefore, the first concave-convex wheel 512c, the second concave-convex wheel 512d, the third concave-convex wheel 522c, and the fourth concave-convex wheel 522d are respectively engaged with the first fitting wheel 532, the second fitting wheel 542, the third fitting wheel 533, and the fourth fitting wheel 543, and stability is high.

The first elastic member 551, the third elastic member 553, the fourth elastic member 554, and the second elastic member 552 are sequentially arranged in the X-axis direction, and the first elastic member 551, the third elastic member 553, the fourth elastic member 554, and the second elastic member 552 are located between the first sliding member 53 and the second sliding member 54. Two ends of each of the first elastic member 551, the third elastic member 553, the fourth elastic member 554, and the second elastic member 552 respectively abut against the first sliding member 53 and the second sliding member 54.

The first rotating hole 512e, the second rotating hole 512f, the first connecting hole 534, the second connecting hole 544, the first mounting hole 231, and the second mounting hole are coaxial. The third rotating hole 522e, the fourth rotating hole 522f, the third connecting hole 535, the fourth connecting hole 545, the third mounting hole 232, and the fourth mounting hole are coaxial. The fifth connecting hole 536 and the sixth connecting hole 546 are coaxial, and the seventh connecting hole 537 and the eighth connecting hole 547 are coaxial. The first connecting rod 56a sequentially passes through the first rotating hole 512e, the first connecting hole 534, the hollow portion of the first elastic member 551, the second connecting hole 544, and the second rotating hole 512f, and two ends of the first connecting rod 56a are respectively fastened in the first mounting hole 231 and the second mounting hole. The second connecting rod 56b sequentially passes through the third rotating hole 522e, the third connecting hole 535, the hollow portion of the second elastic member 552, the fourth connecting hole 545, and the fourth rotating hole 522f, and two ends of the second connecting rod 56b are respectively fastened in the third mounting hole 232 and the fourth mounting hole. The third connecting rod 56c passes through the hollow portion of the third elastic member 553, and two ends of the third connecting rod 56c are respectively fastened in the fifth connecting hole 536 and the sixth connecting hole 546. The fourth connecting rod 56d passes through the hollow portion of the fourth elastic member 554, and two ends of the fourth connecting rod 56d are respectively fastened in the seventh connecting hole 537 and the eighth connecting hole 547.

In other words, the first elastic member 551 is sleeved on the first connecting rod 56a, the second elastic member 552 is sleeved on the second connecting rod 56b, the third elastic member 553 is sleeved on the third connecting rod 56c, and the fourth elastic member 554 is sleeved on the fourth connecting rod 56d. Two ends of each of the first elastic member 551, the second elastic member 552, the third elastic member 553, and the fourth elastic member 554 are pre-compressed by the first sliding member 53 and the second sliding member 54, to make the first elastic member 551, the second elastic member 552, the third elastic member 553, and the fourth elastic member 554 provide a pre-tightening force for the first fastening plate 11 and the second fastening plate 12, so that the first fastening plate 11 and the second fastening plate 12 can be maintained in an unfolded state or a folded state.

In this embodiment, at least a part of the first rotating body 512 of the first damping swing arm 51, at least a part of the second rotating body 522 of the second damping swing arm 52, the first sliding member 53, the second sliding member 54, the first elastic member 551, the second elastic member 552, the third elastic member 553, the fourth elastic member 554, the first connecting rod 56a, the second connecting rod 56b, the third connecting rod 56c, and the fourth connecting rod 56d are all located within the second mounting groove 24 of the bearing base 20. The part of the first connecting rod 56a protruding out of the first rotating cylinder 512a is fastened in the first fastener hole 242, and the part of the first connecting rod 56a protruding out of the second rotating cylinder 512b is fastened in the second fastener hole.

A part of the guide bar 241 is located in the first guide groove 538 and another part of the guide bar 241 is located in the second guide groove 548, and both the first slider 531 and the second slider 541 can move along the guide bar 241, so that the guide bar 241 guides movement of the first sliding member 53 and the second sliding member 54 in the Y-axis direction, thereby preventing the first sliding member 53 and the second sliding member 54 from shaking during movement in the Y-axis direction, so that the movement of the first sliding member 53 and the second sliding member 54 is more stable.

The first sliding body 511 of the first damping swing arm 51 is rotatably connected to the first fastening plate 11. Specifically, at least a part of the first sliding arm 514 and the first sliding cylinder 516 are located within the first damping sliding groove 113, and at least a part of the second sliding arm 515 and the second sliding cylinder 517 are located within the second damping sliding groove 114. In other words, a part of the first guide slider 115 is located between the first sliding arm 514 and the second sliding arm 515, and another part of the first guide slider 115 is located between the first sliding cylinder 516 and the second sliding cylinder 517. The first connecting shaft passes through the first guide sliding groove 116, and two ends of the first connecting shaft are respectively fastened in the first sliding hole 516a and the second sliding hole 517a. The first connecting shaft can slide and rotate within the first guide sliding groove 116 to enable the first sliding cylinder 516 and the second sliding cylinder 517 to slide and rotate, thereby enabling the first damping swing arm 51 to slide and rotate relative to the first fastening plate 11.

When the first connecting shaft is mounted, the first sliding cylinder 516 and the second sliding cylinder 517 are first placed in the first avoidance groove 117, then the first connecting shaft sequentially passes from the first avoidance groove 117 through the first sliding hole 516a, the first guide groove 538, and the second sliding hole 517a, and then the first sliding cylinder 516 and the second sliding cylinder 517 are respectively moved to be located in the first damping sliding groove 113 and the second damping sliding groove 114.

The second sliding body 521 of the second damping swing arm 52 is rotatably connected to the second fastening plate 12. Specifically, at least a part of the third sliding arm 524 and the third sliding cylinder 526 are located within the third damping sliding groove 123, and at least a part of the fourth sliding arm 525 and the fourth sliding cylinder 527 are located within the fourth damping sliding groove 124. In other words, a part of the second guide slider 125 is located between the third sliding arm 524 and the fourth sliding arm 525, and another part of the second guide slider 125 is located between the third sliding cylinder 526 and the fourth sliding cylinder 527. The second connecting shaft passes through the second guide sliding groove 126, and two ends of the second connecting shaft are respectively fastened in the third sliding hole 526a and the fourth sliding hole 527a. The second connecting shaft can slide and rotate within the second guide sliding groove 126 to enable the third sliding cylinder 526 and the fourth sliding cylinder 527 to slide and rotate, thereby enabling the second damping swing arm 52 to slide and rotate relative to the second fastening plate 12.

When the second connecting shaft is mounted, the third sliding cylinder 526 and the fourth sliding cylinder 527 are first placed in the second avoidance groove 127, then the second connecting shaft sequentially passes from the second avoidance groove 127 through the third sliding hole 526a, the second guide groove 548, and the fourth sliding hole 527a, and then the third sliding cylinder 526 and the fourth sliding cylinder 527 are respectively moved to be located in the third damping sliding groove 123 and the fourth damping sliding groove 124.

In this embodiment, when the rotating mechanism 100 is in the unfolded state, an angle between the first fastening plate 11 and the second fastening plate 12 is 180 degrees (including a tolerance range), and an angle between the first main swing arm 31 and the second main swing arm 32 is 180 degrees (including a tolerance range). An angle between the first synchronization swing arm 41 and the second synchronization swing arm 42 is 180 degrees (including a tolerance range). Specifically, an angle between the first swing arm 41a and the third swing arm 42a is 180 degrees, and an angle between the second swing arm 41b and the fourth swing arm 42b is 180 degrees. An angle between the first damping swing arm 51 and the second damping swing arm 52 is 180 degrees (including a tolerance range).

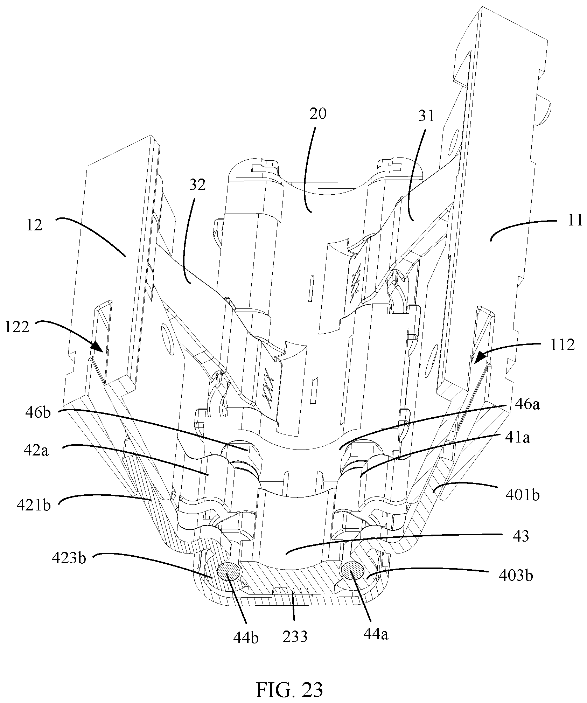

Refer to FIG. 22 and FIG. 23. FIG. 22 is a structural diagram in which the rotating mechanism 100 shown in FIG. 4 is switched from an unfolded state to a folded state, and FIG. 23 is a partial cross-sectional view of the rotating mechanism 100 shown in FIG. 22.

When the rotating mechanism 100 is switched from the unfolded state to the folded state, the first fastening plate 11 rotates counterclockwise relative to the bearing base 20. The first main sliding body 312 of the first main swing arm 31 slides and rotates counterclockwise in the first main sliding groove 21, and the first main rotating body 311 of the first main swing arm 31 rotates counterclockwise around the first fastening shaft 33. The first swing body 401a of the first swing arm 41a and the second swing body 401b of the second swing arm 41b slide and rotate counterclockwise in the first synchronization sliding groove 112. The first screw 403a of the first swing arm 41a and the second screw 403b of the second swing arm 41b rotate counterclockwise around the first mounting shaft 44a. During rotation of the first screw 403a, the first screw surface 411a gradually pushes the first fitting surface 432e, so that the synchronization slider 43 slides along the guide bar 233 in the negative direction of the Y axis. In this case, the first screw block 432 gradually slides out of the first screw opening of the first screw 403a. During rotation of the second screw 403b, the second fitting surface 432f slides along the second screw surface 411b, and the first screw block 432 gradually slides into the second screw opening.

When the synchronization slider 43 slides in the negative direction of the Y axis, the fourth fitting surface 433f gradually pushes the fourth screw surface 431B, the third fitting surface 433e slides along the third screw surface 431A, and the second screw block 433 gradually slides out of the third screw opening and slides into the fourth screw opening. In this way, the fourth screw 423b of the fourth swing arm 42b rotates clockwise around the second mounting shaft 44b, and the third screw 423a of the third swing arm 42a rotates clockwise around the second mounting shaft 44b. The third swing body 421a of the third swing arm 42a and the fourth swing body 421b of the fourth swing arm 42b slide and rotate clockwise in the second synchronization sliding groove 122. Then, the second fastening plate 12 is driven to rotate clockwise, so that the second fastening plate 12 and the first fastening plate 11 are folded synchronously.

The first sliding body 511 of the first damping swing arm 51 rotates counterclockwise around the first connecting shaft, and the first connecting shaft slides in the first guide sliding groove 116, to drive the first sliding body 511 to slide in the first guide sliding groove 116. The first rotating body 512 of the first damping swing arm 51 rotates counterclockwise around the first connecting rod 56a to gradually move the first protrusion out of the first fitting recess, gradually move the first fitting protrusion out of the first recess, gradually move the second protrusion out of the second fitting recess, and gradually move the second fitting protrusion out of the second recess. In this case, positions of the first rotating cylinder 512a and the second rotating cylinder 512b in the Y-axis direction are unchanged, the first concave-convex wheel 512c pushes the first fitting wheel 532, and the second concave-convex wheel 512d pushes the third fitting wheel 533, so that the first fitting wheel 532 and the second fitting wheel 542 approach each other, the first slider 531 and the second slider 541 approach each other, and two ends of each of the first elastic member 551, the second elastic member 552, the third elastic member 553, and the fourth elastic member 554 are synchronously compressed, thereby providing a damping force for the first fastening plate 11.

When the rotating mechanism 100 is switched from the unfolded state to the folded state, the second fastening plate 12 rotates clockwise relative to the bearing base 20. The second main sliding body 322 of the second main swing arm 32 slides and rotates clockwise in the second main sliding groove 22, and the second main rotating body 321 of the second main swing arm 32 rotates clockwise around the second fastening shaft 34. The third swing body 421a of the third swing arm 42a and the fourth swing body 421b of the fourth swing arm 42b slide and rotate clockwise in the second synchronization sliding groove 122. The third screw 423a of the third swing arm 42a and the fourth screw 423b of the fourth swing arm 42b rotate clockwise around the second mounting shaft 44b. During rotation of the third screw 423a, the third screw surface 431A gradually pushes the third fitting surface 433e, so that the synchronization slider 43 slides along the guide bar 233 in the negative direction of the Y axis. During rotation of the fourth screw 423b, the fourth fitting surface 433f slides along the fourth screw surface 431B. The second screw block 433 gradually slides out of the third screw opening of the third screw 423a and gradually slides into the fourth screw opening.

When the synchronization slider 43 slides along the guide bar 233 in the negative direction of the Y axis, the second fitting surface 432f gradually pushes the second screw surface 411b, the first fitting surface 432e of the first screw block 432 slides along the first screw surface 411a of the first screw 403a, and the first screw block 432 gradually slides out of the first screw opening of the first screw 403a and gradually slides into the second screw opening. The first swing body 401a of the first swing arm 41a and the second swing body 401b of the second swing arm 41b slide and rotate counterclockwise in the first synchronization sliding groove 112. The first screw 403a of the first swing arm 41a and the second screw 403b of the second swing arm 41b rotate counterclockwise around the first mounting shaft 44a. Then, the first fastening plate 11 is driven to rotate counterclockwise, so that the first fastening plate 11 and the second fastening plate 12 are folded synchronously.

The first swing body 401a and the second swing body 401b are connected, so that the first swing arm 41a and the second swing arm 41b move synchronously. The third swing body 421a and the fourth swing body 421b are connected, so that the third swing arm 42a and the fourth swing arm 42b move synchronously. The first screw block 432 of the synchronization slider 43 is connected to the first screw 403a and the second screw 403b, and the second screw block 433 of the synchronization slider 43 fits the third screw 423a and the fourth screw 423b, so that the first synchronization swing arm 41 and the second synchronization swing arm 42 can rotate simultaneously, thereby achieving synchronicity of movement of the first fastening plate 11 and the second fastening plate 12, and ensuring synchronicity of movement of the first housing and the second housing.

The second sliding body 521 of the second damping swing arm 52 rotates counterclockwise around the second connecting shaft, and the second connecting shaft slides in the second guide sliding groove 126, to drive the second sliding body 521 to slide in the second guide sliding groove 126. The second rotating body 522 of the second damping swing arm 52 rotates clockwise around the second connecting rod 56b to gradually move the third protrusion out of the third fitting recess, gradually move the third fitting protrusion out of the third recess, gradually move the fourth protrusion out of the fourth fitting recess, and gradually move the fourth fitting protrusion out of the fourth recess. In this case, positions of the third rotating cylinder 522a and the fourth rotating cylinder 522b in the Y-axis direction are unchanged, the third concave-convex wheel 522c pushes the third fitting wheel 533, and the fourth concave-convex wheel 522d pushes the fourth fitting wheel 543, so that the third fitting wheel 533 and the fourth fitting wheel 543 approach each other, the first slider 531 and the second slider 541 approach each other, and two ends of each of the first elastic member 551, the second elastic member 552, the third elastic member 553, and the fourth elastic member 554 are synchronously compressed, thereby providing a damping force for the second fastening plate 12.

That is, when the rotating mechanism 100 is switched from the unfolded state to the folded state, the first sliding member 53 and the second sliding member 54 slide toward each other under the drive of the first damping swing arm 51 and the second damping swing arm 52. In this case, two ends of each of the first elastic member 551, the second elastic member 552, the third elastic member 553, and the fourth elastic member 554 are gradually compressed synchronously, and in a process in which the first elastic member 551, the second elastic member 552, the third elastic member 553, and the fourth elastic member 554 are gradually compressed, a damping force can be provided for the first fastening plate 11 and the second fastening plate 12, so that a user achieves a damping hand feeling. The damping force is double that of an elastic member with a single end being compressed, and the damping hand feeling is better.

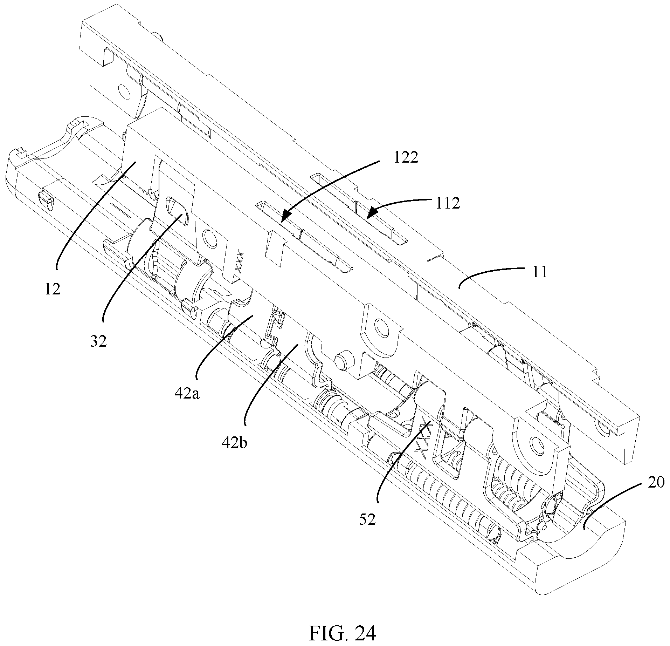

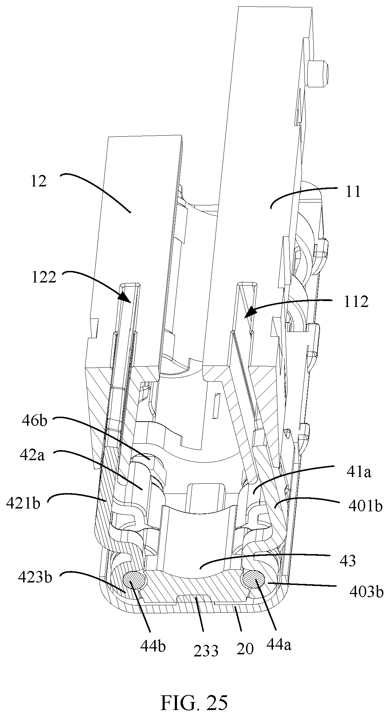

Refer to FIG. 24 and FIG. 25. FIG. 24 is a diagram of a structure of the rotating mechanism 100 shown in FIG. 4 in a folded state, and FIG. 25 is a partial cross-sectional view of the rotating mechanism 100 shown in FIG. 23.

When the rotating mechanism 100 is in the folded state, an angle between the first fastening plate 11 and the second fastening plate 12 is 0 degrees (including a tolerance range), and an angle between the first main swing arm 31 and the second main swing arm 32 is 0 degrees (including a tolerance range). An angle between the first synchronization swing arm 41 and the second synchronization swing arm 42 is 0 degrees (including a tolerance range). Specifically, an angle between the first swing arm 41a and the third swing arm 42a is 0 degrees, and an angle between the second swing arm 41b and the fourth swing arm 42b is 0 degrees. An angle between the first damping swing arm 51 and the second damping swing arm 52 is 0 degrees (including a tolerance range). The first protrusion of the first concave-convex wheel 512c abuts against an end of the first fitting protrusion of the first fitting wheel 532. The second protrusion of the second concave-convex wheel 512d abuts against an end of the second fitting protrusion of the second fitting wheel 542. The third protrusion of the third concave-convex wheel 522c abuts against an end of the third fitting protrusion of the third fitting wheel 533. The fourth protrusion of the fourth concave-convex wheel 522d abuts against an end of the fourth fitting protrusion of the fourth fitting wheel 543. An end of the synchronization slider 43 in the Y-axis direction is staggered with the first screw 403a of the first swing arm 41a and the third screw 423a of the third swing arm 42a, and an end of the synchronization slider 43 is aligned with middle regions of the first screw 403a of the first swing arm 41a and the third screw 423a of the third swing arm 42a. Another end of the synchronization slider 43 in the Y-axis direction is staggered with the second screw 403b of the second swing arm 41b and the fourth screw 423b of the fourth swing arm 42b, and another end of the synchronization slider 43 is aligned with the first connecting block 434 and the second connecting block 435.

When the rotating mechanism 100 is switched from the folded state to the unfolded state, the first fastening plate 11 rotates clockwise relative to the bearing base 20. The first main sliding body 312 of the first main swing arm 31 slides and rotates clockwise in the first main sliding groove 21, and the first main rotating body 311 of the first main swing arm 31 rotates clockwise around the first fastening shaft 33. The first swing body 401a of the first swing arm 41a and the second swing body 401b of the second swing arm 41b slide and rotate clockwise in the first synchronization sliding groove 112. The first screw 403a of the first swing arm 41a and the second screw 403b of the second swing arm 41b rotate clockwise around the first mounting shaft 44a. During rotation of the second screw 403b, the second screw surface 411b gradually pushes the second fitting surface 432f, so that the synchronization slider 43 slides along the guide bar 233 in the positive direction of the Y axis. During rotation of the first screw 403a, the first screw surface 411a slides along the first fitting surface 432e. In this case, the first screw block 432 gradually slides out of the second screw opening, and the first screw block 432 gradually slides into the first screw opening of the first screw 403a.

When the synchronization slider 43 slides along the guide bar 233 in the positive direction of the Y axis, the third fitting surface 433e gradually pushes the third screw surface 431A, the fourth fitting surface 433f slides along the fourth screw surface 431B, and the second screw block 433 gradually slides out of the fourth screw opening and slides into the third screw opening. The third screw 423a of the third swing arm 42a rotates counterclockwise around the second mounting shaft 44b, so that the fourth screw 423b of the fourth swing arm 42b rotates counterclockwise around the second mounting shaft 44b. The third swing body 421a of the third swing arm 42a and the fourth swing body 421b of the fourth swing arm 42b slide and rotate counterclockwise in the second synchronization sliding groove 122. Then, the second fastening plate 12 is driven to rotate counterclockwise, so that the second fastening plate 12 and the first fastening plate 11 are folded synchronously.

The first sliding body 511 of the first damping swing arm 51 rotates clockwise around the first connecting shaft, and the first connecting shaft slides in the first guide sliding groove 116, to drive the first sliding body 511 to slide in the first guide sliding groove 116. The first rotating body 512 of the first damping swing arm 51 rotates clockwise around the first connecting rod 56a to gradually move the first protrusion into the first fitting recess, gradually move the first fitting protrusion into the first recess, gradually move the second protrusion into the second fitting recess, and gradually move the second fitting protrusion into the second recess. In this case, positions of the first rotating cylinder 512a and the second rotating cylinder 512b in the Y-axis direction are unchanged, the first fitting wheel 532 and the second fitting wheel 542 move away from each other, the first slider 531 and the second slider 541 move away from each other, and two ends of each of the first elastic member 551, the second elastic member 552, the third elastic member 553, and the fourth elastic member 554 are synchronously released, thereby providing a damping force for the first fastening plate 11.

When the rotating mechanism 100 is switched from the folded state to the unfolded state, the second fastening plate 12 rotates counterclockwise relative to the bearing base 20. The second main sliding body 322 of the second main swing arm 32 slides and rotates counterclockwise in the second main sliding groove 22, and the second main rotating body 321 of the second main swing arm 32 rotates counterclockwise around the second fastening shaft 34. The third swing body 421a of the third swing arm 42a and the fourth swing body 421b of the fourth swing arm 42b slide and rotate counterclockwise in the second synchronization sliding groove 122. The third screw 423a of the third swing arm 42a and the fourth screw 423b of the fourth swing arm 42b rotate counterclockwise around the second mounting shaft 44b. During rotation of the third screw 423a, the fourth screw surface 431B gradually pushes the fourth fitting surface 433f, so that the synchronization slider 43 slides along the guide bar 233 in the positive direction of the Y axis. In this case, during rotation of the fourth screw 423b, the third screw surface 431A slides along the third fitting surface 433e. In this case, the second screw block 433 gradually slides out of the fourth screw opening and gradually slides into the third screw opening of the third screw 423a.

In this way, when the synchronization slider 43 slides along the guide bar 233 in the positive direction of the Y axis, the first fitting surface 432e gradually pushes the first screw surface 411, and the second fitting surface 432f slides along the second screw surface 411b. The first screw block 432 gradually slides out of the second screw opening of the second screw 403b and gradually slides into the first screw opening of the first screw 403a. The first swing body 401a of the first swing arm 41a and the second swing body 401b of the second swing arm 41b slide and rotate clockwise in the first synchronization sliding groove 112. The first screw 403a of the first swing arm 41a and the second screw 403b of the second swing arm 41b rotate clockwise around the first mounting shaft 44a. Then, the first fastening plate 11 is driven to rotate clockwise, so that the first fastening plate 11 and the second fastening plate 12 are folded synchronously.

The first swing body 401a and the second swing body 401b are connected, so that the first swing arm 41a and the second swing arm 41b move synchronously. The third swing body 421a and the fourth swing body 421b are connected, so that the third swing arm 42a and the fourth swing arm 42b move synchronously. The first screw block 432 of the synchronization slider 43 is connected to the first screw 403a and the second screw 403b, and the second screw block 433 of the synchronization slider 43 fits the third screw 423a and the fourth screw 423b, so that the first synchronization swing arm 41 and the second synchronization swing arm 42 can rotate simultaneously, thereby achieving synchronicity of movement of the first fastening plate 11 and the second fastening plate 12, and ensuring synchronicity of movement of the first housing and the second housing.

The second sliding body 521 of the second damping swing arm 52 rotates counterclockwise around the second connecting shaft, and the second connecting shaft slides in the second guide sliding groove 126, to drive the second sliding body 521 to slide in the second guide sliding groove 126. The second rotating body 522 of the second damping swing arm 52 rotates counterclockwise around the second connecting rod 56b to gradually move the third protrusion into the third fitting recess, gradually move the third fitting protrusion into the third recess, gradually move the fourth protrusion into the fourth fitting recess, and gradually move the fourth fitting protrusion into the fourth recess. In this case, positions of the third rotating cylinder 522a and the fourth rotating cylinder 522b in the Y-axis direction are unchanged, the third fitting wheel 533 and the fourth fitting wheel 543 move away from each other, the first slider 531 and the second slider 541 move away from each other, and two ends of each of the first elastic member 551, the second elastic member 552, the third elastic member 553, and the fourth elastic member 554 are synchronously released, thereby providing a damping force for the second fastening plate 12.

That is, when the rotating mechanism 100 is switched from the folded state to the unfolded state, the first sliding member 53 and the second sliding member 54 slide away from each other under the drive of the first damping swing arm 51 and the second damping swing arm 52. In this case, two ends of each of the first elastic member 551, the second elastic member 552, the third elastic member 553, and the fourth elastic member 554 are gradually released synchronously, and in a process in which the first elastic member 551, the second elastic member 552, the third elastic member 553, and the fourth elastic member 554 are gradually released, a damping force can be provided for the first fastening plate 11 and the second fastening plate 12, so that a user achieves a damping hand feeling. The damping force is double that of an elastic member with a single end being released, and the damping hand feeling is better.

In this embodiment, in the synchronization assembly 40, the first synchronization swing arm 41 is divided into two parts: the first swing arm 41a and the second swing arm 41b, and the first swing arm 41a and the second swing arm 41b are connected by a trapezoidal structure, so that the first swing arm 41a and the second swing arm 41b are reliably connected. In other words, the first swing arm 41a and the second swing arm 41b are detachably connected in an assembled state, and the first swing arm 41a and the second swing arm 41b are in a separated state when not being assembled. Therefore, the first swing arm 41a and the second swing arm 41b are independently machined. Dimensions of the first swing arm 41a and the second swing arm 41b in the length direction of the rotating mechanism are reduced in comparison with an integrated swing arm. Therefore, machining difficulty of the first swing arm 41a and the second swing arm 41b is reduced, machining efficiency is improved, and costs are reduced. In particular, after the first swing arm 41a and the second swing arm 41b are separated, machining can be performed by using a mold. Machining efficiency and machining precision are significantly improved in comparison with the conventional CNC machining manner.

Specifically, in the first swing arm 41a, the first through hole 406a of the first screw 403a penetrates the first screw 403a in the Y-axis direction. The first through hole 406a is a circular hole. In the Y-axis direction, an aperture of the first through hole 406a is always uniform. In other words, in the Y-axis direction, a radian of the first inner circumferential surface 407a is always uniform, and no local protrusion or local recess or the like occurs. Therefore, the first through hole 406a can be machined by using a mold, to implement a solution of machining the first screw 403a by using a mold. When the mold is used for machining, demolding may be performed in the Y-axis direction.

In the second swing arm 41b, the second through hole 406b of the second screw 403b penetrates the first screw 403a in the Y-axis direction. The second through hole 406b is a circular hole. In the Y-axis direction, an aperture of the second through hole 406b is always uniform. In other words, in the Y-axis direction, a radian of the second inner circumferential surface 407b is always uniform, and no local protrusion or local recess or the like occurs. Therefore, the second through hole 406b can be machined by using a mold, to implement a solution of machining the second screw 403b by using a mold. When the mold is used for machining, demolding may be performed in the Y-axis direction.

In the synchronization assembly 40, the second synchronization swing arm 42 is divided into two parts: the third swing arm 42a and the fourth swing arm 42b, and the third swing arm 42a and the fourth swing arm 42b are connected by a trapezoidal structure, so that the third swing arm 42a and the fourth swing arm 42b are reliably connected. In other words, the third swing arm 42a and the fourth swing arm 42b are detachably connected in an assembled state, and the third swing arm 42a and the fourth swing arm 42b are in a separated state when not being assembled. Therefore, the third swing arm 42a and the fourth swing arm 42b are independently machined. Dimensions of the third swing arm 42a and the fourth swing arm 42b in the length direction of the rotating mechanism are reduced in comparison with an integrated swing arm. Therefore, machining difficulty of the third swing arm 42a and the fourth swing arm 42b is reduced, machining efficiency is improved, and costs are reduced. In particular, after the third swing arm 42a and the fourth swing arm 42b are separated, machining can be performed by using a mold. Machining efficiency and machining precision are significantly improved in comparison with the conventional CNC machining manner.

Specifically, in the third swing arm 42a, the third through hole 426a of the third screw 423a penetrates the first screw 403a in the Y-axis direction. The third through hole 426a is a circular hole. In the Y-axis direction, an aperture of the third through hole 426a is always uniform. In other words, in the Y-axis direction, a radian of the third inner circumferential surface 427a is always uniform, and no local protrusion or local recess or the like occurs. Therefore, the third through hole 426a can be machined by using a mold, to implement a solution of machining the third screw 423a by using a mold. When the mold is used for machining, demolding may be performed in the Y-axis direction.

In the fourth swing arm 42b, the fourth through hole 426b of the fourth screw 423b penetrates the first screw 403a in the Y-axis direction. The fourth through hole 426b is a circular hole. In the Y-axis direction, an aperture of the fourth through hole 426b is always uniform. In other words, in the Y-axis direction, a radian of the fourth inner circumferential surface 427b is always uniform, and no local protrusion or local recess or the like occurs. Therefore, the fourth through hole 426b can be machined by using a mold, to implement a solution of machining the fourth screw 423b by using a mold. When the mold is used for machining, demolding may be performed in the Y-axis direction.

That is, the first synchronization swing arm 41 and the second synchronization swing arm 42 may be machined by using a mold. In a conventional integrated swing arm solution, demolding cannot be achieved in the Y-axis direction due to existence of a screw structure, and machining can be performed in only a CNC manner. However, the CNC machining manner has high costs, low efficiency, and low precision. The structure in this application can be machined by using a mold, so that costs are reduced, machining efficiency is improved, and precision is high.

In this embodiment, the first screw block 432 and the second screw block 433 of the synchronization slider 43 may also be machined by using a mold. Specifically, the part of the first inner wall surface 432c forming the hole wall surface of the first via hole 432a and a remaining part of the first inner wall surface 432c are connected in the Y-axis direction, and the part of the first inner wall surface 432c forming the hole wall surface of the first via hole 432a and the remaining part of the first inner wall surface 432c have consistent bending radians in the X-axis direction. That is, the first via hole 432a is a circular hole, and an aperture remains unchanged. Therefore, when the first via hole 432a is machined by using a mold, demolding can be performed in the Y-axis direction, so that the first via hole 432a is machined by using the mold, and the first fitting surface 432e and the first via hole 432a can be synchronously machined. The second fitting surface 432f is flush with a slot wall surface of the first demolding slot in the Z-axis direction. When the second fitting surface 432f is machined by using a mold, demolding can be performed in the Z-axis direction, so that the second fitting surface 432f is machined by using the mold. Therefore, the first screw block 432 can be made by using a mold.

The part of the second inner wall surface 433c forming the hole wall surface of the second via hole 433a and a remaining part of the second inner wall surface 433c are connected in the Y-axis direction, and the part of the second inner wall surface 433c forming the hole wall surface of the second via hole 433a and the remaining part of the second inner wall surface 433c have consistent bending radians in the X-axis direction. That is, the second via hole 433a is a circular hole, and an aperture remains unchanged. Therefore, when the second via hole 433a is machined by using a mold, demolding can be performed in the Y-axis direction, so that the second via hole 433a is machined by using the mold, and the third fitting surface 433e and the second via hole 433a can be synchronously machined. The fourth fitting surface 433f is flush with a slot wall surface of the second demolding slot 431d in the Z-axis direction. When the fourth fitting surface 433f is machined by using a mold, demolding can be performed in the Z-axis direction, so that the fourth fitting surface 433f is machined by using the mold. Therefore, the second screw block 433 can be made by using a mold.

In conclusion, in this embodiment, the first synchronization swing arm 41, the second synchronization swing arm 42, and the synchronization slider 43 of the synchronization assembly 40 can be machined by using a mold. Compared with a conventional structure that can be machined through only CNC, the structure of the synchronization slider 43 in this application can be machined by using a mold, so that costs are reduced, machining efficiency is improved, and precision is high.

In this embodiment, a stroke of pushing the first elastic member 551, the second elastic member 552, the third elastic member 553, and the fourth elastic member 554 by the first sliding member 53 and the second sliding member 54 is specifically as follows: It is assumed that heights of the first protrusion to the fourth protrusion and the first fitting protrusion to the fourth fitting protrusion in the Y-axis direction are all U. When the first protrusion of the first concave-convex wheel 512c, the second protrusion of the second concave-convex wheel 512d, the third protrusion of the third concave-convex wheel 522c, and the fourth protrusion of the fourth concave-convex wheel 522d are respectively located in the first fitting recess of the first fitting wheel 532, the second fitting recess of the second fitting wheel 542, the third fitting recess of the third fitting wheel 533, and the fourth fitting recess of the fourth fitting wheel 543, a distance between a surface of the first slider 531 away from the first concave-convex wheel 512c and a surface of the second slider 541 away from the third concave-convex wheel 522c is V

When the first protrusion of the first concave-convex wheel 512c, the second protrusion of the second concave-convex wheel 512d, the third protrusion of the third concave-convex wheel 522c, and the fourth protrusion of the fourth concave-convex wheel 522d respectively abut against ends of the first fitting protrusion of the first fitting wheel 532, the second fitting protrusion of the second fitting wheel 542, the third fitting protrusion of the third fitting wheel 533, and the fourth fitting protrusion of the fourth fitting wheel 543, a distance between a surface of the first slider 531 away from the first concave-convex wheel 512c and a surface of the second slider 541 away from the third concave-convex wheel 522c is W, and W=V-U. In other words, a distance by which the first sliding member 53 moves in the negative direction of the Y axis is U, and a distance by which the second sliding member 54 moves in the positive direction of the Y axis is U.

Lengths of the first elastic member 551 and the second elastic member 552 not being compressed are equal to the distance V between the surface of the first slider 531 away from the first concave-convex wheel 512c and the surface of the second slider 541 away from the third concave-convex wheel 522c. Lengths of the first elastic member 551 and the second elastic member 552 being compressed are equal to the distance W between the surface of the first slider 531 away from the first concave-convex wheel 512c and the surface of the second slider 541 away from the third concave-convex wheel 522c. As W=V-U, a stroke in which two ends of the first elastic member 551 are compressed is U, and a stroke in which two ends of the second elastic member 552 are compressed is U.

Similarly, in a process in which the rotating mechanism 100 is switched from the folded state to the unfolded state, strokes of synchronous springback of two ends of the first elastic member 551 are U, and strokes of synchronous springback of two ends of the second elastic member 552 are U.

It can be learned from the foregoing that, two ends of each of the first elastic member 551, the second elastic member 552, the third elastic member 553, and the fourth elastic member 554 are synchronously compressed or released. Compared with a solution in which only one end of an elastic member is compressed or released, synchronously compressing or releasing two ends of each of the first elastic member 551, the second elastic member 552, the third elastic member 553, and the fourth elastic member 554 can provide a double damping force.

In addition, the first elastic member 551, the second elastic member 552, the third elastic member 553, and the fourth elastic member 554 are synchronously compressed. Compared with that in a solution in which only one end of an elastic member is compressed, the height U of the first protrusion to the fourth protrusion and the first fitting protrusion to the fourth fitting protrusion in the Y-axis direction can be set to a smaller value, and specifically, may be half of that in the solution in which only one end is compressed. When the height is small, wear of the first protrusion to the fourth protrusion and the first fitting protrusion to the fourth fitting protrusion can be reduced, thereby prolonging the life of the first protrusion to the fourth protrusion and the first fitting protrusion to the fourth fitting protrusion, and prolonging the life of the first concave-convex wheel 512c to the fourth concave-convex wheel 522d and the first fitting wheel 532 to the fourth fitting wheel 543.

The above descriptions are only some embodiments and implementations of this application, and the protection scope of this application is not limited to this. Any variation or replacement readily figured out by a person skilled in the art within the technical scope disclosed in this application shall fall within the protection scope of this application. Therefore, the protection scope of this application shall be subject to the protection scope of the claims.

## Claims

1. A rotating mechanism, comprising: a first fastening plate, a second fastening plate, a bearing base, a first synchronization swing arm, and a second synchronization swing arm, wherein
the first fastening plate and the second fastening plate are located on two opposite sides of the bearing base; the first synchronization swing arm and the second synchronization swing arm are respectively mounted on two opposite sides of the bearing base in a width direction and are rotatably connected to the bearing base; and the first synchronization swing arm is slidably and rotatably connected to the first fastening plate, and the second synchronization swing arm is slidably and rotatably connected to the second fastening plate; and
the first synchronization swing arm comprises a first swing arm and a second swing arm, and the first swing arm is detachably connected to the second swing arm; the first swing arm comprises a first swing body, a first connecting body, and a first screw that are sequentially connected in a width direction of the rotating mechanism; the first swing body is slidably and rotatably connected to the first fastening plate; the first screw is rotatably connected to the bearing base; the second swing arm comprises a second swing body, a second connecting body, and a second screw that are sequentially connected in the width direction of the rotating mechanism; the second swing body is slidably and rotatably connected to the second fastening plate; and the second screw is rotatably connected to the bearing base.

2. The rotating mechanism according to claim 1, wherein the rotating mechanism further comprises a first mounting shaft, and the first mounting shaft is fixedly connected to the bearing base; and
the first screw is provided with a first through hole and a first screw surface, and an axial direction of the first through hole is parallel to a length direction of the rotating mechanism; the first screw surface extends helically around the axial direction of the first through hole; the first mounting shaft passes through the first through hole; and the first screw is rotatable around the first mounting shaft.

3. The rotating mechanism according to claim 2, wherein the first through hole is a circular hole, and the first through hole has an equal dimension in the length direction of the rotating mechanism.

4. The rotating mechanism according to claim 2, wherein the first screw comprises a first inner circumferential surface, a first outer circumferential surface, and a first end wall surface; the first inner circumferential surface is a hole wall surface of the first through hole, and the first outer circumferential surface is away from the first inner circumferential surface; the first end wall surface is connected between the first inner circumferential surface and the first outer circumferential surface, and the first through hole penetrates the first end wall surface; and two opposite sides of the first screw surface are respectively connected to the first inner circumferential surface and the first outer circumferential surface, and an end of the first screw surface is connected to the first end wall surface.

5. The rotating mechanism according to claim 2, wherein the rotating mechanism further comprises a synchronization slider; the synchronization slider is slidably mounted on the bearing base; the synchronization slider is provided with a first fitting surface, and the first fitting surface is a screw surface; and the first screw surface abuts against the first fitting surface.

6. The rotating mechanism according to claim 5, wherein the synchronization slider comprises a synchronization body and a first screw block that are fixedly connected, and the synchronization body is slidably mounted on the bearing base; and the first screw block is provided with a first via hole and the first fitting surface; and
the first via hole penetrates the first screw block in the length direction of the rotating mechanism, the first via hole is coaxial with the first through hole, and the first mounting shaft further passes through the first via hole; the first fitting surface extends helically around an axial direction of the first via hole; and the first screw block is slidable along the first mounting shaft.

7. The rotating mechanism according to claim 6, wherein the first screw block is further provided with a second fitting surface, and the second fitting surface is a screw surface; and the second fitting surface and the first fitting surface are located on two opposite sides of the first via hole, and the second fitting surface extends helically around the axial direction of the first via hole; and
the second screw is provided with a second through hole and a second screw surface, an axial direction of the second through hole is parallel to the length direction of the rotating mechanism, the second through hole is coaxial with the first through hole, the first mounting shaft further passes through the second through hole, and the second screw is rotatable around the first mounting shaft; the second screw surface extends helically around the axial direction of the second through hole; and the second screw surface abuts against the second fitting surface.

8. The rotating mechanism according to claim 7, wherein the first screw block is further provided with a first connecting surface, a second connecting surface, a first inner wall surface, and a first outer wall surface; the first inner wall surface and the first outer wall surface are opposite in the length direction of the rotating mechanism, and the first via hole penetrates the first connecting surface and the second connecting surface; and a part of the first inner wall surface is a hole wall surface of the first via hole, and the first outer wall surface is away from the first inner wall surface; and
an end of the first fitting surface is connected to the first connecting surface, and another end of the first fitting surface extends in a direction away from the first connecting surface and is connected to the synchronization body; and an end of the second fitting surface is connected to the second connecting surface, and another end of the second fitting surface extends in a direction away from the second connecting surface and is connected to the synchronization body.

9. The rotating mechanism according to claim 8, wherein the first inner wall surface has an equal radian in the length direction of the rotating mechanism.

10. The rotating mechanism according to claim 7, wherein the synchronization body is provided with a first demolding slot, and the first demolding slot penetrates the synchronization body in a thickness direction of the rotating mechanism; and a part of the second fitting surface is flush with a slot wall surface of the first demolding slot in the thickness direction of the rotating mechanism.

11. The rotating mechanism according to claim 7, wherein the bearing base is provided with a first mounting groove, a part of the first swing arm, a part of the second swing arm, the synchronization slider, and the first mounting shaft are all located in the first mounting groove, and two ends of the first mounting shaft are respectively fixedly connected to two opposite groove wall surfaces of the first mounting groove.

12. The rotating mechanism according to claim 11, wherein the synchronization slider further comprises a first connecting block, and the first connecting block is fixedly connected to the synchronization body and is located on a same side of the synchronization body as the first screw block; and the first connecting block is provided with a first penetrating hole, the first penetrating hole is coaxial with the first through hole, and the first mounting shaft further passes through the first penetrating hole; and
the rotating mechanism further comprises a first pre-compression member and a second pre-compression member; both the first pre-compression member and the second pre-compression member are sleeved on the first mounting shaft; the first pre-compression member is located between the first screw and a groove wall surface of the first mounting groove to provide a pre-tightening force for fitting of the first screw surface and the first fitting surface; and the second pre-compression member is located between the first screw and the first connecting block to provide a pre-tightening force for fitting of the second screw surface and the second fitting surface.

13. The rotating mechanism according to claim 12, wherein the rotating mechanism further comprises a first adjustment member, the first adjustment member is sleeved on the first mounting shaft, and the first adjustment member is located between the groove wall surface of the first mounting groove and the first pre-compression member; and
a position of the first adjustment member in an axial direction of the first mounting shaft is adjustable to move the first adjustment member in a direction toward or away from the first pre-compression member; and when the first adjustment member moves toward the first pre-compression member, a force applied by the first adjustment member to the first pre-compression member increases, so that the pre-tightening force provided by the first pre-compression member increases; or when the first adjustment member moves away from the first pre-compression member, a force applied by the first adjustment member to the first pre-compression member decreases, so that the pre-tightening force provided by the first pre-compression member decreases.

14. The rotating mechanism according to claim 12, wherein the rotating mechanism further comprises a second adjustment member, the second adjustment member is sleeved on the first mounting shaft, and the second adjustment member is located between the first connecting block and the second pre-compression member; and
a position of the second adjustment member in an axial direction of the first mounting shaft is adjustable to move the second adjustment member in a direction toward or away from the second pre-compression member; and when the second adjustment member moves toward the second pre-compression member, a force applied by the second adjustment member to the second pre-compression member increases, so that the pre-tightening force provided by the second pre-compression member increases; or when the second adjustment member moves away from the second pre-compression member, a force applied by the second adjustment member to the second pre-compression member decreases, so that the pre-tightening force provided by the second pre-compression member decreases.

15. The rotating mechanism according to claim 7, wherein the second through hole is a circular hole, and the second through hole has an equal dimension in the length direction of the rotating mechanism.

16. The rotating mechanism according to claim 7, wherein the second screw comprises a second inner circumferential surface, a second outer circumferential surface, and a second end wall surface; and
the second inner circumferential surface is a hole wall surface of the second through hole, and the second outer circumferential surface is away from the second inner circumferential surface; the second end wall surface is connected between the second inner circumferential surface and the second outer circumferential surface, and the second through hole penetrates the second end wall surface; and two opposite sides of the second screw surface are respectively connected to the second inner circumferential surface and the second outer circumferential surface, and an end of the second screw surface is connected to the second end wall surface.

17. The rotating mechanism according to any one of claims 1 to 16, wherein one of the first swing body and the second swing body is provided with a clamping slot, the other of the first swing body and the second swing body is provided with a clamping block, and the clamping block is clamped in the clamping slot.

18. The rotating mechanism according to claim 17, wherein a side of the first swing arm is provided with a first clamping slot and a first clamping block that are alternately arranged; a side of the second swing arm is provided with a second clamping slot and a second clamping block that are alternately arranged; and the first clamping block is clamped in the second clamping slot, and the second clamping block is clamped in the first clamping slot.

19. The rotating mechanism according to claim 18, wherein both the first clamping block and the first clamping slot are trapezoidal, a long bottom edge of the first clamping block is aligned with an opening of the first clamping slot, and a short bottom edge of the first clamping block is aligned with a slot bottom surface of the first clamping slot; and
both the second clamping block and the second clamping slot are trapezoidal, a long bottom edge of the second clamping block is aligned with an opening of the second clamping slot, and a short bottom edge of the second clamping block is aligned with a slot bottom surface of the second clamping slot.

20. The rotating mechanism according to any one of claims 1 to 16, wherein the second synchronization swing arm comprises a third swing arm and a fourth swing arm, and the third swing arm is detachably connected to the fourth swing arm; and
the third swing arm comprises a third swing body, a third connecting body, and a third screw that are sequentially connected in the width direction of the rotating mechanism; the third swing body is slidably and rotatably connected to the second fastening plate; the third screw is rotatably connected to the bearing base; the fourth swing arm comprises a fourth swing body, a fourth connecting body, and a fourth screw that are sequentially connected in the width direction of the rotating mechanism; the fourth swing body is slidably and rotatably connected to the second fastening plate; and the fourth screw is rotatably connected to the bearing base.

21. The rotating mechanism according to claim 20, wherein the rotating mechanism further comprises a second mounting shaft, and the second mounting shaft is fixedly connected to the bearing base; and
the third screw is provided with a third through hole and a third screw surface, and an axial direction of the third through hole is parallel to the length direction of the rotating mechanism; the third screw surface extends helically around the axial direction of the third through hole; the second mounting shaft passes through the third through hole; and the third screw is rotatable around the second mounting shaft.

22. The rotating mechanism according to claim 21, wherein the third through hole is a circular hole, and the third through hole has an equal dimension in the length direction of the rotating mechanism.

23. The rotating mechanism according to claim 21, wherein the third screw comprises a third inner circumferential surface, a third outer circumferential surface, and a third end wall surface; and
the third inner circumferential surface is a hole wall surface of the third through hole, and the third outer circumferential surface is away from the third inner circumferential surface; the third end wall surface is connected between the third inner circumferential surface and the third outer circumferential surface, and the third through hole penetrates the third end wall surface; and two opposite sides of the third screw surface are respectively connected to the third inner circumferential surface and the third outer circumferential surface, and an end of the third screw surface is connected to the third end wall surface.

24. The rotating mechanism according to claim 21, wherein the rotating mechanism further comprises a synchronization slider; the synchronization slider is slidably mounted on the bearing base; the synchronization slider is provided with a third fitting surface, and the third fitting surface is a screw surface; and the third screw surface abuts against the third fitting surface.

25. The rotating mechanism according to claim 24, wherein the synchronization slider comprises a synchronization body and a second screw block that are fixedly connected, and the synchronization body is slidably mounted on the bearing base; and the second screw block is provided with a second via hole and the third fitting surface; and
the second via hole penetrates the second screw block in the length direction of the rotating mechanism, the second via hole is coaxial with the third through hole, and the second mounting shaft further passes through the second via hole; the third fitting surface extends helically around an axial direction of the second via hole; and the second screw block is slidable along the second mounting shaft.

26. The rotating mechanism according to claim 25, wherein the second screw block is further provided with a fourth fitting surface, and the fourth fitting surface is a screw surface; and the fourth fitting surface and the third fitting surface are located on two opposite sides of the second via hole, and the fourth fitting surface extends helically around the axial direction of the second via hole; and
the fourth screw is provided with a fourth through hole and a fourth screw surface, an axial direction of the fourth through hole is parallel to the length direction of the rotating mechanism, the fourth through hole is coaxial with the third through hole, the second mounting shaft further passes through the fourth through hole, and the fourth screw is rotatable around the second mounting shaft; the fourth screw surface extends helically around the axial direction of the fourth through hole; and the third screw surface abuts against the third fitting surface.

27. The rotating mechanism according to claim 26, wherein the second screw block is further provided with a third connecting surface, a fourth connecting surface, a second inner wall surface, and a second outer wall surface; the second inner wall surface and the second outer wall surface are opposite in the length direction of the rotating mechanism, and the second via hole penetrates the third connecting surface and the fourth connecting surface; and a part of the second inner wall surface is a hole wall surface of the second via hole, and the second outer wall surface is away from the second inner wall surface; and
an end of the third fitting surface is connected to the third connecting surface, and another end of the third fitting surface extends in a direction away from the third connecting surface and is connected to the synchronization body; and an end of the fourth fitting surface is connected to the fourth connecting surface, and another end of the fourth fitting surface extends in a direction away from the fourth connecting surface and is connected to the synchronization body.

28. The rotating mechanism according to claim 27, wherein the second inner wall surface has an equal radian in the length direction of the rotating mechanism.

29. The rotating mechanism according to claim 26, wherein the synchronization body is provided with a second demolding slot, and the second demolding slot penetrates the synchronization body in a thickness direction of the rotating mechanism; and a part of the fourth fitting surface is flush with a slot wall surface of the second demolding slot in the thickness direction of the rotating mechanism.

30. The rotating mechanism according to claim 26, wherein the fourth through hole is a circular hole, and the fourth through hole has an equal dimension in the length direction of the rotating mechanism.

31. The rotating mechanism according to claim 26, wherein the bearing base is provided with a first mounting groove, a part of the third swing arm, a part of the fourth swing arm, the synchronization slider, and the second mounting shaft are all mounted in the first mounting groove, and two ends of the second mounting shaft are respectively fixedly connected to two groove wall surfaces of the first mounting groove.

32. The rotating mechanism according to claim 31, wherein the synchronization slider further comprises a second connecting block, and the second connecting block is located on a same side of the synchronization slider as the second screw block; and the second connecting block is provided with a second penetrating hole, the second penetrating hole is coaxial with the third through hole, and the second mounting shaft further passes through the second penetrating hole; and
the rotating mechanism further comprises a third pre-compression member and a fourth pre-compression member; both the third pre-compression member and the fourth pre-compression member are sleeved on the second mounting shaft; the third pre-compression member is located between the third screw and a groove wall surface of the first mounting groove to provide a pre-tightening force for fitting of the third screw surface and the third fitting surface; and the fourth pre-compression member is located between the third screw and the second connecting block to provide a pre-tightening force for fitting of the fourth screw surface and the fourth fitting surface.

33. The rotating mechanism according to claim 32, wherein the rotating mechanism further comprises a third adjustment member, the third adjustment member is sleeved on the second mounting shaft, and the third adjustment member is located between the groove wall surface of the first mounting groove and the third pre-compression member; and
a position of the third adjustment member in an axial direction of the second mounting shaft is adjustable to move the third adjustment member in a direction toward or away from the third pre-compression member; and when the third adjustment member moves toward the third pre-compression member, a force applied by the third adjustment member to the third pre-compression member increases, so that the pre-tightening force provided by the third pre-compression member increases; or when the third adjustment member moves away from the third pre-compression member, a force applied by the third adjustment member to the third pre-compression member decreases, so that the pre-tightening force provided by the third pre-compression member decreases.

34. The rotating mechanism according to claim 32, wherein the rotating mechanism further comprises a fourth adjustment member, the fourth adjustment member is sleeved on the second mounting shaft, and the fourth adjustment member is located between the second connecting block and the fourth pre-compression member; and
a position of the fourth adjustment member in an axial direction of the second mounting shaft is adjustable to move the fourth adjustment member in a direction toward or away from the fourth pre-compression member; and when the fourth adjustment member moves toward the fourth pre-compression member, a force applied by the fourth adjustment member to the fourth pre-compression member increases, so that the pre-tightening force provided by the fourth pre-compression member increases; or when the fourth adjustment member moves away from the fourth pre-compression member, a force applied by the fourth adjustment member to the fourth pre-compression member decreases, so that the pre-tightening force provided by the fourth pre-compression member decreases.

35. The rotating mechanism according to claim 26, wherein the fourth through hole is a circular hole, and the fourth through hole has an equal dimension in the length direction of the rotating mechanism.

36. The rotating mechanism according to claim 26, wherein the fourth screw comprises a fourth inner circumferential surface, a fourth outer circumferential surface, and a fourth end wall surface; and
the fourth inner circumferential surface is a hole wall surface of the fourth through hole, and the fourth outer circumferential surface is away from the fourth inner circumferential surface; the fourth end wall surface is connected between the fourth inner circumferential surface and the fourth outer circumferential surface, and the fourth through hole penetrates the fourth end wall surface; and two opposite sides of the fourth screw surface are respectively connected to the fourth inner circumferential surface and the fourth outer circumferential surface, and two opposite ends of the fourth screw surface are respectively connected to the synchronization body and the fourth end wall surface.

37. The rotating mechanism according to claim 20, wherein one of the third screw and the fourth screw is provided with a clamping slot, the other of the third screw and the fourth screw is provided with a clamping block, and the clamping block is clamped in the clamping slot.

38. The rotating mechanism according to claim 37, wherein a side of the third swing arm is provided with a third clamping slot and a third clamping block that are alternately arranged; a side of the fourth swing arm is provided with a fourth clamping slot and a fourth clamping block that are alternately arranged; and the third clamping block is clamped in the fourth clamping slot, and the fourth clamping block is clamped in the third clamping slot.

39. The rotating mechanism according to claim 38, wherein both the third clamping block and the third clamping slot are trapezoidal, a long bottom edge of the third clamping block is aligned with an opening of the third clamping slot, and a short bottom edge of the third clamping block is aligned with a slot bottom surface of the third clamping slot; and
both the fourth clamping block and the fourth clamping slot are trapezoidal, a long bottom edge of the fourth clamping block is aligned with an opening of the fourth clamping slot, and a short bottom edge of the fourth clamping block is aligned with a slot bottom surface of the fourth clamping slot.

40. The rotating mechanism according to any one of claims 1 to 16, wherein the rotating mechanism further comprises a first connecting rod, a first damping swing arm, a first sliding member, a second sliding member, and a first elastic member;
the first connecting rod is fixedly connected to the bearing base; a side of the first damping swing arm is slidably and rotatably connected to the first fastening plate, and another side of the first damping swing arm is rotatably connected to the first connecting rod; the first sliding member is slidably connected to the first connecting rod, and the second sliding member is slidably connected to the first connecting rod; and the first elastic member is sleeved on the first connecting rod and is located between the first sliding member and the second sliding member; and
when the first fastening plate rotates relative to the bearing base, the first damping swing arm slides and rotates relative to the first fastening plate and rotates around the first connecting rod; and the first damping swing arm pushes the first sliding member and the second sliding member to move close to or away from each other, so that the first sliding member and the second sliding member synchronously compress or release two ends of the first elastic member.

41. The rotating mechanism according to claim 40, wherein the first damping swing arm comprises a first rotating cylinder, a second rotating cylinder, a first concave-convex wheel, and a second concave-convex wheel; the first rotating cylinder and the second rotating cylinder are spaced apart along a length of the rotating mechanism; the first concave-convex wheel is fixedly connected to an end of the first rotating cylinder; the second concave-convex wheel is fixedly connected to an end of the second rotating cylinder; the first concave-convex wheel and the second concave-convex wheel are spaced and opposite; and both the first rotating cylinder and the second rotating cylinder are rotatably connected to the first connecting rod; and
the first sliding member comprises a first slider and a first fitting wheel that are fixedly connected, and the second sliding member comprises a second slider and a second fitting wheel that are fixedly connected; both the first slider and the second slider are slidably connected to the first connecting rod; the first concave-convex wheel is engaged with the first fitting wheel, and the second concave-convex wheel is engaged with the second fitting wheel; and the first elastic member abuts between the first slider and the second slider.

42. The rotating mechanism according to claim 40, wherein the rotating mechanism further comprises a first connecting shaft; the first damping swing arm further comprises a first sliding cylinder and a second sliding cylinder, and the first sliding cylinder and the second sliding cylinder are spaced apart in the length direction of the rotating mechanism;
the first fastening plate is provided with a first damping sliding groove and a second damping sliding groove, the first damping sliding groove and the second damping sliding groove are spaced apart in the length direction of the rotating mechanism, there is a first guide slider between the first damping sliding groove and the second damping sliding groove, the first guide slider is provided with a first guide sliding groove, and the first guide sliding groove communicates with the first damping sliding groove and the second damping sliding groove; and
the first guide slider is located in a spacing between the first sliding cylinder and the second sliding cylinder, the first sliding cylinder is located in the first damping sliding groove, and the second sliding cylinder is located in the damping sliding groove; and the first connecting shaft passes through the first sliding cylinder, the first guide sliding groove, and the second sliding cylinder, and the first connecting shaft is slidable and rotatable in the first guide sliding groove.

43. The rotating mechanism according to claim 41, wherein the rotating mechanism further comprises a second connecting rod, a second damping swing arm, and a second elastic member;
the second connecting rod is fixedly connected to the bearing base; a side of the second damping swing arm is slidably and rotatably connected to the second fastening plate, and another side of the second damping swing arm is rotatably connected to the second connecting rod; the first sliding member is slidably connected to the second connecting rod, and the second sliding member is slidably connected to the second connecting rod; and the second elastic member is sleeved on the second connecting rod and is located between the first sliding member and the second sliding member; and
when the second fastening plate rotates relative to the bearing base, the second damping swing arm slides and rotates relative to the second fastening plate and rotates around the second connecting rod; and the second damping swing arm pushes the first sliding member and the second sliding member to move close to or away from each other, so that the first sliding member and the second sliding member synchronously compress or release two ends of the second elastic member.

44. The rotating mechanism according to claim 43, wherein the second damping swing arm comprises a third rotating cylinder, a fourth rotating cylinder, a third concave-convex wheel, and a fourth concave-convex wheel; the third rotating cylinder and the fourth rotating cylinder are spaced apart along a length of the rotating mechanism; the third concave-convex wheel is fixedly connected to an end of the third rotating cylinder; the fourth concave-convex wheel is fixedly connected to an end of the fourth rotating cylinder; the third concave-convex wheel and the fourth concave-convex wheel are spaced and opposite; and both the third rotating cylinder and the fourth rotating cylinder are rotatably connected to the second connecting rod; and
the first sliding member further comprises a third fitting wheel, and the third fitting wheel is fixedly connected to the first slider; the second sliding member further comprises a fourth fitting wheel, and the fourth fitting wheel is fixedly connected to the second slider; both the first slider and the second slider are slidably connected to the second connecting rod; the third concave-convex wheel is engaged with the third fitting wheel, and the fourth concave-convex wheel is engaged with the fourth fitting wheel; and the second elastic member abuts between the first slider and the second slider.

45. The rotating mechanism according to claim 43, wherein the rotating mechanism further comprises a second connecting shaft; the second damping swing arm further comprises a third sliding cylinder and a fourth sliding cylinder, and the third sliding cylinder and the fourth sliding cylinder are spaced apart in the length direction of the rotating mechanism;
the second fastening plate is provided with a third damping sliding groove and a fourth damping sliding groove, the third damping sliding groove and the fourth damping sliding groove are spaced apart in the length direction of the rotating mechanism, there is a second guide slider between the third damping sliding groove and the fourth damping sliding groove, the second guide slider is provided with a second guide sliding groove, and the second guide sliding groove communicates with the third damping sliding groove and the fourth damping sliding groove; and
the second guide slider is located in a spacing between the third sliding cylinder and the fourth sliding cylinder, the third sliding cylinder is located in the third damping sliding groove, and the fourth sliding cylinder is located in the damping sliding groove; and the second connecting shaft passes through the third sliding cylinder, the second guide sliding groove, and the fourth sliding cylinder, and the second connecting shaft is slidable and rotatable in the second guide sliding groove.

46. The rotating mechanism according to claim 43, wherein the rotating mechanism further comprises a third connecting rod and a third elastic member, the third connecting rod is located between the first connecting rod and the second connecting rod, and both the first sliding member and the second sliding member are slidably connected to the third connecting rod; and the third elastic member is sleeved on the third connecting rod, and two ends of the third elastic member respectively abut against the first sliding member and the second sliding member; and
the two ends of the third elastic member are further synchronously compressed or released when the first sliding member and the second sliding member move close to or away from each other.

47. The rotating mechanism according to any one of claims 1 to 16, wherein the rotating mechanism further comprises a first main swing arm and a second main swing arm; and
an end of the first main swing arm is slidably and rotatably connected to the bearing base, and another end of the first main swing arm is rotatably connected to the first fastening plate; and an end of the second main swing arm is slidably and rotatably connected to the bearing base, and another end of the second main swing arm is rotatably connected to the second fastening plate.

48. A foldable electronic device, comprising a first housing, a second housing, a display, and the rotating mechanism according to any one of claims 1 to 47, wherein the rotating mechanism is connected between the first housing and the second housing, the display is mounted on the first housing, the second housing, and the rotating mechanism, and when the rotating mechanism rotates, the first housing and the second housing rotate relative to each other, to drive the display to bend or unfold.
